(19) Europäisches Patentamt
European Patent Office
Office européen des brevets

(11) Veröffentlichungsnummer: **0 474 595 B1**

# (12) EUROPÄISCHE PATENTSCHRIFT

(45) Veröffentlichungstag der Patentschrift: **27.09.95**

(51) Int. Cl.$^{6}$: **D06P 1/642**, D06M 13/358, C09B 67/46

(21) Anmeldenummer: **91810661.8**

(22) Anmeldetag: **20.08.91**

## (54) Wässrige Dispersion schwerlöslicher UV-Absorber.

(30) Priorität: **28.08.90 CH 2790/90**
**28.02.91 CH 605/91**

(43) Veröffentlichungstag der Anmeldung:
**11.03.92 Patentblatt 92/11**

(45) Bekanntmachung des Hinweises auf die Patenterteilung:
**27.09.95 Patentblatt 95/39**

(84) Benannte Vertragsstaaten:
**CH DE ES FR GB IT LI SE**

(56) Entgegenhaltungen:
**EP-A- 0 345 219**
**DE-A- 2 536 335**
**FR-A- 2 546 544**
**US-A- 3 629 192**

(73) Patentinhaber: **CIBA-GEIGY AG**
**Klybeckstrasse 141**
**CH-4002 Basel (CH)**

(72) Erfinder: **Jöllenbeck, Martin, Dr.**
**Guntramstrasse 39**
**W-7800 Freibrug (DE)**
Erfinder: **Reinehr, Dieter, Dr.**
**Wolfsheule 10**
**W-7842 Kandern (DE)**
Erfinder: **Burdeska, Kurt, Dr.**
**Laufenburgerstrasse 30**
**CH-4058 Basel (CH)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft eine wässrige Dispersion von schwerlöslichen UV-Absorbern und ihre Verwendung beim Farben von Synthesefasern, insbesondere Polyesterfasern oder säuremodifizierten Polyesterfasern.

Die erfindungsgemässe wässrige Dispersion ist dadurch gekennzeichnet, dass sie

(a) 5 bis 50 Gewichtsprozent einer Benzotriazolverbindung der Formel

(1) 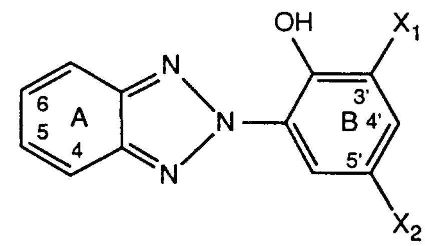

worin einer der beiden Substituenten $X_1$ und $X_2$ die Gruppe

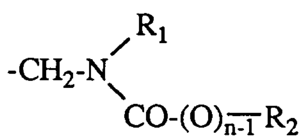

bedeutet, in der

$R_1$ Wasserstoff, $C_1$-$C_{10}$-Alkyl, $C_5$-$C_8$-Cycloalkyl, $C_7$-$C_{10}$-Aralkyl oder $C_6$-$C_{10}$-Aryl,

$R_2$ $C_1$-$C_{20}$-Alkyl, $C_2$-$C_{17}$-Alkenyl, $C_5$-$C_8$-Cycloalkyl, $C_7$-$C_{10}$-Aralkyl, $C_8$-$C_{10}$-Aralkenyl oder $C_6$-$C_{10}$-Aryl und

n 1 oder 2 bedeuten und sofern n = 1 ist,

$R_1$ und $R_2$ zusammen mit dem Ringbrückenglied

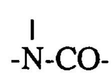

auch einen ein- oder mehrkernigen stickstoffhaltigen Heterocyclus bilden können und in diesem Falle $R_1$ -CO-oder unsubstituiertes oder durch $C_1$-$C_4$-Alkyl substituiertes Methylen und

$R_2$ $C_2$-$C_4$-Alkylen, $C_2$-$C_4$-Alkenylen, $C_6$-$C_{10}$-Arylen oder Di-, Tetra- oder Hexahydro-$C_6$-$C_{10}$-Arylen, wobei die freien Valenzen der cyclischen Reste stets ortho zueinander stehen, $C_1$-$C_4$-Alkyl, $C_1$-$C_4$-Alkoxy, Halogen, $C_6$-$C_{10}$-Aryl, $C_7$-$C_{10}$-Aralkyl oder $C_5$-$C_8$-Cycloalkyl bedeuten, und

der andere der beiden Substituenten $X_1$ und $X_2$ Wasserstoff, $C_1$-$C_4$-Alkyl, $C_1$-$C_4$-Alkoxy, Halogen, $C_6$-$C_{10}$-Aryl, $C_7$-$C_{10}$-Aralkyl, $C_5$-$C_8$-Cycloalkyl oder die Gruppe

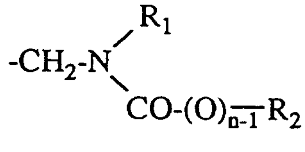

ist;

der Ring A in den Stellungen 4, 5 und 6 durch $C_1$-$C_4$-Alkyl, $C_1$-$C_4$-Alkoxy, Carboxy, Carbonsäure-$C_1$-$C_4$-alkylester, Carbonsäureamid, Sulfonsäure-$C_1$-$C_4$-alkylester, $C_1$-$C_4$-Alkylsulfonyl oder Halogen und

der Ring B in der Stellung 4' durch $C_1$-$C_4$-Alkyl, $C_1$-$C_4$-Alkoxy, Halogen, $C_6$-$C_{10}$-Aryl, $C_7$-$C_{10}$-Aralkyl

oder $C_5$-$C_8$-Cycloalkyl substituiert sein kann;
oder einer der beiden Substituenten $X_1$ und $X_2$ $CH_3$-$(CH_2)_3$-$CH(C_2H_5)$-CO-NH-$CH_2$- und der andere der beiden Substituenten $X_1$ und $X_2$ $C_6H_5$-$CH_2$-$C_6H_4$-, $C_6H_5$-$C_6H_4$- oder

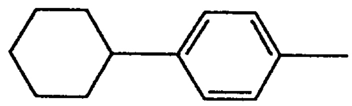

ist und die Ringe A und B darüberhinaus unsubstituiert sind; oder einer der beiden Substituenten $X_1$ und $X_2$ $ClCH_2$-CO-NH-$CH_2$- und der andere der beiden Substituenten $X_1$ und $X_2$ $C_6H_5$-$CH_2$-$C_6H_4$- oder $C_6H_5$-$C_6H_4$- ist und die Ringe A und B darüberhinaus unsubstituiert sind; oder einer der beiden Substituenten $X_1$ und $X_2$ $C_8H_{17}OOC$-NH-$CH_2$- und der andere der beiden Substituenten $X_1$ und $X_2$

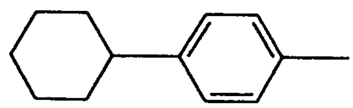

ist, der Ring A in der Stellungen 4 und 6 durch Methyl substituiert ist und der Ring B darüberhinaus unsubstituiert ist,
(b) 0 bis 18 Gewichtsprozent einer anionischen Verbindung und
(c) 0 bis 18 Gewichtsprozent einer nichtionischen Verbindung
enthält, mit der Massgabe, dass von den Komponenten (b) und (c) mindestens eine vorhanden sein muss.

Benzotriazolverbindungen der Formel(1) sind bekannt (vgl. US-A-3 629 192 und DE-A-2 536 335), nicht aber in Form stabiler wässriger Dispersionen. Solche Dispersionen sind bisher nur von Benzotriazol verbindungen bekannt, die keine Carboxyaminomethylengruppe enthalten (EP-A-0 345 219).

Vorteilhafterweise enthält die erfindungsgemässe wässrige Dispersion 10 bis 45 Gewichtsprozent der Komponente (a) 0,5 bis 15 Gewichtsprozent der Komponente (b) und 0,5-15 Gew. proz. der Komponente (c). Komponente (a) hat zweckmassigerweise eine Partikelgrösse unter 5 $\mu$m.

Sowohl Komponente (a) als auch die Komponenten (b) und (c) können als Einzelverbindung oder in Form eines Gemisches vorhanden sein.

Stellen die Substituenten $R_1$ und $R_2$ $C_1$-$C_{10}$-Alkyl bzw. $C_1$-$C_{20}$-Alkyl dar, so kann es geradkettig oder verzweigt sein, wie z.B. Methyl, Ethyl, n-Propyl, Isopropyl, n-Butyl, Isobutyl, sek.Butyl, tert.Butyl, Amyl, Isoamyl, tert.Amyl, n-Hexyl, 2-Ethylhexyl, n-Heptyl, n-Octyl, Isooctyl, n-Nonyl, Isononyl, n-Decyl, n-Dodecyl, Heptadecyl, Octadecyl oder Eicosyl.

Bedeuten $R_1$ und $R_2$ $C_6$-$C_{10}$-Aryl, dann kann es ein mono- oder bicyclischer aromatischer Rest wie Phenyl oder Naphthyl sein.

Als $C_7$-$C_{10}$-Aralkyl bedeuten $R_1$ und $R_2$ z.B. Benzyl, Phenethyl, $\alpha$-Methylphenethyl oder $\alpha,\alpha$-Dimethylbenzyl.

Stellen $R_1$ und $R_2$ $C_5$-$C_8$-Cycloalkyl dar, so kann es Cyclopentyl, Cyclohexyl, Cycloheptyl oder Cyclooctyl sein.

$C_2$-$C_{17}$-Alkenylreste $R_2$ sind z.B. Vinyl, Allyl, 1-Propenyl, 2-Butenyl, 2-Pentenyl, 2-Hexenyl, 2-Decenyl, 3,6,8-Decatrienyl oder 2-Heptadecenyl.

Stellt $R_2$ $C_8$-$C_{10}$-Aralkenyl dar, so kann es Styryl oder Cinnamyl sein.

Wenn $R_1$ und $R_2$ untereinander verbunden sind und $R_1$ das Glied -CO- ist, dann bedeutet

$R_2$

- als $C_2$-$C_4$-Alkylen, Ethylen, Trimethylen oder Tetramethylen, unter Bildung der stickstoffhaltigen Heterocyclen 2,5-Dioxopyrrolidin, 2,6-Dioxopiperidin und 2,7-Dioxoazacycloheptan,
- als $C_2$-$C_4$-Alkenylen, Vinylen, Propenylen oder Butenylen unter Bildung des Heterocyclus 2,5-Dioxo-$\Delta^3$-pyrrolin oder 2,3,6,7-Tetrahydro-1H-azepin-2,7-dion;
- als $C_6$-$C_{10}$-Arylen, o-Phenylen oder o-Naphthylen unter Bildung der Heterocyclen 1H-Isoindol-1,3(2H)-dion (Phthalimid) bzw. 2H-Benz[f]isoindol-1,3-dion oder
- als Di-, Tetra- oder Hexahydro-$C_6$-$C_{10}$-arylen, Cyclohexadien oder Cyclohexen unter Bildung z.B. der Heterocyclen 3,4-Dihydro, -3,4,5,6-Tetrahydro- bzw. 3,4,5,6,8,9-Hexahydrophthalimid.

Wenn $R_1$ und $R_2$ untereinander verbunden sind und $R_1$ unsubstituiertes oder durch $C_1$-$C_4$-Alkyl substituiertes Methylen ist, dann, bei den oben angegebenen Bedeutungen von $R_2$, bilden sich anstelle der

Dioxo- die entsprechenden Oxoverbindungen.

Bevorzugte stickstoffhaltige Heterocyclen sind z.B. Lactame wie Propiolactame, Butyrolactame und ε-Caprolactame, 2,5-Dioxopyrrolidin und 3,4-Di-, 3,4,5,6-Tetra- und 3,4,5,6,8,9-Hexahydrophthalimid.

Als Reste aliphatischer Carbonsäuren kommen sowohl solche gesättiger als auch solche ungesättigert Carbonsäuren in Betracht, beispielsweise die Reste der Ameisensäure, Essigsäure, Propionsäure, Buttersäure, Pentancarbonsäure, Heptancarbonsäure, Nonancarbonsäure, Undecancarbonsäure, Tridecancarbonsäure, Pentadecancarbonsäure oder Heptadecancarbonsäure, die Reste der Halogenfettsäuren, wie z.B. der Chlor- oder Bromessigsäure, der $\alpha$- oder $\beta$-Chlor oder der $\alpha$- oder $\beta$-Brompropionsäure, die Reste der Acrylsäure, Methacrylsäure oder Allyloxyessigsäure.

Ist $-COR_2$ der Rest einer cycloaliphatischen, araliphatischen oder aromatischen Carbonsäure, so handelt es sich beispielsweise um die Reste der Cyclohexylcarbonsäure, Phenylessigsäure, Phenoxyessigsäure, Hydrozimtsäure, Zimtsäure, $\alpha$-Phenylacrylsäure, Benzoesäure, Methylbenzoesäuren oder Chlorbenzoesäuren.

Besonders bevorzugt sind Verbindungen der Formel (1) worin von $X_1$ und $X_2$ ein X die Gruppe der Formel

(2) 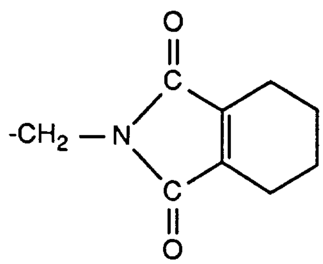 ,

(3) 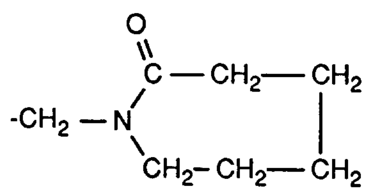 oder

(4) 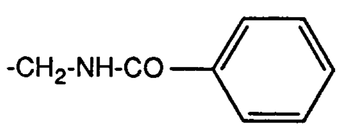

und das andere X Wasserstoff oder $C_1$-$C_4$-Alkyl bedeutet und der Ring A unsubstituiert oder durch Chlor substituiert ist.

Ganz besonders bevorzugt sind Verbindungen der Formel (1) worin $X_1$ die Gruppe der Formel (2), (3) oder (4) und $X_2$ Methyl bedeuten.

$X_1$ und $X_2$ als $C_1$-$C_4$-Alkyl- und $C_1$-$C_4$-Alkoxyreste sind z.B. Methyl, Ethyl, n-Propyl, Isopropyl, n-Butyl, sek.Butyl, tert.Butyl bzw. Methoxy Ethoxy, n- Propoxy, Isopropoxy, n-Butoxy, sek.-Butoxy oder tert.-Butoxy.

$X_1$ und $X_2$ als Halogen sind Chlor oder Brom.

$X_1$ und $X_2$ als $C_6$-$C_{10}$-Aryl und $C_7$-$C_{10}$-Aralkyl sind z.B. Napthyl oder vorzugsweise Phenyl, bzw. Benzyl, Phenethyl, $\alpha$-Methylphenethyl oder $\alpha,\alpha$-Dimethylbenzyl.

Als $C_5$-$C_8$-Cycloalkyl stellen $X_1$ und $X_2$ Cyclopentyl, Cyclohexyl, Cycloheptyl oder Cyclooctyl dar.

Der Benzolring A kann in den Stellungen 4,5 oder 6 z.B. durch Methyl, Ethyl, Propyl, Isopropyl, n-Butyl, Methoxy, Ethoxy oder Butoxy, Chlor oder Brom, Carboxy, Carbomethoxy, Carboethoxy, Carbopropoxy oder Carbobutoxy, gegebenenfalls am Stickstoff aliphatisch, cycloaliphatisch, araliphatisch oder aromatisch substituierte Carbonsäure- oder Sulfonsäureamide, wie Carbonsäure- oder Sulfonsäureamid, -methylamid, -ethylamid, -butylamid, -cyclohexylamid, -benzylamid, -dimethylamid, -diethylamid, -N-methyl-N-cyclohexylamid, -$\gamma$-methoxypropylamid, -piperidid oder -morpholid, Methylsulfonyl oder Ethylsulfonyl substituiert sein. Der Benzolring B kann in den Stellungen 3', 4' und 5' noch durch Methyl, Ethyl, t.-Butyl, Benzyl, Cyclohexyl, oder Phenyl, Methoxy, Ethoxy, Propoxy, Isopropoxy oder n-Butoxy oder Chlor oder Brom

substituiert sein.

Die Verbindungen der Formel (1) sind zum Teil bekannt oder stellen neue Verbindungen dar. Die neuen können nach an sich bekannten Verfahren hergestellt werden, beispielsweise durch Umsetzung einer entsprechenden in 3'- oder 5'-Stellung substituierbaren 2-(2'-Hydroxyphenyl)-benzotriazolverbindung mit der N-Methylolverbindung eines Carbonsäureamids oder Urethans (cf. US-A-4 077 971).

Geeignete Verbindungen der Formel (1)

(1) 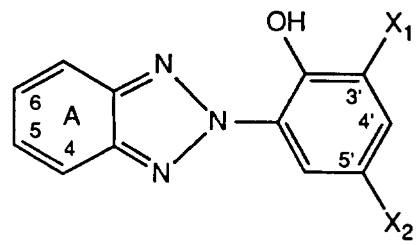

sind z.B. die in der folgenden Tabelle 1 aufgeführten Verbindungen

Tabelle 1:

| Nr | A<br>( ) Stellung | $X_1$ | $X_2$ | $\lambda_{max}$<br>nm | Fp °C |
|---|---|---|---|---|---|
| 1 | - | $CH_3CH_2CH_2$-CO-NH-$CH_2$- | $CH_3$ | | 217 |
| 2 | - | $CH_3$<br>\|<br>$CH_3$-C-CO-NH-$CH_2$-<br>\|<br>$CH_3$ | $CH_3$ | | 167 |
| 3 | - | $CH_3$<br>\|<br>$CH_3$-C-CO-NH-$CH_2$-<br>\|<br>$CH_3$ | $C_5H_{11}$ | 340 | |
| 4 | - | $C_{17}H_{35}$-CO-NH-$CH_2$- | $CH_3O$ | 356 | |
| 5 | - | 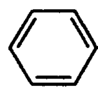 CO-NH-$CH_2$- | $CH_3$ | | 235 |
| 6 | - | $C_2H_5$<br>\|<br>$CH_3$-$(CH_2)_3$-CH-CO-NH-$CH_2$- | 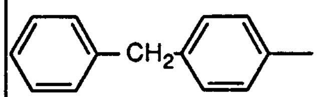 | | 172-185 |
| 7 | - | $C_2H_5$<br>\|<br>$CH_3$-$(CH_2)_3$-CH-CO-NH-$CH_2$- | 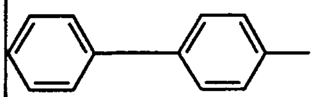 | | 193 |
| 8 | - | 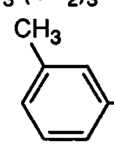 CO-NH-$CH_2$- | $CH_3$ | | 182 |
| 9 | $(C_2H_5)_2N$-$SO_2$-(5) | $ClCH_2$CO-NH-$CH_2$- | $CH_3$ | | 146 |
| 10 | - | $ClCH_2$CO-NH-$CH_2$- | 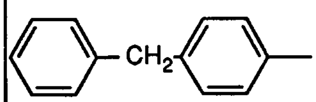 | | 185 |
| 11 | - | $ClCH_2$CO-NH-$CH_2$- | 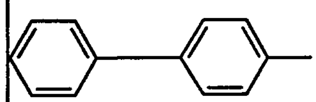 | | 206-207 |
| 12 | - | $C_2H_5$<br>\|<br>$CH_3$-$(CH_2)_3$-CH-CO-NH-$CH_2$- | 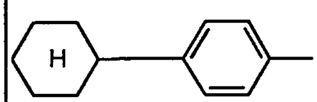 | | 192 |
| 13 | - | 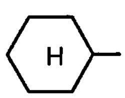 CO-NH-$CH_2$- | $CH_3$ | | 218 |
| 14 | - | 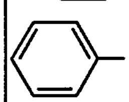 $CH_2$CO-NH-$CH_2$- | $CH_3$ | | 227 |
| 15 | Cl(5) | $CH_2$=CH-CO-NH-$CH_2$- | $CH_3$ | | 226-228 |

| Nr | A<br>( ) Stellung | $X_1$ | $X_2$ | $\lambda_{max}$<br>nm | Fp °C |
|---|---|---|---|---|---|
| 16 | - | $CH_2$=CH-CO-NH-$CH_2$- | $CH_3$ | | 203 |
| 17 | - | $CH_2$=CH-CO-NH-$CH_2$- | Cl | | 225 |
| 18 | - | $C_4H_9O$-$CH_2$-CO-NH-$CH_2$- | $CH_3$ | | 132 |
| 19 | - | 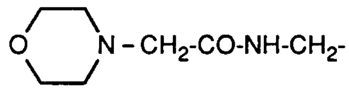 | $CH_3$ | | 146 |
| 20 | - | 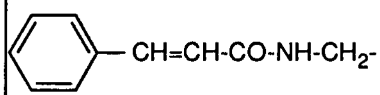 | $CH_3$ | 341 | |
| 21 | - | 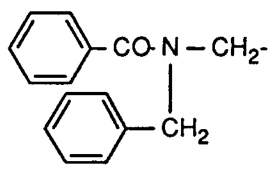 | $CH_3$ | | 137 |
| 22 | - | 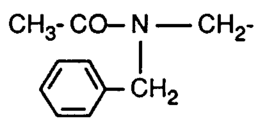 | $CH_3$ | | 133 |
| 23 | - | 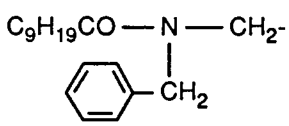 | $CH_3$ | 343 | |
| 24 | - | $CH_3$-CH-CO-NH-$CH_2$-<br>\|<br>$COOC_4H_9$ | $CH_3$ | 342 | |
| 25 | - | $CH_2$=C-CO-NH-$CH_2$-<br>\|<br>$CH_3$ | $CH_3$ | | 176 |
| 26 | - | CH=CH-CO-NH-$CH_2$-<br>\|<br>COOH | $CH_3$ | | 176 |
| 27 | $CH_3SO_2$-(5) | 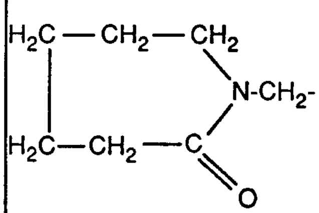 | $CH_3$ | 360 | |

| Nr | A () Stellung | $X_1$ | $X_2$ | $\lambda_{max}$ nm | Fp °C |
|---|---|---|---|---|---|
| 28 | -COOH(5) | 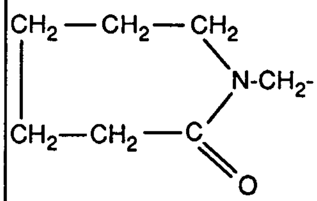 | $CH_3$ | | >270 |
| 29 | $C_4H_9O$- (5) | 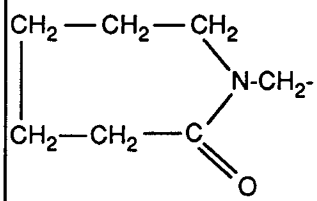 | $CH_3$ | 349 | |
| 30 | - | 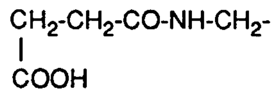 | $CH_3$ | | 231 |
| 31 | - | 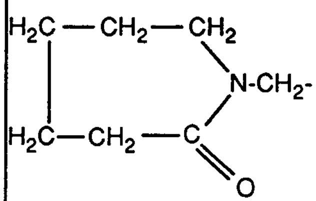 | $CH_3$ | | 150 |
| 32 | $CH_3O$ (5) $CH_3$ (6) | H | 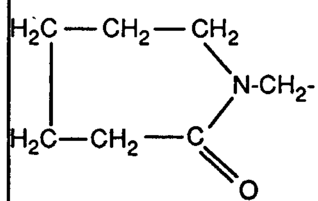 | 345 | |
| 33 | $CH_3O$ (5) $CH_3$ (6) | H | $CH_2$=CH-CO-NH-$CH_2$- (5') | | 148 |
| 34 | $CH_3O$ (5) $CH_3$ (6) | H | $ClCH_2$-CO-NH-$CH_2$- (5') | 344 | |
| 35 | - | 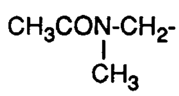 | $CH_3$ | | 134 |
| 36 | - | 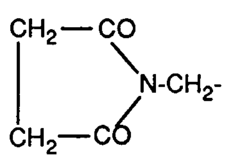 | $CH_3$ | 342 | |

| Nr | A - ( ) Stellung | $X_1$ | $X_2$ | $\lambda_{max}$ nm | Fp °C |
|---|---|---|---|---|---|
| 37 | - | 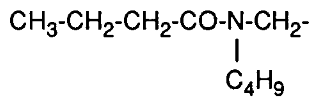 | $CH_3$ | 343 | |
| 38 | - | 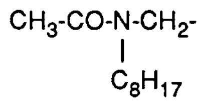 | $CH_3$ | 344 | |
| 39 | - | 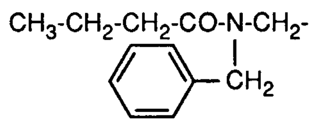 | $CH_3$ | 343 | |
| 40 | - | 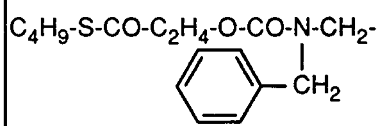 | $CH_3$ | 342 | |
| 41 | - | 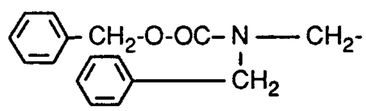 | $CH_3$ | 343 | |
| 42 | - | 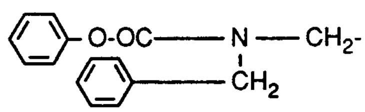 | $CH_3$ | 344 | |
| 43 | - | 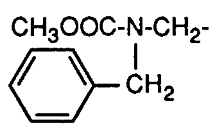 | $CH_3$ | | 138 |
| 44 | $CH_3$ (4) $CH_3$ (6) | $C_8H_{17}OOC\text{-}HN\text{-}CH_2$ | 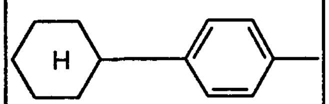 | 343 | |
| 45 | - | 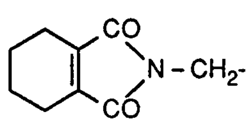 | $CH_3$ | | 170,2 |
| 46 | Cl (5) | 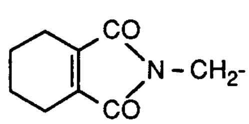 | $CH_3$ | | 179 |

| Nr | A ( ) Stellung | $X_1$ | $X_2$ | $\lambda_{max}$ nm | Fp °C |
|---|---|---|---|---|---|
| 47 | - | 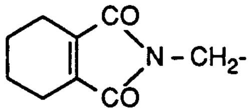 | tert-$C_4H_9$ | | 172 |
| 48 | Cl (5) | 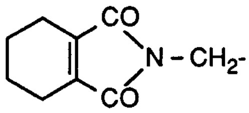 | tert-$C_4H_9$ | | 181 |
| 49 | - | 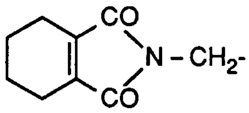 | n-$C_8H_{17}$ | | 178 |
| 50 | Cl (5) | 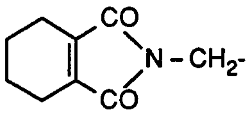 | n-$C_8H_{17}$ | | 183 |
| 51 | - | 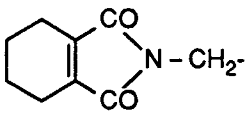 | n-$C_9H_{19}$ | | 180 |
| 52 | Cl (5) | 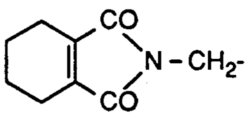 | n-$C_9H_{19}$ | | 184 |
| 53 | Cl (5) | $CH_3$ | 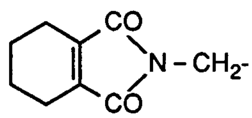 | | 195 |
| 54 | - | 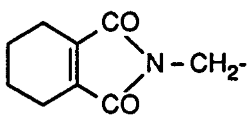 | 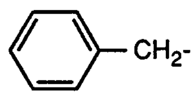 | | 110 |
| 55 | - | 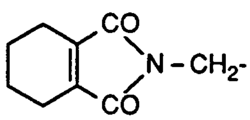 | 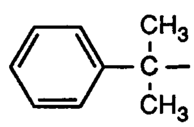 | | 186 |
| 56 | - | 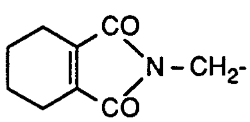 | 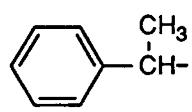 | | 148 |

| Nr | A - ( ) Stellung | $X_1$ | $X_2$ | $\lambda_{max}$ nm | Fp °C |
|---|---|---|---|---|---|
| 57 | Cl (5) | 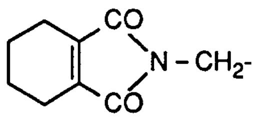 | 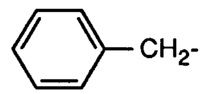 | | 141 |
| 58 | Cl (5) | 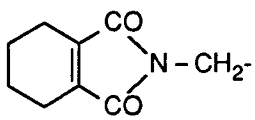 | 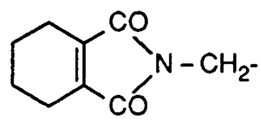 | | 185 |
| 59 | - | 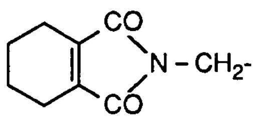 | 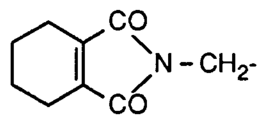 | | 175 |
| 60 | Cl (5) | 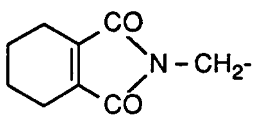 | 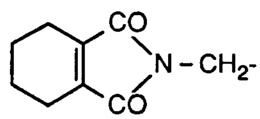 und in 4'-Stellung $CH_3$ | | 180 |
| 61 | - | H | 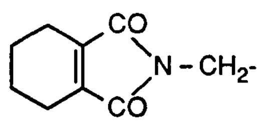 | | 184 |
| 62 | Cl (5) | $i\text{-}C_3H_7$ | 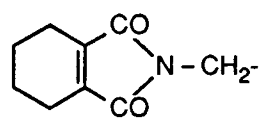 | | 190 |
| 63 | Cl (5) | H | 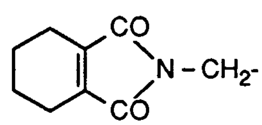 und in 4'-Stellung $CH_3$ | | 130 |

Als Komponente (b) kommen Verbindungen in Betracht, die aus der Gruppe der (ba) sauren Ester oder deren Salze von Alkylenoxidaddukten der Formel

(5) 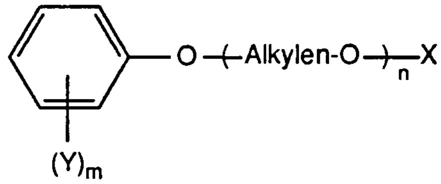

worin X den Säurerest einer anorganischen, Sauerstoff enthaltenden Säure, wie z.B. Schwefelsäure oder vorzugsweise Phosphorsäure, oder auch den Rest einer organischen Säure und
Y $C_1$-$C_{12}$-Alkyl, Aryl oder Aralkyl bedeuten,
"Alkylen" für den Ethylenrest oder Propylenrest steht, und
m 1 bis 4 und n 4 bis 50 sind, wobei wenn m 2 bis 4 ist, Y verschiedene Bedeutungen annehmen kann,

(bb) Polystyrolsulfonate,
(bc) Fettsäuretauride,
(bd) alkylierten Diphenyloxid-mono- oder di-sulfonate,
(be) Sulfonate von Polycarbonsäureestern,
(bf) mit einer organischen Dicarbonsäure, oder einer anorganischen mehrbasischen Säure in einen sauren Ester übergefuhrten Anlagerungsprodukte von 1 bis 60, vorzugsweise 2 bis 30 Mol, Ethylenoxid und/oder Propylenoxid an Fettamine, Fettamide, Fettsäuren oder Fettalkohole je mit 8 bis 22 Kohlenstoffatomen oder an drei- bis sechswertige Alkanole mit 3 bis 6 Kohlenstoffatomen,
(bg) Ligninsulfonate und
(bh) Formaldehyd-Kondensationsprodukte ausgewählt sind.

Der Säurerest X in Formel (5) leitet sich beispielsweise von niedermolekularen Dicarbonsäuren ab, wie z.B. von Maleinsäure, Bernsteinsäure oder Sulfobernsteinsäure, und ist über eine Esterbrücke mit dem Alkylenoxydteil des Moleküls verbunden. Insbesondere leitet sich X jedoch von anorganischen mehrbasischen Säuren, wie Schwefelsäure oder insbesondere Orthophosphorsäure ab.

Der Säurerest X kann als freie Säure oder in Salzform, d.h. z.B. als Alkalimetall-, Erdalkali-, Ammonium-, Amin- oder Fettaminsalz, vorliegen. Beispiele für solche Salze sind Lithium-, Natrium-, Kalium-, Barium-, Magnesium-, Ammonium-, Trimethylamin, Diethylarmin-, Ethanolamin-, Diethanolamin- oder Triethanolaminsalze. Bevorzugt sind Alkalimetallsalze oder vor allem Triethanolaminsalze. Die Mono- bzw. Diethanolaminsalze sowie Amine und Fettamine können noch weiter mit 1 bis 25 Oxalkylen-Einheiten verethert sein.

Stellt der Substituent Y in Formel (5) eine Alkylgruppe dar, so kann sie geradkettig oder verzweigt sein. Beispiele solcher Alkylreste sind Methyl, Ethyl, n-Propyl, Isopropyl, n-Butyl, Isobutyl, sek.Butyl, tert.Butyl, Amyl, Isoamyl, tert.Amyl, n-Hexyl, 2-Ethylhexyl, n-Heptyl, n-Octyl, Isooctyl, n-Nonyl, Isononyl oder n-Dodecyl.

Y in der Bedeutung von Aralkyl weist vorteilhafterweise insgesamt 7 bis 9 Kohlenstoffatome auf und steht in der Regel für Benzyl, $\alpha$-Methylbenzyl, $\alpha,\alpha$-Dimethylbenzyl, $\beta$-Phenethyl, $\alpha$-Tolylethyl oder Phenisopropyl.

Der Substituent Y in Formel (5) ist vorteilhafterweise $C_4$-$C_{12}$-Alkyl, Benzyl, vorzugsweise $C_4$-$C_{10}$-Alkyl oder besonders $\alpha$-Methylbenzyl.

Der Substituent Y kann auch verschiedene der angegebenen Bedeutungen annehmen.

n ist bevorzugt 6 bis 30, während m vorzugsweise 1 bis 3 ist.

$$(\text{Alkylen-O})_n\text{—}$$

Ketten sind bevorzugt vom Ethylenglykol-, Propylenethylenglykol oder Ethylenpropylenglykol-Typus; besonders bevorzugt ist erstere.

Bevorzugte saure Ester als Komponente (ba) entsprechen der Formel

(6) 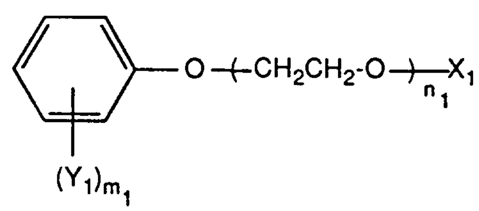

worin $Y_1$ $C_4$-$C_{12}$-Alkyl, Phenyl, Tolyl, Tolyl-$C_1$-$C_3$-alkyl oder Phenyl-$C_1$-$C_3$-alkyl, wie z.B. $\alpha$-Methyl- oder $\alpha,\alpha$-Dimethylbenzyl bedeutet, $X_1$ ein Säurerest ist, der sich von Schwefelsäure oder vorzugsweise Orthophosphorsäure ableitet, und
$m_1$ 1 bis 3 und $n_1$ 4 bis 40 sind, wobei wenn $m_1$ 2 oder 3 ist, $Y_1$ verschiedene Bedeutungen annehmen kann.

Diese sauren Ester liegen vorzugsweise als Natrium-, Kalium-, Ammonium-, Diethylamin-, Triethylamin-, Diethanolamin- oder Triethanolaminsalze vor.

Die als Komponente (ba) in Frage kommenden sauren Ester der Formel (5) oder (6) werden hergestellt, indem man Alkylenoxid (Ethylenoxid oder Propylenoxid) an eine definitionsgemäss substituierte Phenolverbindung anlagert und das Anlagerungsprodukt mit einer mehrbasischen Sauerstoffsäure oder einem funktionellen Derivat dieser Säure, wie z.B. Säureanhydride, Säurehalogenide, Säureester oder Säureamide

in die sauren Ester und gegebenenfalls den erhaltenen sauren Ester in die obengenannten Salze überführt. Als Beispiele dieser funktionellen Derivate seien Phosphorpentoxid, Phosphoroxytrichlorid, Chlorsulfonsäure oder Sulfaminsäure genannt. Sowohl die Alkylenoxidanlagerung als auch die Veresterung können nach bekannten Methoden durchgeführt werden.

Gut geeignete Komponenten (ba) sind saure Ester oder deren Salze eines Polyadduktes von 4 bis 40 Mol Ethylenoxid an 1 Mol eines Phenols, das mindestens eine $C_4$-$C_{12}$-Alkylgruppe, eine Phenylgruppe, eine Tolylgruppe, eine α-Tolylethylgruppe, eine Benzylgruppe, eine α-Methylbenzylgruppe oder eine α,α-Dimethylbenzylgruppe aufweist, wie z.B. Butylphenol, Tributylphenol, Octylphenol, Nonylphenol, Dinonylphenol, Orahtophenylphenol, Benzylphenol, Dibenzylphenol, α-Tolylethylphenol, Dibenzyl-(nonyl)-phenol, α-Methylbenzylphenol, Bis-(α-Methylbenzyl)-phenol oder Tris-(α-methylbenzyl)-phenol, wobei diese sauren Ester einzeln oder in Mischung verwendet werden können.

Von besonderem Interesse sind saure Phosphorsäureester der Addukte von 6 bis 30 Mol Ethylenoxid an 1 Mol 4-Nonylphenol, 1 Mol Dinonylphenol oder besonders an 1 Mol von Verbindungen, die durch Anlagerung von 1 bis 3 Mol von Styrolen an 1 Mol Phenole hergestellt werden, wobei die Phosphorsäureester zweckmässigerweise als Gemische der entsprechenden Salze eines Mono- oder Diesters vorhanden sind.

Die Herstellung der Styrolanlagerungsprodukte erfolgt in bekannter Weise vorzugsweise in Gegenwart von Katalysatoren, wie Schwefelsäure, p-Toluolsulfonsäure oder vor allem Zinkchlorid. Als Styrole kommen zweckmässigerweise Styrol, α-Methylstyrol oder Vinyltoluol (4-Methylstyrol) in Betracht. Beispiele für die Phenole sind Phenol, Kresole oder Xylenole.

Ganz besonders bevorzugt als Komponente (ba) sind saure Phosphorsäureester (Monound Diester) oder deren Salze von Oxalkylierungsprodukten der Formel

(7) 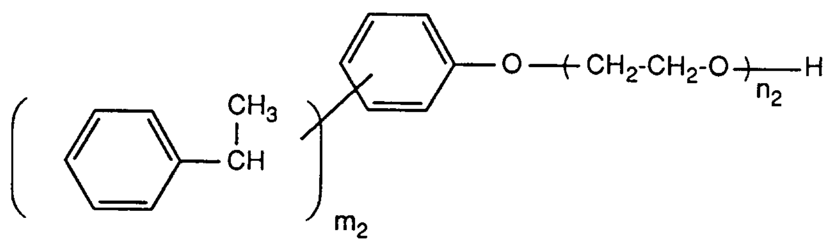

worin $m_2$ 1 bis 3 und $n_2$ 8 bis 30, vorzugsweise 12 bis 20 bedeuten.

Als Beispiele für Oxalkylierungsprodukte der Formeln (6) und (7) seien im einzelnen genannt:

- Oxalkylierungsprodukt mit 18 Ethylenoxideinheiten des Anlagerungsproduktes von 2 Mol Styrol an 1 Mol Phenol
- Oxalkylierungsprodukt mit 18 Ethylenoxideinheiten des Anlagerungsproduktes von 3 Mol Styrol an 1 Mol Phenol
- Oxalkylierungsprodukt mit 27 Ethylenoxideinheiten des Anlagerungsproduktes von 2 Mol 4-Methylstyrol an 1 Mol Phenol
- Oxalkylierungsprodukt mit 17 Ethylenoxideinheiten des Anlagerungsproduktes von 3 Mol 4-Methylstyrol an 1 Mol Phenol
- Oxalkylierungsprodukt mit 18 Ethylenoxideinheiten des Gemisches aus einem Anlagerungsprodukt von 2 Mol Styrol an 1 Mol Phenol und einem Anlagerungsprodukt von 3 Mol Styrol an 1 Mol Phenol
- Oxalkylierungsprodukt mit 13 Ethylenoxideinheiten des Gemisches aus einem Anlagerungsprodukt von 2 Mol Styrol an 1 Mol Phenol und einem Anlagerungsprodukt von 3 Mol Styrol an 1 Mol Phenol
- Oxalkylierungsprodukt mit 18 Ethylenoxideinheiten des Anlagerungsprodukts von 1 Mol Styrol und 1 Mol Isononen an 1 Mol Phenol.

Als Beispiele für die unter (bc) bis (bh) erwähnten anionischen Verbindungen seien genannt:

- als Komponente (bc) z.B. Verbindungen der Formel

(8) $R-CO-NH-CH_2-CH_2-SO_3H$

worin R $C_{11}$-$c_{17}$-Alkyl ist (vgl. z.B. US-A-4 219 480);

- als Komponente (bd) z.B. Verbindungen der Formel (9)

(9) 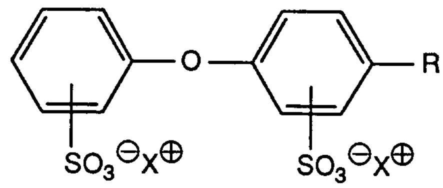

worin R $C_{10}$-$C_{18}$-Alkyl und X Wasserstoff oder Alkalimetall bedeuten;

- als Komponente (be) z.B. Dihexylsulfosuccinate, Di-2-ethylhexylsulfosuccinate, Dioctylsulfosuccinate, Sulfosuccinamide oder Verbindungen der Formel

(10) 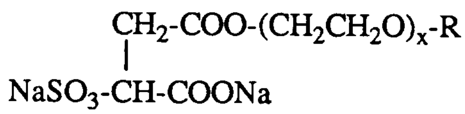

worin R $C_8$-$C_{18}$-Alkyl oder Alkylphenol mit 4 bis 12 C-Atomen im Alkylteil und x 1 bis 10, vorzugsweise 2 bis 4 bedeuten.

- als Komponente (bf) mit z.B. Maleinsäure, Malonsäure, Sulfobernsteinsäure und vorzugsweise Orthophosphorsäure oder insbesondere Schwefelsäure in einen sauren Ester überführten Anlagerungsprodukte von 2 bis 30 Mol Ethylenoxid an Fettamine, Fettamide, Fettsäuren oder Fettalkohole oder 3-6-wertige Alkanole;
- als Komponente (bh) z.B. Kondensationsprodukte von Ligninsulfonaten und/oder Phenol und Formaldehyd, Kondensationsprodukte von Formaldehyd mit aromatischen Sulfonsäuren, wie Kondensationsprodukte von Ditolylethersulfonaten und Formaldehyd, Kondensationsprodukte von Naphthalinsulfonsäure und/oder Naphthol- oder Naphthylaminsulfonsäuren mit Formaldehyd, Kondensationsprodukte von Phenolsulfonsäuren und/oder sulfoniertem Dihydroxydiphenylsulfon und Phenolen bzw. Kresolen mit Formaldehyd und/oder Harnstoff sowie Kondensationsprodukte von Diphenyloxid-disulfonsäure-Derivaten mit Formaldehyd in Betracht.

Als Komponente (bh) sind besonders bevorzugt

- Kondensationsprodukte von Ditolylethersulfonaten und Formaldehyd wie sie z.B. in US-A-4386037 beschrieben sind,
- Kondensationsprodukte von Phenol und Formaldehyd mit Ligninsulfonaten, wie sie z.B. in US-A-3931072 beschrieben sind,
- Kondensationsprodukte von Naphthol-(2)-sulfonsäure-6, Kresol, Natriumbisulfit und Formaldehyd [vgl. FIAT-Report 1013 (1946)], und
- Kondensationsprodukte aus Diphenylderivaten und Formaldehyd wie sie z.B. in US-A-4202838 beschrieben sind.

Der Säurerest der anionischen Verbindungen liegt in der Regel in Salzform, d.h. als Alkalimetall-, Ammonium- oder Aminsalz vor. Beispiele für solche Salze sind Lithium-, Natrium-, Kalium-, Ammonium-, Trimethylamin-, Aethanolamin-, Diethanolamin- oder Triethanolaminsalze.

Als Komponente (c) sind die Verbindungen zu nennen, welche aus der Gruppe der

(ca) Alkylenoxidaddukte der Formel

(11) 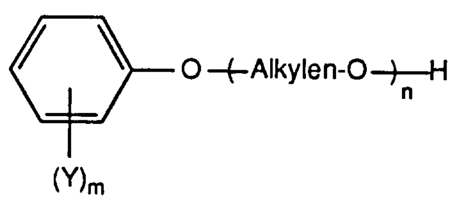

worin Y $C_1$-$C_{12}$-Alkyl, Aryl oder Aralkyl bedeutet,
"Alkylen" für den Ethylenrest oder Propylenrest steht und

m 1 bis 4 und n 4 bis 50 sind, wobei wenn m 2 bis 4 ist, Y verschiedene Bedeutungen annehmen kann,

(cb) Alkylenoxiaddukte an

(cba) gesättigte oder ungesättigte 1-6-wertige aliphatische Alkohole,

(cbb) Fettsäuren,

(cbc) Fettamine,

(cbd) Fettamide,

(cbe) Diamine,

(cbf) Sorbitanester,

(cc) Alkylenoxid-Kondensationsprodukte (Blockpolymerisate)

(cd) Polymerisate von Vinylpyrrolidon, Vinylacetat oder Vinylalkohol und

(ce) Co- oder Ter-polymere von Vinylpyrrolidon mit Vinylacetat und/oder Vinylalkohol, ausgewählt sind.

Bevorzugte erfindungsgemässe Dispersionen enthalten die Komponenten (b) und (c) in einem Verhältnis (b):(c) von 20:1 bis 1:20, vorzugsweise 5:1 bis 1:5.

Gut geeignete Komponenten (ca) sind Polyaddukte von 4 bis 40 Mol Ethylenoxid an 1 Mol eines Phenols, das mindestens eine $C_4$-$C_{12}$-Alkylgruppe, eine Phenylgruppe, eine Tolylgruppe, eine α-Tolylethylgruppe, eine Benzylgruppe, eine α-Methylbenzylgruppe oder eine α,α-Dimethylbenzylgruppe aufweist, wie z.B. Butylphenol, Tributylphenol, Octylphenol, Nonylphenol, Dinonylphenol, o-Phenylphenol, Benzylphenol, Dibenzylphenol, α-Tolylethylphenol, Dibenzyl-(nonyl)-phenol, α-Methylbenzylphenol, Bis-(α-Methylbenzyl)-phenol oder Tris-(α-methylbenzyl)-phenol, wobei diese Addukte einzeln oder in Mischung verwendet werden können.

Von besonderem Interesse als Komponente (ca) sind Addukte von 6 bis 30 Mol Ethylenoxid an 1 Mol 4-Nonylphenol, an 1 Mol Dinonylphenol oder besonders an 1 Mol von Verbindungen, die durch Anlagerung von 1 bis 3 Mol von Styrolen an 1 Mol Phenole hergestellt werden.

Die Herstellung der Styrolanlagerungsprodukte erfolgt in bekannter Weise vorzugsweise in Gegenwart von Katalysatoren, wie Schwefelsäure, p-Toluolsulfonsäure oder vor allem Zinkchlorid. Als Styrole kommen zweckmässigerweise Styrol, α-Methylstyrol oder Vinyltoluol (4-Methylstyrol) in Betracht. Beispiele für die Phenole sind Phenol, Kresole oder Xylenole.

Ganz besonders bevorzugt sind Ethylenoxidaddukte der Formel

(12)

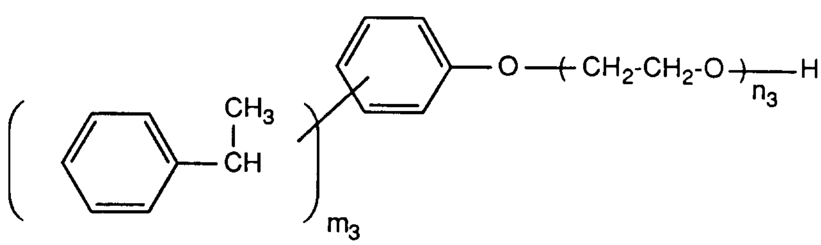

worin $m_3$ 1 bis 3 und $n_3$ 8 bis 30 bedeuten.

Beispiele für solche Addukte sind weiter oben angegeben. Ebenfalls bevorzugt sind Ethylenoxidaddukte der Formel

(13)

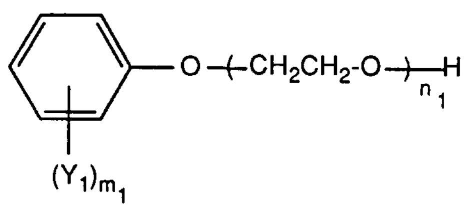

worin $Y_1$ $C_4$-$C_{12}$-Alkyl, Phenyl, Tolyl, Tolyl-$C_1$-$C_3$-alkyl oder Phenyl-$C_1$-$C_3$-alkyl, wie z.B. α-Methyl- oder α,α-Dimethylbenzyl bedeutet, und $m_1$ 1 bis 3 und $n_1$ 4 bis 40 sind, wobei wenn $m_1$ 2 oder 3 ist, $Y_1$ verschiedene Bedeutungen annehmen kann.

Die nichtionogene Komponente (cb) ist vorteilhafterweise

- ein Alkylenoxidanlagerungsprodukt von 1 bis 100 Mol Alkylenoxid, z.B. Ethylenoxid und/oder Propylenoxid, an 1 Mol eines aliphatischen Monoalkohols mit mindestens 4 Kohlenstoffatomen, eines 3- bis

6-wertigen aliphatischen Alkohols oder eines gegebenenfalls durch Alkyl, Phenyl, α-Tolylethyl, Benzyl, α-Methylbenzyl oder α,α-Dimethylbenzyl substituierten Phenols (cba);

- ein Alkylenoxidanlagerungsprodukt von 1 bis 100, vorzugsweise 2 bis 80 Mol Ethylenoxid, wobei einzelne Ethylenoxideinheiten durch substituierte Epoxide, wie Styroloxid und/oder Propylenoxid, ersetzt sein können, an höhere unbesättigte oder gesättigte Monoalkohole (cba), Fettsäuren (cbb), Fettamine (cbc) oder Fettamide (cbd) mit 8 bis 22 Kohlenstoffatomen;
- ein Alkylenoxidanlagerungsprodukt, vorzugsweise ein Ethylenoxid-Propylenoxid-Addukt an Ethylendiamin (cbe);
- ein ethoxyliertes Sorbitanester mit langkettigen Estergruppen, wie z.B. Polyoxiethylen-Sorbitanmonolaurat mit 4 bis 20 Ethylenoxideinheiten oder Polyoxiethylen-Sorbitantrioleat mit 4 bis 20 Ethylenoxideinheiten (cbf).

Bevorzugte Komponenten (cc) sind Ethylenoxidaddukte an Polypropylenoxid (sogenannte EO-PO-Blockpolymere) und Propylenoxidaddukte an Polyethylenoxid (sogenannte umgekehrte EO-PO-Blockpolymere).

Besonders bevorzugt sind Ethylenoxid-Propylenoxid-Blockpolymere mit Molekulargewichten der Polypropylenoxidbasis von 1700 bis 4000 und einem Ethylenoxidgehalt im Gesamtmolekül von 30-80 %, insbesondere 60-80 %.

Ausser den Komponenten (a) (b) und (c) kann die erfindungsgemässe Dispersion zweckmässig zusätzlich als Komponente (d) ein Stabilisierungs- oder Verdickungsmittel enthalten.

Als Komponente (d) eignen sich insbesondere Carboxylgruppen enthaltende Polymerisate. Diese werden in Form von 0,5 bis 10 %igen, vorzugsweise 0,5 bis 5 %igen wässrigen Lösungen oder Dispersionen, bezogen auf die Lösung oder Dispersion eingesetzt.

Diese Polymerisate stellen vorteilhafterweise polymerisierte ethylenisch ungesättigte Mono- oder Dicarbonsäuren von 3 bis 5 Kohlenstoffatomen, wie z.B. Polyacrylsäure oder Polymerisate von Methacrylsäure, Crotonsäure, Itaconsäure, Teraconsäure, Maleinsäure bzw. deren Anhydrid, Fumarsäure, Citraconsäure oder Mesaconsäure, Copolymerisate aus Olefinen, z.B. Ethylen oder Propylen, Diketene, Acrylsäureestern, Methacrylsäureestern oder Acrylamiden und den vorgenannten Monomeren einschliesslich der Acrylsäure oder Copolymerisate der Acrylsäure mit Methacrylsäure, Methacrylnitril oder Vinylmonomeren, wie z.B. Vinylphosphonsäure, Copolymerisate aus Maleinsäure und Styrol, Maleinsäure und einem Vinylether oder Maleinsäure und einem Vinylester z.B. Vinylacetat oder Copolymere von Vinylpyrrolidon mit Vinylacetat oder Vinylpropionsäure dar.

Die Verdickungsmittel bildenden carboxylgruppenhaltigen Polymerisate können ein Molekulargewicht von 0,5 bis 6 Millionen haben.

Als besonders brauchbare Komponenten (d) haben sich Lösungen von Polyacrylsäure oder auch Copolymerisate aus Acrylsäure und Acrylamid gezeigt, wobei das entsprechende Molekulargewicht von 0,5 bis 6 Millionen schwanken kann. Die Copolymerisate weisen vorteilhafterweise ein Molverhältnis Acrylsäure:Acrylamid von 1:0,8 bis 1:1,2 auf. Als Komponente (d) kann ebenfalls ein teilweise hydrolysiertes Polymaleinsäureanhydrid verwendet werden. Dieses liegt in der Regel teilweise in Form eines wasserlöslichen Salzes vor und besitzt ein Molgewicht, das vorzugsweise zwischen 300 und 5000 liegt.

Weitere als Komponente (d) brauchbare Verdickungsmittel sind Polysaccharide, wie z.B. Carboxymethylcellulose, Methylcellulose, Methyl- oder Ethylhydroxyethylcellulose, Johannisbrotkernmehlether oder Stärkeether sowie Alginate, Polyethylenglykole, Polyvinylpyrrolidone, Polyvinylalkohole oder auch feinverteilte Kieselsäure vorzugsweise mit spezifischer Oberfläche von 50 bis 380 $m^2/g$ und Schichtsilikate, wie z.B. Bentonite, Bentone, Smektite, Montmorillonite. Gut geeignet sind auch anionische Heteropolysaccharide, die aus den Monosacchariden Glukose und Mannose und Glucuronsäure gebildet sind.

Die Mengen dieser Zusatzbestandteile (d) liegen im allgemeinen von 0,05 bis 8 Gewichtsprozent, vorzugsweise 0,1 bis 4 Gewichtsprozent, bezogen auf die gesamte wässrige Dispersion vor.

Neben den Komponenten (a), (b) und (c) oder (a), (b), (c) und (d) kann die erfindungsgemässe wässrige Dispersion noch zusätzlich Antischaummittel, Konservierungsmittel oder Gefrierschutzmittel enthalten.

Die anionischen und nichtionischen Verbindungen können allein oder untereinander kombiniert zur Anwendung kommen.

Als Antischaummittel können die erfindungsgemässen Dispersionen Silikonöle sowie auch Entschäumer auf der Basis von Triburylphosphat, 2-Ethylhexanol oder Tetramethyl-5-decin-diolen ( = Surfynol) enthalten.

Bevorzugte Antischaummittel sind Alkylendiamide. Diese entsprechen zweckmässigerweise der Formel

(14) $V_1$-CO-NH-Q-NH-CO-$V_2$

in der $V_1$ und $V_2$, unabhängig voneinander, je einen aliphatischen Rest mit 9 bis 23 Kohlenstoffatomen und

Q einen Alkylenrest mit 1 bis 8, vorzugsweise 1, 2 oder 3 Kohlenstoffatomen bedeuten.

Das Alkylendiamid kann als Einzelverbindung oder in Form eines Gemisches vorhanden sein.

Die aliphatischen Reste $V_1$ und $V_2$ können geradkettig oder verzweigt sein. Sie stellen zusammen mit der CO-Gruppe vorteilhafterweise den Säurerest einer ungesättigten oder vorzugsweise gesättigten aliphatischen Carbonsäure mit 10 bis 24 Kohlenstoffatomen dar. Als aliphatische Carbonsäuren seien beispielsweise Caprin-, Laurin-, Kokosfett-, Myristin-, Palmkernfettsäure, Palmitin-, Talgfett-, Oel-, Ricinolein-, Linol-, Linolen-, Stearin-, Arachin-, Arachidon-, Behen-, Eruca- oder Lignocerinsäure genannt. Behensäure und besonders Stearinsäure sind bevorzugt.

Es können auch Gemische dieser Säuren verwendet werden, wie sie bei der Spaltung von natürlichen Oelen oder Fetten gewonnen werden. Kokosfettsäure, Palmkernfettsäure, Palmitin-/Stearinsäuregemische, Talgfettsäure und Arachin-/Behensäuregemische sind besonders bevorzugte Gemische.

Vorzugsweise bedeuten $V_1$ und $V_2$ jeweils einen Alkylrest mit 9 bis 23 Kohlenstoffatomen und insbesondere mit 15 bis 21 Kohlenstoffatomen.

Q stellt insbesondere eine Alkylengruppe dar, die 2 bis 5 Kohlenstoffatome enthält und geradkettig oder verzweigt sein kann. Es handelt sich beispielsweise um die $-CH_2CH_2-$,

$-CH_2CH_2CH_2-$, 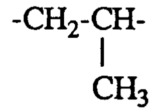 oder 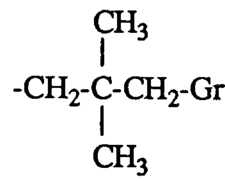-Gruppe.

Typische Vertreter für Alkylendiamide als Antischaummittel sind Methylen-bis-stearinsäureamid, Ethylen-bis-stearinsäureamid oder Ethylen-bis-behensäureamid.

Das Alkylendiamid ist vorzugsweise in einer Menge von 0,2 bis 3 Gewichtsprozent in der Dispersion vorhanden.

Als Konservierungsmittel, die in den erfindungsgemässen Dispersionen enthalten sein können, können die verschiedensten handelsüblichen Produkte, wie wässrige Lösungen von Formaldehyd, 6-Acetoxy-2,4-dimethyldioxan, 1,2-Benzisothiazolin-3-on und besonders 2-Chloracetamid in Betracht kommen.

Als Gefrierschutzmittel, die den erfindungsgemässen Dispersionen zur Erhaltung der Fliessfähigkeit bei tiefen Temperaturen und zur Verhinderung des Ausfrierens von Wasser zugesetzt werden können, seien Glykole oder Polyole, wie z.B. Ethylenglykol, Propylenglykol bzw. Glyzerin sowie Polyethylenglykole, wie z.B. Di-, Tri- oder Tetraethylenglykol genannt. Ein bevorzugtes Antifrostmittel ist Propylenglykol.

Die Komponente (a) kann auch als Mischung der Benzotriazolverbindungen der Formel (1) mit anderen UV-Absorbern aus den Klassen der schwerlöslichen Benzotriazole und Benzophenone eingesetzt werden. Solche UV-Absorber sind z.B. in den US-A-3,004,896; 3,074,910; 4,127,586 und 4,557,730 beschrieben. Als Benzotriazole kommen z.B. solche der Formel

(15) 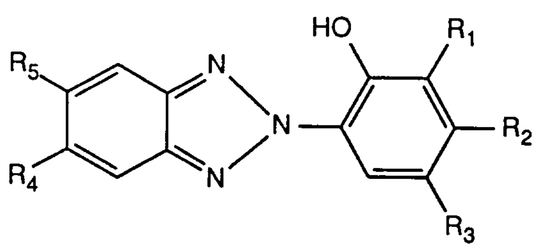

worin

- $R_1$ Wasserstoff, $C_1$-$C_{12}$-Alkyl, Chlor, $C_5$-$C_6$-Cycloalkyl oder $C_7$-$C_9$-Phenylalkyl,
- $R_2$ Wasserstoff, $C_1$-$C_4$-Alkyl, $C_1$-$C_4$-Alkoxy, Chlor oder Hydroxy,
- $R_3$ $C_1$-$C_{12}$-Alkyl, $C_1$-$C_4$-Alkoxy, Phenyl, ($C_1$-$C_8$-Alkyl)-phenyl, $C_5$-$C_6$-Cycloalkyl, $C_2$-$C_9$-Alkoxycarbonyl, Chlor, Carboxyethyl oder $C_7$-$C_9$-Phenylalkyl,
- $R_4$ Wasserstoff, Chlor, $C_1$-$C_4$-Alkyl, $C_1$-$C_4$-Alkoxy oder $C_2$-$C_9$-Alkoxycarbonyl, und
- $R_5$ Wasserstoff oder Chlor

bedeuten, und als Benzophenone solche der Formel

(16) 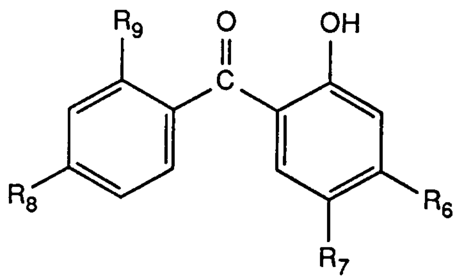

worin

$R_6$ Wasserstoff, Hydroxy, $C_1$-$C_{14}$-Alkoxy oder Phenoxy,

$R_7$ Wasserstoff, Halogen oder $C_1$-$C_4$-Alkyl

$R_8$ Wasserstoff, Hydroxy oder $C_1$-$C_4$-Alkoxy und

$R_9$ Wasserstoff oder Hydroxy bedeuten,

in Betracht.

Solche Gemische als Komponente (a) enthalten die Verbindungen der Formeln (1), (15) und (16) in den Gewichtsverhältnissen (1):(15) und (1):(16) von 99:1 bis 1:99, als Komponente (a) kommen auch Mischungen der Verbindungen der Formeln (1), (15) und (16) in Betracht.

In den Formeln (15) und (16) bedeuten:

$C_1$-$C_4$-Alkyl z.B. Methyl, Ethyl, Propyl, Isopropyl, n-Butyl, sec.-Butyl oder tert.-Butyl;

$C_1$-$C_4$-Alkoxy z.B. Methoxy, Ethoxy, Propoxy oder n-Butoxy;

$C_1$-$C_{14}$-Alkoxy z.B. Methoxy, Ethoxy, Propoxy, n-Butoxy, Octyloxy, Dodecyloxy oder Tetradecyloxy;

$C_1$-$C_{12}$-Alkyl z.B. Ethyl, Amyl, tert.-Octyl, n-Dodecyl und vorzugsweise Methyl, sec.-Buryl oder tert.-Butyl;

$C_2$-$C_9$-Alkoxycarbonyl z.B. Ethoxycarbonyl, n-Octoxycarbonyl oder vorzugsweise Methoxycarbonyl;

$C_5$-$C_6$-Cycloalkyl z.B. Cyclopentyl oder Cyclohexyl;

($C_1$-$C_8$-Alkyl)-phenyl z.B. Methylphenyl, tert.-Butylphenyl, tert.-Amylphenyl oder tert.-Octylphenyl und

$C_7$-$C_9$-Phenylalkyl z.B. Benzyl, $\alpha$-Methylbenzyl oder vorzugsweise $\alpha,\alpha$-Dimethylbenzyl,

Die erfindungsgemässen wässrigen Dispersionen enthalten mit Vorteil, jeweils bezogen auf die gesamte Dispersion

5-50 Gewichtsprozent der Komponente (a),

0-18 vorzugsweise 0,5-15 Gewichtsprozent der Komponente (b),

0-18 vorzugsweise 0,5-15 Gewichtsprozent der Komponente (c),

0 - 5 vorzugsweise 0,1 bis 4 Gewichtsprozent der Komponente (d),

0 - 8 Gewichtsprozent der weiteren, von der Komponente (b) verschiedenen anionischen Komponente,

0 - 8 Gewichtsprozent der weiteren, von Komponente (c) verschiedenen nichtionischen Komponente,

0 - 7 vorzugsweise 0,1 bis 5 Gewichtsprozent Antischaummittel,

0 - 1 vorzugsweise 0,1 bis 0,5 Gewichtsprozent Konservierungsmittel

und

0-20 Gewichtsprozent Gefrierschutzmittel, mit der Massgabe, dass von den Komponenten (b) und (c) mindestens eine vorhanden ist.

Bevorzugte erfindungsgemässe Dispersionen enthalten

- als anionische Komponente (b) ein Kondensationsprodukt von Formaldehyd mit einer aromatischen Sulfonsäure;
- als anionische Komponente (b) ein Kondensationsprodukt von Formaldehyd mit Ditolylethersulfonat;
- als anionische Komponente (b) ein Gemisch aus den Komponenten (ba) bis (bh);
- als anionische Komponente (b) ein Gemisch aus einem Kondensationsprodukt von Formaldehyd mit Ditolylethersulfonat und einem sauren Phosphorsäureester oder dessen Salz des Oxalkylierungsproduktes der Formel (7);
- als anionische Komponente (b) ein Kondensationsprodukt von Formaldehyd mit einer aromatischen Sulfonsäure und als nichtionische Komponente (c) ein Alkylenoxidaddukt der Formel (11);
- als nichtionische Komponente (c) eine Mischung aus einem Alkylenoxidaddukt der Formel (11) und einem Alkylenoxid-Kondensationsprodnkt (cc);
- als nichtionische Komponente (c) ein Alkylenoxid-Kondensationsprodukt (cc);
- als anionische Komponente (b) ein Kondensationsprodukt von Formaldehyd mit einer aromatischen Sulfonsäure und als nichtionische Komponente (c) ein Alkylenoxid-Addukt an Sorbitansäure oder

- als anionische Komponente (b) einen sauren Phosphorsäureester oder dessen Salz des Oxalkylierungsproduktes der Formel (7) und als nichtionogene Komponente (c) ein Alkylenoxidaddukt der Formel (11).

Die Herstellung der erfindungsgemässen Dispersion erfolgt zweckmässigerweise, indem man die Benzotriazolverbindungen der Formel (1), mit einem Dispergiermittel z.B. dem sauren Ester der Formel (5) und Wasser in einem Mischer anteigt und nach allfälliger Zugabe der erwünschten Zusatzbestandteile wie nichtionische Tenside (c), weiterer anionische und/oder nichtionischer Verbindungen einschliesslich der Antischaummittel, Konservierungsmittel und Gefrierschutzmittel 1 bis 30, vorzugsweise 1 bis 10 Stunden lang dispergiert. Die Dispergierung wird vorteilhafterweise durch Einwirkung von hohen Scherkräften z.B. durch Mahlen in einer Kugel-, Sand- oder Perlmühle durchgeführt. Nach dem Mahlen kann eine wässrige Lösung des Stabilisierungs- oder Verdickungsmittels (Komponente (d)) und gewünschtenfalls noch Wasser zugesetzt werden, worauf bis zur gleichmässigen Verteilung gerührt wird.

Die erfindungsgemässen Dispersionen zeichnen sich durch gute Transport- und Lagerstabilität aus. Sie sind insbesondere sehr stabil bei höheren Temperaturen bis zu 130 °C, wenn sie in Färbebädern eingesetzt werden.

Verwendung Findet die erfindungsgemässe Dispersion je nach dem Farbstoff beim Färben von Synthesefasern, insbesondere Polyesterfasern oder auch sauer modifizierten Polyesterfasern enthaltendem Textilmaterial. Das Färbeverfahren wird jeweils in üblicher Weise durchgeführt. Die erfindungsgemässe Dispersion wird in ein wässriges Bad langsam unter Rühren eingetragen, wonach die Flotte nach dem Zusatz vom Farbstoff zum Färben bereitgestellt ist.

Gegenstand der vorliegenden Erfindung ist demnach auch ein Verfahren zum Färben von synthetischem Fasermaterial mit kationischen oder Dispersionsfarbstoffen. Das Verfahren ist dadurch gekennzeichnet, dass man dieses Material in Gegenwart der erfindungsgemässen Hilfsmitteldispersion färbt.

Die Einsatzmengen, in denen die erfindungsgemässe Hilfsmitteldispersion den Färbebädern zugesetzt wird, bewegen sich von 0,5 bis 10 %, vorzugsweise 1 bis 5 % vom Warengewicht.

Als Fasermaterial, insbesondere Textilmaterial, das in Gegenwart des neuen als Lichtschutzmittel verwendeten Hilfsmittelgemisches gefärbt werden kann, sind z.B. Celluloseesterfasern, wie Cellulose-2 1/2-acetatfasern und -triacetatfasern; aromatische Polyamidfasern, die sich z.B. von Poly-(metaphenylenisophthalamid) ableiten, sauer modifizierte Polyesterfasern und besonders lineare Polyesterfasern zu erwähnen. Dabei werden Celluloseester- und Polyesterfasern bevorzugt mit Dispersionsfarbstoffen und sauer modifizierte Polyesterfasern und aromatische Polyamidfasern bevorzugt mit kationischen Farbstoffen gefärbt.

Unter linearen Polyesterfasern sind dabei Synthesefasern zu verstehen, die z.B. durch Kondensation von Terephthalsäure mit Ethylenglykol oder von Isophthalsäure oder Terephthalsäure mit 1,4-Bis-(hydroxymethyl)-cyclohexan erhalten werden, sowie Mischpolymere aus Terephthal- und Isophthalsäure und Ethylenglykol. Der in der Textilindustrie bisher fast ausschliesslich eingesetzte lineare Polyester besteht aus Terephthalsäure und Ethylenglykol. Sauer modifizierte Polyesterfasern sind beispielsweise Polykondensationsprodukte von Terephthalsäure oder Isophthalsäure, Ethylenglykol und 1,2-Dihydroxy-3-beziehungsweise 1,3-Dihydroxy-2-(3-natriumsulfopropoxy)-propan, 2,3-Dimethylol-1-(natriumsulfopropoxy)-butan, 2,2-Bis-(3-natriumsulfopropoxyphenyl)-propan oder 3,5-Dicarboxy-benzolsulfonsäure bzw. sulfonierter Terephthalsäure, sulfonierter 4-Methoxybenzolcarbonsäure oder sulfonierter Diphenyl-4,4'-dicarbonsäure.

Die Fasermaterialien können auch als Mischgewebe unter sich oder mit anderen Fasern, z.B. Mischungen aus Polyacrylnitril/Polyester, Polyamid/Polyester, Polyester/Baumwolle, Polyester/Viskose, Polyester/Wolle und Polyester/Polyacrylnitril/Polyamid verwendet werden.

Das zu färbende Textilmaterial kann sich in verschiedenen Verarbeitungsstadien befinden. Beispielsweise kommen in Betracht: loses Material, Stückware, wie Gewirke oder Gewebe, Garn in Wickel- oder Muff-Form. Letztere können Wickeldichten von 200 bis 600 g/dm$^3$, insbesondere 400 bis 450 g/dm$^3$, aufweisen.

Die für das erfindungsgemässe Verfahren geeigneten kationischen Farbstoffe können verschiedenen Farbstoffklassen angehören. Insbesondere handelt es sich um die gebräuchlichen Salze, beispielsweise Chloride, Sulfate oder Metallhalogenide, wie z.B. Zinkchloriddoppelsalze von kationischen Farbstoffen, deren kationischer Charakter z.B. von einer Carbonium-, Oxonium-, Sulfonium- oder vor allem Ammoniumgruppe herrührt. Beispiele für solche chromophore Systeme sind Azofarbstoffe, vor allem Monoazo- oder Hydrazonfarbstoffe, Diphenylmethan, Triphenylmethan-, Methin- oder Azomethinfarbstoffe, Cumarin-, Ketonimin-, Cyanin-, Azin-, Xanthen-, Oxazin- oder Thiazinfarbstoffe. Schliesslich können auch Farbsalze der Phthalocyanin- oder Anthrachinonreihe mit externer Oniumgruppe, beispielsweise einer Alkylammonium- oder Cycloammoniumgruppe sowie Benzo-1,2-pyranfarbsalze, die Cycloammoniumgruppen enthalten, verwendet werden.

Die zu verwendenden Dispersionsfarbstoffe, die in Wasser nur sehr wenig löslich sind und in der Farbflotte zum grössten Teil in Form einer feinen Dispersion vorliegen, können den verschiedensten Farbstoffklassen angehören, beispielsweise den Acridon-, Azo-, Anthrachinon-, Cumarin-, Methin-, Perinon-, Naphthochinonimin-, Chinophthalon-, Styryl- oder Nitrofarbstoffen.

Es können auch Mischungen von kationischen oder Dispersionsfarbstoffen erfindungsgemäss eingesetzt werden.

Die Menge der der Flotte zuzusetzenden Farbstoffe richtet sich nach der gewünschten Farbstärke; im allgemeinen haben sich Mengen von 0,01 bis 10, vorzugsweise 0,02 bis 5 Gewichtsprozent, bezogen auf das eingesetzte Textilmaterial, bewährt.

Die erfindungsgemäss zu verwendenden Hilfsmittel können auch in Mischung mit bekannten Diffusionsbeschleunigern auf Basis von z.B. Di- oder Trichlorbenzol, Methyl- oder Ethylbenzol, o-Phenylphenol, Benzylphenol, Diphenylether, Chlordiphenyl, Methyldiphenyl, Cyclohexanon, Acetophenon, Alkylphenoxyethanol, Mono-, Di- oder Trichlorphenoxyethanol oder -propanol, Pentachlorphenoxyethanol, Alkylphenylbenzoate, oder insbesondere auf Basis von Diphenyl, Methyldiphenylether, Dibenzylether, Methylbenzoat, Butylbenzoat oder Phenylbenzoat eingesetzt werden.

Die Diffusionsbeschleuniger werden vorzugsweise in einer Menge von 0,5 g bis 5 g/l Flotte oder 5 bis 30 Gewichtsprozent, bezogen auf die Hilfsmitteldispersion, verwendet.

Die Farbbäder können je nach dem zu behandelnden Textilmaterial neben den Farbstoffen und dem erfindungsgemässen Hilfsmittelgemisch, Oligomereninhibitoren, Antischaummittel, Faltenfreimittel, Retarder und vorzugsweise Dispergiermittel enthalten.

Die Dispergiermittel dienen vor allem zur Erzielung einer guten Feinverteilung der Dispersionsfarbstoffe. Es kommen die beim Färben mit Dispersionsfarbstoffen allgemein gebräuchlichen Dispergatoren in Frage.

Als Dispergiermittel kommen vorzugsweise sulfatierte oder phosphatierte Anlagerungsprodukte von 15 bis 100 Mol Ethylenoxid oder vorzugsweise Propylenoxid an mehrwertige, 2 bis 6 Kohlenstoffatome aufweisende aliphatische Alkohole wie z.B. Ethylenglykol, Glycerin oder Pentaerythrit oder an mindestens zwei Aminogruppen oder eine Aminogruppe und eine Hydroxylgruppe aufweisende Amine mit 2 bis 9 Kohlenstoffatomen sowie Alkylsulfonate mit 10 bis 20 Kohlenstoffatomen in der Alkylkette, Alkylbenzolsulfonate mit geradkettiger oder verzweigter Alkylkette mit 8 bis 20 Kohlenstoffatomen in der Alkylkette, wie z.B. Nonyl- oder Dodecylbenzolsulfonat, 1,3,5,7-Tetra-methyloctylbenzolsulfonat oder Octadecylbenzolsulfonat, sowie Alkylnaphthalinsulfonate oder Sulfobernsteinsäureester, wie Natriumdioctylsulfosuccinat, in Betracht.

Besonders günstig haben sich als anionische Dispergiermittel Ligninsulfonate, Polyphosphate und vorzugsweise Formaldehyd-Kondensationsprodukte aus aromatischen Sulfonsäuren, Formaldehyd und gegebenenfalls mono- oder bifunktionellen Phenolen wie z.B. aus Kresol, β-Naphtholsulfonsäure und Formaldehyd, aus Benzolsulfonsäure, Formaldehyd und Naphthalinsulfonsäure, aus Naphthalinsulfonsäure und Formaldehyd oder aus Naphthalinsulfonsäure, Dihydroxydiphenylsulfon und Formaldehyd erwiesen. Bevorzugt ist das Dinatriumsalz des Di- oder Tri-(6-sulfonaphthyl-2-)methans.

Es können auch Gemische von anionischen Dispergiermitteln zum Einsatz kommen. Normalerweise liegen die anionischen Dispergiermittel in Form ihrer Alkalimetallsalze, Ammoniumsalze oder Aminsalze vor. Diese Dispergiermittel werden vorzugsweise in einer Menge von 0,5 bis 8 g/l Flotte verwendet.

Die Färbebäder können auch übliche Zusätze, zweckmässig Elektrolyte wie Salze, z.B. Natriumsulfat, Ammoniumsulfat, Natrium- oder Ammoniumphosphate oder -polyphosphate, Metallchloride oder -nitrate wie Calciumchlorid, Magnesiumchlorid bzw. Calciumnitrate, Ammoniumacetat oder Natriumacetat und/oder Säuren, z.B. Mineralsäuren, wie Schwefelsäure oder Phosphorsäure, oder organische Säuren, zweckmässig niedere aliphatische Carbonsäuren, wie Ameisen-, Essig- oder Oxalsäure enthalten. Die Säuren dienen vor allem der Einstellung des pH-Wertes der erfindungsgemäss verwendeten Flotten, der in der Regel 4 bis 6,5, vorzugsweise 4,5 bis 6, beträgt.

Die Färbungen erfolgen mit Vorteil aus wässriger Flotte nach dem Ausziehverfahren. Das Flottenverhältnis kann dementsprechend innerhalb eines weiten Bereiches gewählt werden, z.B. 1:3 bis 1:100, vorzugsweise 1:7 bis 1:50. Die Temperatur, bei der gefärbt bzw. aufgehellt wird, beträgt mindestens 70 °C und in der Regel ist sie nicht höher als 140 °C. Vorzugsweise liegt sie im Bereich von 80 bis 135 °C.

Lineare Polyesterfasern und Cellulosetriacetatfasern färbt man vorzugsweise nach dem sogenannten Hochtemperaturverfahren in geschlossenen und zweckmässigerweise auch druckbeständigen Apparaturen bei Temperaturen von über 100 °C, bevorzugt zwischen 110 und 135 °C, und gegebenenfalls unter Druck. Als geschlossene Gefässe eignen sich beispielsweise Zirkulationsapparaturen wie Kreuzspul- oder Baumfärbeapparate, Haspelkufen, Düsen- oder Trommelfärbemaschinen, Muff-Färbeapparate, Paddeln oder Jigger.

Cellulose-2 1/2-acetatfasern färbt man vorzugsweise bei Temperaturen von 80-85 °C. Die Färbung der aromatischen Polyamidfasern oder sauer modifizierten Polyesterfasern wird vorzugsweise bei einer Temperatur von 80 bis 130 ° C vorgenommen.

Das Färbeverfahren kann so durchgeführt werden, dass man das Färbegut entweder zuerst mit dem Hilfsmittelgemisch kurz behandelt und anschliessend färbt oder vorzugsweise gleichzeitig mit dem Hilfsmittelgemisch und dem Farbstoff behandelt.

Vorzugsweise lässt man das Färbegut während 5 Minuten bei 60-80 ° C im Bad, das den Farbstoff, das Hilfsmittelgmisch und gegebenenfalls weitere Zusätze enthält und auf einen pH-Wert von 4,5 bis 5,5 eingestellt ist, vorlaufen, steigert die Temperatur innerhalb von 15 bis 35 Minuten auf 110 bis 135 ° C, vorzugsweise 125-130 ° C und belässt die Färbeflotte 15 bis 90 Minuten, vorzugsweise 30 bis 60 Minuten, bei dieser Temperatur.

Die Fertigstellung der Färbungen erfolgt durch Abkühlen der Färbeflotte auf 60 bis 80 ° C, Spülen der Färbungen mit Wasser und gegebenenfalls durch Reinigung auf übliche Weise im alkalischen Medium unter reduktiven Bedingungen. Die Färbungen werden dann wiederum gespült und getrocknet.

Man erhält auf synthetischem Fasermaterial, insbesondere auf linearen Polyesterfasern, gleichmässige und farbkräftige Ausfärbungen, die sich zudem durch gute Lichtechtheit und Reibechtheiten auszeichnen. Während des Färbens bleibt die Färbeflotte stabil und entstehen keine Ablagerungen im Inneren der Färbeapparaturen.

In den folgenden Beispielen sind die Teile Gewichtsteile und die Prozente Gewichtsprozente.

Beispiel 1

In einer Sandmühle werden
35 Teile der Verbindung Nr. 31 der Tabelle 1
14 Teile des mit Triethanolamin neutralisierten Umsetzungsproduktes von Phosphorpentoxid mit einem Oxalkylierungsproduktes mit 18 Ethylenoxideinheiten des Anlagerungsproduktes von 2,5 bis 3 Mol Styrol an 1 Mol Phenol und
51 Teile Wasser gemischt.

Hierauf wird die Mischung mit Quarzsand solange gemahlen, bis die Partlkelgrösse < 5 µm ist, und anschliessend die Dispersion vom Quarzsand abgetrennt.

71,4 Teile der erhaltenen Dispersion werden unter Rühren mit 25 Teilen einer 1 %igen wässrigen Lösung eines Biopolymeren auf Polysaccharidbasis und 3,6 Teilen Wasser homogenisiert. Man erhält eine lagerstabile Dispersion.

Beispiel 2

In einer Sandmühle werden
17,5 Teile der Verbindung Nr. 45 der Tabelle 1
17,5 Teile 2-(2'-Hydroxy-3'-tert.butyl-5'-methylphenyl-)-5-chlorobenzotriazol
14 Teile des mit Triethanolamin neutralisierten Umsetzungsproduktes von Phosphorpentoxid mit einem Oxalkylierungsproduktes mit 18 Ethylenoxideinheiten des Anlagerungsproduktes von 2,5 bis 3 Mol Styrol an 1 Mol Phenol und
51 Teile Wasser gemischt.

Alsdann wird die Mischung solange gemahlen, bis die Panikelgrösse < 5 µm ist, und anschliessend die Dispersion vom Quarzsand abgetrennt.

71,4 Teile der erhaltenen Dispersion werden unter Rühren mit 25,0 Teilen einer 1 %igen wässrigen Lösung eines Biopolymeren auf Polysaccharidbasis und 3,6 Teilen Wasser homogenisiert. Man erhält eine lagerstabile Dispersion.

Beispiel 3

In einer Sandmühle werden
17,5 Teile der Verbindung Nr. 5 der Tabelle 1
17,5 Teile 2-Hydroxy-4-octyloxy-benzophenon
14 Teile des mit Triethanolamin neutralisierten Umsetzungsproduktes von Phosphorpentoxid mit einem Oxalkylierungsproduktes mit 18 Ethylenoxideinheiten des Anlagerungsproduktes von 2,5 bis 3 Mol Styrol an 1 Mol Phenol und
51 Teile Wasser gemischt.

Die Mischung wird solange gemahlen, bis die Partikelgrösse < 5 µm ist und, anschliessend die Dispersion vom Quarzsand abgetrennt.

71,4 Teile der erhaltenen Dispersion werden unter Rühren mit 25 Teilen einer 1 %igen wässrigen Lösung eines Biopolymeren auf Polysaccharidbasis und 3,6 Teilen Wasser homogenisiert. Man erhält eine lagerstabile Dispersion.

Beispiel 4

In einer Sandmühle werden
35,0 Teile der Verbindung Nr. 5 der Tabelle 1
10,0 Teile eines salzfreien Kondensationsproduktes aus Na-Ditolylethersulfonat und Formaldehyd,
1,0 Teil eines Anlagerungsproduktes von 9 Mol Ethylenoxid an 1 Mol Nonylphenol,
1,0 Teil eines Anlagerungsprodukts von Ethylenoxid an das Anlagerungsprodukt von Propylenoxid an Propylenglykol mit einem mittleren Molekulargewicht des Polypropylenoxidanteils von ca. 2050 und einem Anteil des Polyethylenoxids im Molekül von ca. 50 % (EO-PO-Blockpolymer) und
53,0 Teile Wasser gemischt.

Die Mischung wird mit Quarzsand solange gemahlen, bis die Partikelgrösse kleiner als 5 µm ist, und anschliessend die Dispersion vom Quarzsand abgetrennt.

71,4 Teile der erhaltenen Dispersion werden unter Rühren mit 25,0 Teilen einer 1 %-igen wässrigen Lösung eines Biopolymeren auf Polysaccharid-Basis und 3,6 Teilen Wasser homogenisiert.

Man erhält eine lagerstabile Dispersion.

Beispiel 5

100 g eines Polyestergewirkes (Polyethylenterephthalat) werden in einem HT-Zirkulationsapparat bei 60 °C in 3 Liter Wasser eingebracht, welches
9 g Ammoniumsulfat
18 g Dinatriumsalz von Di-(6-sulfonaphthyl-2-)methan
5 g eines fein dispergierten Farbstoffes der Formel

(101) 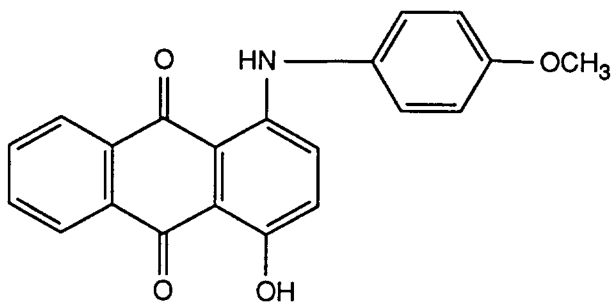

3 g der gemäss Beispiel 1 hergestellten Hilfsmittelformulierung enthält und mit 85 %iger Ameisensäure auf pH 5 eingestellt ist. Man erhitzt das Färbebad, bei ständig zirkulierender Flotte, innerhalb von 30 Minuten auf 130 °C und färbt 1 Stunde bei dieser Temperatur. Alsdann wird das Färbebad abgekühlt und das Substrat gespült und wie üblich zur Entfernung von nichtfixiertem Farbstoff reduktiv gereinigt Anschliessend wird das Substrat neutralisiert, nochmals gespült und getrocknet. Bedingt durch die stabile mitverwendete Hilfsmittelformulierung wird während des Färbeprozesses weder ein Anstieg des Differenzdruckes festgestellt noch zeigen sich Ablagerungen im Inneren des Wickelkörpers. Man erhält somit eine gleichmässige lichtechte marineblaue Färbung.

Gleichmässige lichtechte marineblaue Färbungen werden auch erhalten, wenn anstelle der Hilfsmittelformulierung gemäss Beispiel 1 die gemäss den Beispielen 2 bis 4 hergestellten Hilfsmittelformulierungen eingesetzt werden.

Beispiel 6

In einen Hochtemperatur-Färbeapparat enthaltend 2 Liter einer wässrigen Flotte, die
2 g eines amphoteren sulfatierten Fettaminpolyethylenglykolethers,
12g kalz. Natriumsulfat,
1,5 g eines Farbsalzes der Formel

(102) 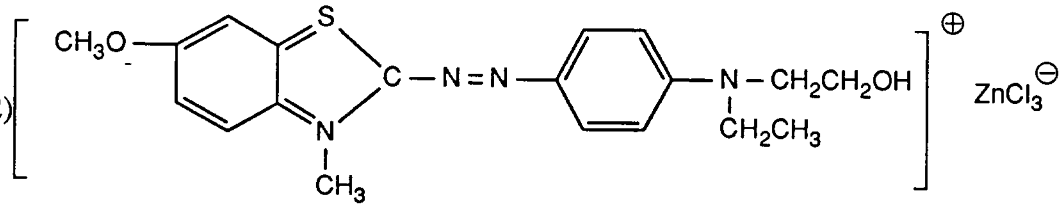

und 3 g der gemäss Beispiel 2 hergestellten wässrigen Hilfsmitteldispersion enthält und mit Essigsäure auf pH 4,5 eingestellt ist, werden 100 g eines Dacron 64-Gewebes (säuremodifizierte Polyesterfasern) eingebracht. Man erhitzt das Färbebad innerhalb von 30 Minuten auf 120 °C und färbt 1 Stunde bei dieser Temperatur. Alsdann wird das Färbebad auf 70 °C abgekühlt, das Substrat neutralisiert, gespült und wie üblich getrocknet.

Die Färbeflotte zeigt während des Färbens keine Ausfällungen und Ablagerungen. Man erhält somit eine gleichmässige und lichtechte rote Färbung.

Gleichmässige lichtechte rote Färbungen werden auch erhalten, wenn anstelle der Hilfsmittelformulierung gemäss Beispiel 2 die gemäss den Beispielen 1 oder 3 hergestellten Hilfsmittelformulierungen eingesetzt werden.

**Patentansprüche**
**Patentansprüche für folgende Vertragsstaaten : CH, DE, FR, GB, IT, LI, SE**

**1.** Wässrige Dispersion einer 2-(2'-Hydroxyphenyl-)-benzotriazolverbindung, dadurch gekennzeichnet, dass sie

(a) 5 bis 50 Gewichtsprozent einer Benzotriazolverbindung der Formel

(1) 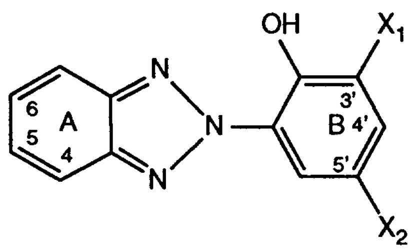

worin

einer der beiden Substituenten $X_1$ und $X_2$ die Gruppe

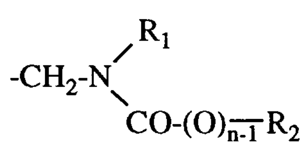

bedeutet, in der

$R_1$ Wasserstoff, $C_1$-$C_{10}$-Alkyl, $C_5$-$C_8$-Cycloalkyl, $C_7$-$C_{10}$-Alalkyl oder $C_6$-$C_{10}$-Aryl,

$R_2$ $C_1$-$C_{20}$-Alkyl, $C_2$-$C_{17}$-Alkenyl, $C_5$-$C_8$-Cycloalkyl, $C_7$-$C_{10}$-Aralkyl, $C_8$-$C_{10}$-Alalkenyl oder $C_6$-$C_{10}$-Aryl und

n 1 oder 2 bedeuten und sofern n = 1 ist,

$R_1$ und $R_2$ zusammen mit dem Ringbrückenglied

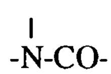

auch einen ein- oder mehrkernigen stickstoffhaltigen Heterocyclus bilden können und in diesem Falle $R_1$ -CO-oder unsubstituiertes oder durch $C_1$-$C_4$-Alkyl substituiertes Methylen und $R_2$ $C_2$-$C_4$-Alkylen, $C_2$-$C_4$-Alkenylen, $C_6$-$C_{10}$-Arylen oder Di-, Tetra- oder Hexahydro-$C_6$-$C_{10}$-Arylen, wobei die freien Valenzen der cyclischen Reste stets ortho zueinander stehen, $C_1$-$C_4$-Alkyl, $C_1$-$C_4$-Alkoxy, Halogen, $C_6$-$C_{10}$-Aryl, $C_7$-$C_{10}$-Aralkyl oder $C_5$-$C_8$-Cycloalkyl bedeuten, und der andere der beiden Substituenten $X_1$ und $X_2$ Wasserstoff, $C_1$-$C_4$-Alkyl, $C_1$-$C_4$-Alkoxy, Halogen, $C_6$-$C_{10}$-Aryl, $C_7$-$C_{10}$-Aralkyl, $C_5$-$C_8$-Cycloalkyl oder die Gruppe

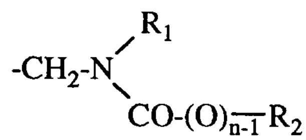

ist;
der Ring A in den Stellungen 4, 5 und 6 durch $C_1$-$C_4$-Alkyl, $C_1$-$C_4$-Alkoxy, Carboxy, Carbonsäure-$C_1$-$C_4$-alkylester, Carbonsäureamid, Sulfonsäure-$C_1$-$C_4$-alkylester, $C_1$-$C_4$-Alkylsulfonyl oder Halogen und
der Ring B in der Stellung 4' durch $C_1$-$C_4$-Alkyl, $C_1$-$C_4$-Alkoxy, Halogen, $C_6$-$C_{10}$-Aryl, $C_7$-$C_{10}$-Aralkyl oder $C_5$-$C_8$-Cycloalkyl substituiert sein kann;
oder einer der beiden Substituenten $X_1$ und $X_2$ $CH_3$-$(CH_2)_3$-$CH(C_2H_5)$-CO-NH-$CH_2$- und der andere der beiden Substituenten $X_1$ und $X_2$ $C_6H_5$-$CH_2$-$C_6H_4$-, $C_6H_5$-$C_6H_4$- oder

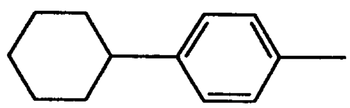

ist und die Ringe A und B darüberhinaus unsubstituiert sind; oder einer der beiden Substituenten $X_1$ und $X_2$ $ClCH_2$-CO-NH-$CH_2$- und der andere der beiden Substituenten $X_1$ und $X_2$ $C_6H_5$-$CH_2$-$C_6H_4$- oder $C_6H_5$-$C_6H_4$- ist und die Ringe A und B darüberhinaus unsubstituiert sind; oder einer der beiden Substituenten $X_1$ und $X_2$ $C_8H_{17}OOC$-NH-$CH_2$- und der andere der beiden Substituenten $X_1$ und

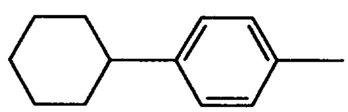

$X_2$ ist, der Ring A in der Stellungen 4 und 6 durch Methyl substituiert ist und der Ring B darüberhinaus unsubstituiert ist,
(b) 0 bis 18 Gewichtsprozent einer anionischen Verbindung und
(c) 0 bis 18 Gewichtsprozent einer nichtionischen Verbindung
enthält, mit der Massgabe, dass von den Komponenten (b) und (c) mindestens eine vorhanden sein muss.

**2.** Dispersion gemäss Anspruch 1, dadurch gekennzeichnet, dass die Komponente (a) der Formel (1) entspricht worin der durch $R_1$ und $R_2$ zusammen mit dem Ringbrückenglied

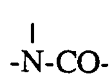

gebildete Heterocyclus ein Lactamring ist.

**3.** Dispersion gemäss Anspruch 1, dadurch gekennzeichnet, dass die Komponente (a) der Formel (1) entspricht worin das durch $R_1$ und $R_2$ zusammen mit dem Ringbrückenglied

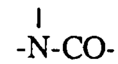

gebildete Heterocyclus das 2,5-Dioxopyrrolidin-, 3,4-Di-, 3,4,5,6-Tetra- oder 3,4,5,6,8,9-Hexahydrophthalimid ist.

**4.** Dispersion gemäss Anspruch 1, dadurch gekennzeichnet, dass die Komponente (a) der Formel (1) entspricht worin von $X_1$ und $X_2$ ein X die Gruppe der Formel

(2) 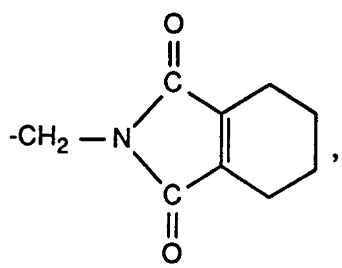 ,

(3) 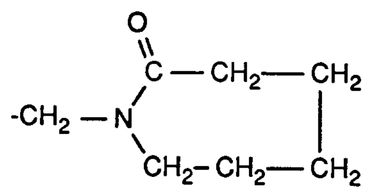 oder

(4) 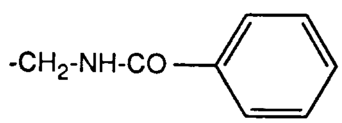

und das andere X Wasserstoff oder $C_1$-$C_4$-Alkyl bedeutet und der Ring A unsubstituiert oder durch Chlor substituiert ist.

**5.** Dispersion gemäss einem der Ansprüche 1 bis 4, dadurch gekennzeichnet, dass die Komponente (b) eine Verbindung aus der Gruppe der

(ba) sauren Ester oder deren Salze von Alkylenoxidaddukten der Formel

(5) 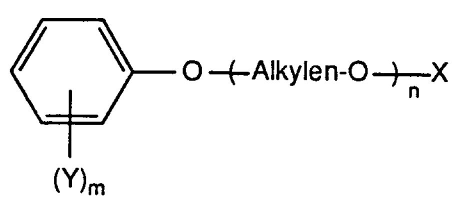

worin X den Säurerest einer anorganischen, Sauerstoff enthaltenden Säure, wie z.B. Schwefelsäure oder vorzugsweise Phosphorsäure, oder auch den Rest einer organischen Säure und

Y $C_1$-$C_{12}$-Alkyl, Aryl oder Aralkyl bedeuten, "Alkylen" für den Ethylenrest oder Propylenrest steht, und

m 1 bis 4 und n 4 bis 50 sind, wobei wenn m 2 bis 4 ist, Y verschiedene Bedeutungen annehmen kann,

(bb) Polystyrolsulfonate,

(bc) Fettsäuretauride,
(bd) alkylierten Diphenyloxid -mono- oder di-sulfonate,
(be) Sulfonate von Polycarbonsäureestern,
(bf) mit einer organischen Dicarbonsäure, oder einer anorganischen mehrbasischen Säure in einen sauren Ester übergeführten Anlagerungsprodukt von 1 bis 60, vorzugsweise 2 bis 30 Mol Ethylenoxid und/oder Propylenoxid an Fettarnine, Fettamide, Fettsäuren oder Fettalkohole je mit 8 bis 22 Kohlenstoffatomen oder an drei- bis sechswenige Alkanole mit 3 bis 6 Kohlenstoffatomen,
(bg) Ligninsulfonate und
(bh) Formaldehyd-Kondensationsprodukte,
ausgewählt ist.

6. Dispersion gemäss einem der Ansprüche 1 bis 4, dadurch gekennzeichnet, dass die Komponente (b) eine anionische Verbindung der Formel (5) ist, worin Y $C_4$-$C_{12}$-Alkyl, Benzyl oder $\alpha$-Methylbenzyl bedeutet.

7. Dispersion gemäss einem der Ansprüche 1 bis 4, dadurch gekennzeichnet, dass die Komponente (b) eine Verbindung der Formel

(6) 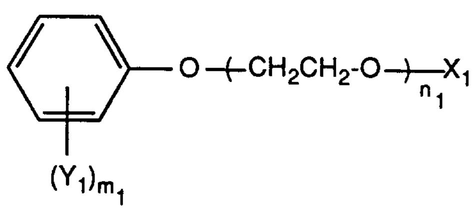

ist, worin $Y_1$ $C_4$-$C_{12}$-Alkyl, Phenyl, Tolyl, Phenyl-$C_1$-$C_3$-alkyl oder Tolyl-$C_1$-$C_3$-alkyl bedeutet, $X_1$ ein Säurerest ist, der sich von Schwefelsäure oder Orthophosphorsäure ableitet, und $m_1$ 1 bis 3 und $n_1$ 4 bis 40 sind, wobei wenn $m_1$ 2 oder 3 ist, $Y_1$ verschiedene Bedeutungen annehmen kann,.

8. Dispersion gemäss einem der Ansprüche 1 bis 4, dadurch gekennzeichnet, dass die Komponente (b) ein saurer Phosphorsäureester oder dessen Salz des Oxalkylierungsproduktes von 6 bis 30 Mol Ethylenoxid an 1 Mol 4-Nonylphenol oder Dinonylphenol oder an 1 Mol einer Verbindung, die durch Anlagerung von 1 bis 3 Mol Styrol, $\alpha$-Methylstyrol oder Vinyltoluol an 1 Mol Phenol, Kresol oder Xylenol hergestellt worden ist, ist.

9. Dispersion gemäss einem der Ansprüche 1 bis 4, dadurch gekennzeichnet, dass die Komponente (b) ein saurer Phosphorsäureester oder dessen Salz des Oxalkylierungsproduktes der Formel

(7) 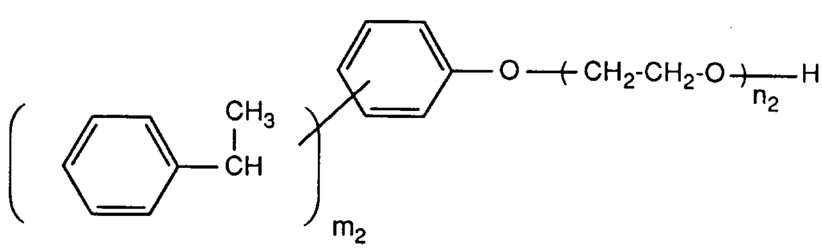

ist, worin $m_2$ 1 bis 3 und $n_2$ 8 bis 30 sind.

10. Dispersion gemäss einem der Ansprüche 1 bis 4, dadurch gekennzeichnet, dass sie als anionische Komponente (b) ein Kondensationsprodukt von Formaldehyd mit einer aromatischen Sulfonsäure enthält.

**11.** Dispersion gemäss Anspruch 10, dadurch gekennzeichnet, dass sie als anionische Komponente (b) ein Kondensationsprodukt von Formaldehyd mit Ditolylethersulfonat enthält.

**12.** Dispersion gemäss einem der Ansprüche 1 bis 4, dadurch gekennzeichnet, dass die anionische Komponente (b) ein Gemisch aus den Komponenten (ba) bis (bh) ist.

**13.** Dispersion gemäss Anspruch 12, dadurch gekennzeichnet, dass die anionische Komponente (b) ein Gemisch aus einem Kondensationsprodukt von Formaldehyd mit Ditolylethersulfonat und einem sauren Phosphorsäureester oder dessen Salz des Oxalkylierungsproduktes der in Anspruch 9 definierten Formel (7) ist.

**14.** Dispersion gemäss einem der Ansprüche 1 bis 5, dadurch gekennzeichnet, dass sie als Komponente (c) eine nichtionische Verbindung aus der Gruppe der

(ca) Alkylenoxidaddukte der Formel

(11) 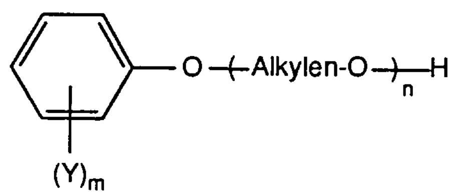

worin Y $C_1$-$C_{12}$-Alkyl, Aryl oder Aralkyl bedeutet,
"Alkylen" für den Ethylenrest oder Propylenrest steht und
m 1 bis 4 und n 4 bis 50 sind, wobei wenn m 2 bis 4 ist, Y verschiedene Bedeutungen annehmen kann,

(cb) Alkylenoxiaddukte an
 (cba) gesättigte oder ungesättigte 1-6-wertige aliphatische Alkohole,
 (cbb) Fettsäuren,
 (cbc) Fettamine,
 (cbd) Fettamide,
 (cbe) Diamine,
 (cbf) Sorbitanester,

(cc) Alkylenoxid-Kondensationsprodnkte (Blockpolymerisate)

(cd) Polymerisate von Vinylpyrrolidon, Vinylacetat oder Vinylalkohol, und

(ce) Co- or Ter-polymere von Vinylpyrrolidon mit Vinylacetat und/oder Vinylalkohol enthalten.

**15.** Dispersion gemäss einem der Ansprüche 1 bis 5, dadurch gekennzeichnet, dass die Komponente (c) ein Addukt von 8 bis 30 Mol Ethylenoxid an 1 Mol 4-Nonylphenol, an 1 Mol Dinonylphenol oder an 1 Mol von Verbindungen, die durch Anlagerung von 1 bis 3 Mol von Styrolen an 1 Mol Phenol hergestellt werden, ist.

**16.** Dispersion gemäss einem der Ansprüche 1 bis 5, dadurch gekennzeichnet, dass die Komponente (c) ein Ethylenoxidaddukt der Formel

(12) 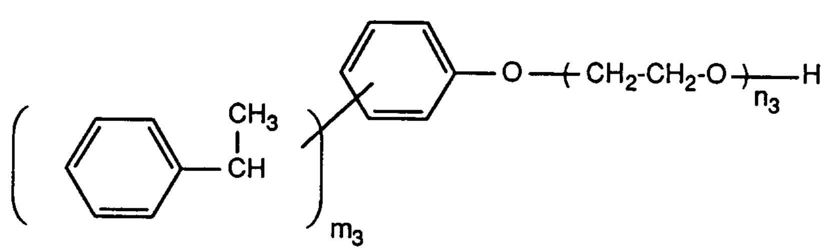

ist, worin $m_3$ 1 bis 3 und $n_3$ 8 bis 30 bedeuten.

**17.** Dispersion gemäss einem der Ansprüche 1 bis 5, dadurch gekennzeichnet, dass sie als anionische Komponente (b) ein Kondensationsprodukt von Formaldehyd mit einer aromatischen Sulfonsäure und als nichtionische Komponente (c) ein Alkylenoxidaddukt der in Anspruch 14 definierten Formel (11) enthält.

**18.** Dispersion gemäss Anspruch 17, dadurch gekennzeichnet, dass sie als nichtionische Komponente (c) eine Mischung aus einem Alkylenoxidaddukt der in Anspruch 14 definierten Formel (11) und einem Alkylenoxid-Kondensationsprodukt (cc) enthält.

**19.** Dispersion gemäss Anspruch 18, dadurch gekennzeichnet, dass sie als nichtionische Komponente (c) ein Alkylenoxid-Kondensationsprodukt (cc) enthält.

**20.** Dispersion gemäss einem der Ansprüche 1 bis 5, dadurch gekennzeichnet, dass sie als anionische Komponente (b) ein Kondensationsprodukt von Formaldehyd mit einer aromatischen Sulfonsäure und als nichtionische Komponente (c) ein Alkylenoxid-Addukt an Sorbitanester enthält.

**21.** Dispersion gemäss Anspruch 15, dadurch gekennzeichnet, dass sie als anionische Komponente (b) einen sauren Phosphorsäureester oder dessen Salz des Oxalkylierungsproduktes der in Anspruch 9 definierten Formel (7) und als nichtionogene Komponente (c) ein Alkylenoxidaddukt der in Anspruch 14 definierten Formel (11) enthält.

**22.** Dispersion gemäss einem der Ansprüche 1 bis 21, dadurch gekennzeichnet, dass sie zusätzlich als Komponente (d) ein Stabilisierungs- oder Verdickungsmittel enthält.

**23.** Dispersion gemäss Anspruch 22, dadurch gekennzeichnet, dass die Komponente (d) eine 0,5 bis 10 %ige wässrige Lösung oder Dispersion einer polymerisierten ethylenisch-ungesättigten Mono- oder Dicarbonsäure von 3 bis 5 Kohlenstoffatomen, insbesondere Polyacrylsäure ist.

**24.** Dispersion gemäss Anspruch 22, dadurch gekennzeichnet, dass die Komponente (d) ein Polysaccharid ist.

**25.** Dispersion gemäss einem der Ansprüche 1 bis 24, dadurch gekennzeichnet, dass sie zusätzlich ein Antischaummittel enthält.

**26.** Dispersion gemäss Anspruch 25, dadurch gekennzeichnet, dass das Antischaummittel ein Alkylendiamid der Formel

(14) $V_1$-CO-NH-Q-NH-CO-$V_2$

ist, in der $V_1$ und $V_2$, unabhängig voneinander, je einen aliphatischen Rest mit 9 bis 23 Kohlenstoffatomen und Q einen Alkylenrest mit 1 bis 8 Kohlenstoffatomen bedeuten.

**27.** Dispersion gemäss einem der Ansprüche 1 bis 26, dadurch gekennzeichnet, dass sie zusätzlich ein Konservierungsmittel und/oder ein Gefrierschutzmittel enthält.

**28.** Dispersion gemäss einem der Ansprüche 1 bis 27, dadurch gekennzeichnet, dass sie als Komponente (a) ein Gemisch aus einer Benzotriazolverbindung der Formel (1) und einer Benzotriazolverbindung der Formel

(15) 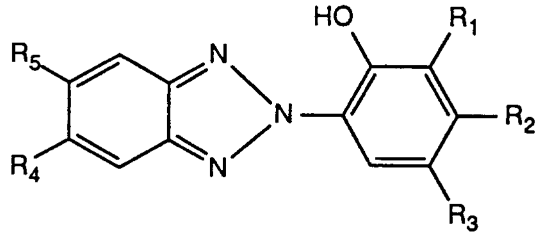

worin

$R_1$ Wasserstoff, $C_1$-$C_{12}$-Alkyl, Chlor, $C_5$-$C_6$-Cycloalkyl oder $C_7$-$C_9$-Phenylalkyl,

$R_2$ Wasserstoff, $C_1$-$C_4$-Alkyl, $C_1$-$C_4$-Alkoxy, Chlor oder Hydroxy,

$R_3$ $C_1$-$C_{12}$-Alkyl, $C_1$-$C_4$-Alkoxy, Phenyl, ($C_1$-$C_8$-Alkyl)-phenyl, $C_5$-$C_6$-Cycloalkyl, $C_2$-$C_9$-Alkoxycarbonyl, Chlor, Carboxyethyl oder $C_7$-$C_9$-Phenylalkyl,

$R_4$ Wasserstoff, Chlor, $C_1$-$C_4$-Alkyl, $C_1$-$C_4$-Alkoxy oder $C_2$-$C_9$-Alkoxycarbonyl, und

$R_5$ Wasserstoff oder Chlor

bedeuten, enthält.

**29.** Dispersion gemäss einem der Ansprüche 1 bis 27, dadurch gekennzeichnet, dass sie als Komponente (a) ein Gemisch aus einer Benzotriazolverbindung der Formel (1) und einer Benzophenonverbindung der Formel

(16)

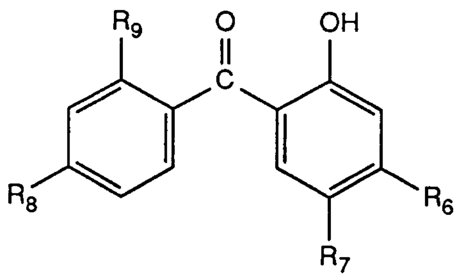

worin

$R_6$ Wasserstoff, Hydroxy, $C_1$-$C_{14}$-Alkoxy oder Phenoxy,

$R_7$ Wasserstoff, Halogen oder $C_1$-$C_4$-Alkyl

$R_8$ Wasserstoff, Hydroxy oder $C_1$-$C_4$-Alkoxy und

$R_9$ Wasserstoff oder Hydroxy

bedeuten, enthält.

**30.** Dispersion gemäss einem der Ansprüche 1 bis 27, dadurch gekennzeichnet, dass sie als Komponente (a) ein Gemisch aus einer Benzotriazolverbindung der Formel (1), einer Benzotriazolverbindung der Formel (15) und einer Benzophenonverbindung der Formel (16) enthält.

**31.** Dispersion gemäss Anspruch 1, dadurch gekennzeichnet, dass sie, bezogen auf die gesamte Dispersion,

5-50 Gewichtsprozent der Komponente (a),
0-18 Gewichtsprozent der Komponente (b),
0-18 Gewichtsprozent der Komponente (c),
0 - 5 Gewichtsprozent der Komponente (d),
0 - 8 Gewichtsprozent einer weiteren, von der Komponente (b) verschiedenen anionischen Komponente,
0 - 8 Gewichtsprozent einer weiteren von Komponente (c) verschiedenen nichtionischen Komponente,
0 - 7 Gewichtsprozent eines Antischaummittel,
0 - 1 Gewichtsprozent eines Konservierungsmittels und
0-20 Gewichtsprozent eines Gefrierschutzmittels

enthält.

**32.** Verwendung der wässrigen Dispersion gemäss einem der Ansprüche 1 bis 31 beim Färben von synthetischen Fasermaterialien, insbesondere Polyesterfasern oder säuremodifizierten Polyesterfasern.

**33.** Verfahren zum Färben von Synthesefasern, vorzugsweise Polyesterfasern oder säuremodifizierte Polyesterfasern, enthaltendem Textilmaterial mit Dispersionsfarbstoffen bzw. kationischen Farbstoffen, dadurch gekennzeichnet, dass man dieses Material in Gegenwart einer wässrigen Dispersion einer Benzotriazolverbindung gemäss einem der Ansprüche 1 bis 31 färbt.

**Patentansprüche für folgenden Vertragsstaat : ES**

1. Verfahren zur Herstellung einer wässrigen Dispersion einer 2-(2'-Hydroxyphenyl-)-benzotriazolverbindung, dadurch gekennzeichnet, dass man
   (a) 5 bis 50 Gewichtsprozent einer Benzotriazolverbindung der Formel

(1) 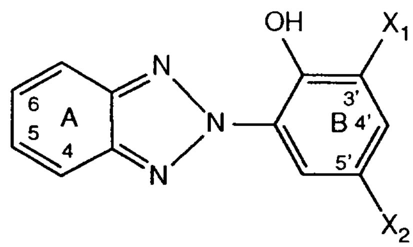

worin
einer der beiden Substituenten $X_1$ und $X_2$ die Gruppe

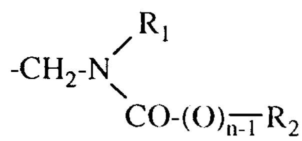

bedeutet, in der
$R_1$ Wasserstoff $C_1$-$C_{10}$-Alkyl, $C_5$-$C_8$-Cycloalkyl, $C_7$-$C_{10}$-Aralkyl oder $C_6$-$C_{10}$-Aryl,
$R_2$ $C_1$-$C_{20}$-Alkyl, $C_2$-$C_{17}$-Alkenyl, $C_5$-$C_8$-Cycloalkyl, $C_7$-$C_{10}$-Aralkyl, $C_8$-$C_{10}$-Aralkenyl oder $C_6$-$C_{10}$-Aryl und
n 1 oder 2 bedeuten und sofern n = 1 ist,
$R_1$ und $R_2$ zusammen mit dem, Ringbrückenglied

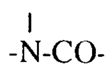

auch einen ein- oder mehrkernigen stickstoffhaltigen Heterocyclus bilden können und in diesem Falle $R_1$ -CO- oder unsubstituiertes oder durch $C_1$-$C_4$-Alkyl substituiertes Methylen und
$R_2$ $C_2$-$C_4$-Alkylen, $C_2$-$C_4$-Alkenylen, $C_6$-$C_{10}$-Arylen oder Di-, Tetra- oder Hexahydro-$C_6$-$C_{10}$-Arylen, wobei die freien Valenzen der cyclischen Reste stets ortho zueinander stehen, $C_1$-$C_4$-Alkyl, $C_1$-$C_4$-Alkoxy, Halogen, $C_6$-$C_{10}$-Aryl, $C_7$-$C_{10}$-Aralkyl oder $C_5$-$C_8$-Cycloalkyl bedeuten, und
der andere der beiden Substituenten $X_1$ und $X_2$ Wasserstoff, $C_1$-$C_4$-Alkyl, $C_1$-$C_4$-Alkoxy, Halogen, $C_6$-$C_{10}$-Aryl, $C_7$-$C_{10}$-Aralkyl, $C_5$-$C_8$-Cycloalkyl oder die Gruppe

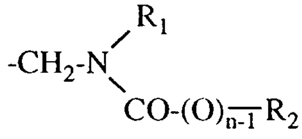

ist;
der Ring A in den Stellungen 4, 5 und 6 durch $C_1$-$C_4$-Alkyl, $C_1$-$C_4$-Alkoxy, Carboxy, Carbonsäure-$C_1$-$C_4$-alkylester, Carbonsäureamid, Sulfonsäure-$C_1$-$C_4$-alkylester, $C_1$-$C_4$-Alkylsulfonyl oder Halogen und
der Ring B in der Stellung 4' durch $C_1$-$C_4$-Alkyl, $C_1$-$C_4$-Alkoxy, Halogen, $C_6$-$C_{10}$-Aryl, $C_7$-$C_{10}$-Alalkyl oder $C_5$-$C_8$-Cycloalkyl substituiert sein kann;

oder einer der beiden Substituenten $X_1$ und $X_2$ $CH_3$-$(CH_2)_3$-$CH(C_2H_5)$-CO-NH-$CH_2$- und der andere der beiden Substituenten $X_1$ und $X_2$ $C_6H_5$-$CH_2$-$C_6H_4$-, $C_6H_5$-$C_6H_4$- oder

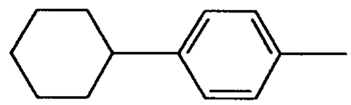

ist und die Ringe A und B darüberhinaus unsubstituiert sind; oder einer der beiden Substituenten $X_1$ und $X_2$ $ClCH_2$-CO-NH-$CH_2$- und der andere der beiden Substituenten $X_1$ und $X_2$ $C_6H_5$-$CH_2$-$C_6H_4$- oder $C_6H_5$-$C_6H_4$- ist und die Ringe A und B darüberhinaus unsubstituiert sind; oder einer der beiden Substituenten $X_1$ und $X_2$ $C_8H_{17}OOC$-NH-$CH_2$- und der andere der beiden Substituenten $X_1$ und $X_2$

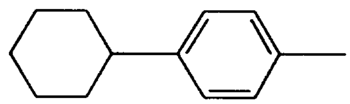

ist, der Ring A in der Stellungen 4 und 6 durch Methyl substituiert ist und der Ring B darüberhinaus unsubstituiert ist,
(b) 0 bis 18 Gewichtsprozent einer anionischen Verbindung und
(c) 0 bis 18 Gewichtsprozent einer nichtionischen Verbindung,
mit der Massgabe, dass von den Komponenten (b) und (c) mindestens eine vorhanden sein muss,
zusammen mischt.

**2.** Verfahren gemäss Anspruch 1, dadurch gekennzeichnet, dass die Komponente (a) der Formel (1) entspricht worin der durch $R_1$ und $R_2$ zusammen mit den, Ringbrückenglied

|
-N-CO-

gebildete Heterocyclus ein Lactamring ist.

**3.** Verfahren gemäss Anspruch 1, dadurch gekennzeichnet, dass die Komponente (a) der Formel (1) entspricht worin das durch $R_1$ und $R_2$ zusammen mit dem Ringbrückenglied

|
-N-CO-

gebildete Heterocyclus das 2,5-Dioxopyrrolidin, 3,4-Di-, 3,4,5,6-Tetra- oder 3,4,5,6,8,9-Hexahydrophthalimid ist.

**4.** Verfahren gemäss Anspruch 1, dadurch gekennzeichnet, dass die Komponente (a) der Formel (1) entspricht worin von $X_1$ und $X_2$ ein X die Gruppe der Formel

(2) 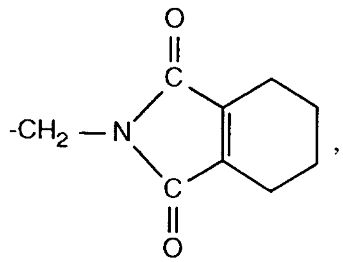

(3) 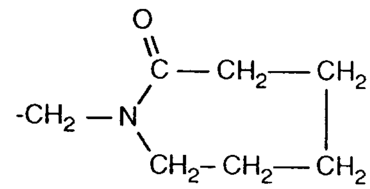 oder

(4) 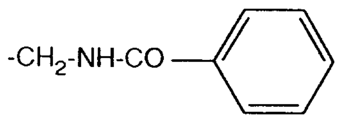

und das andere X Wasserstoff oder $C_1$-$C_4$-Alkyl bedeutet und der Ring A unsubstituiert oder durch Chlor substituiert ist.

**5.** Verfahren gemäss einem der Ansprüche 1 bis 4, dadurch gekennzeichnet, dass die Komponente (b) eine Verbindung aus der Gruppe der

(ba) sauren Ester oder deren Salze von Alkylenoxidaddukten der Formel

(5) 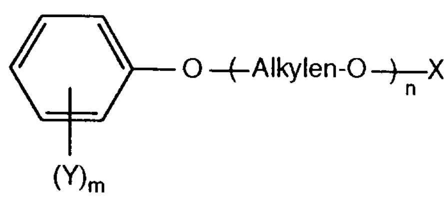

worin X den Säurerest einer anorganischen, Sauerstoff enthaltenden Säure, wie z.B. Schwefelsäure oder vorzugsweise Phosphorsäure, oder auch den Rest einer organischen Säure und

Y $C_1$-$C_{12}$-Alkyl, Aryl oder Aralkyl bedeuten, "Alkylen" für den Ethylenrest oder Propylenrest steht, und

m 1 bis 4 und n 4 bis 50 sind, wobei wenn m 2 bis 4 ist, Y verschiedene Bedeutungen annehmen kann,

(bb) Polystyrolsulfonate,

(bc) Fettsäuretauride,

(bd) alkylierten Diphenyloxid -mono- oder di-sulfonate,

(be) Sulfonate von Polycarbonsäureestern,

(bf) mit einer organischen Dicarbonsäure, oder einer anorganischen mehrbasischen Säure in einen sauren Ester übergeführten Anlagerungsprodukt von 1 bis 60, vorzugsweise 2 bis 30 Mol Ethylenoxid und/oder Propylenoxid an Fettamine, Fettamide, Fettsäuren oder Fettalkohole je mit 8 bis 22 Kohlenstoffatomen oder an drei- bis sechswertige Alkanole mit 3 bis 6 Kohlenstoffatomen.

(bg) Ligninsulfonate und

(bh) Formaldehyd-Kondensationsprodukte,

ausgewählt ist.

**6.** Verfahren gemäss einem der Ansprüche 1 bis 4, dadurch gekennzeichnet, dass die Komponente (b) eine anionische Verbindung der Formel (5) ist, worin Y $C_4$-$C_{12}$-Alkyl, Benzyl oder $\alpha$-Methylbenzyl

bedeutet.

**7.** Verfahren gemäss einem der Ansprüche 1 bis 4, dadurch gekennzeichnet, dass die Komponente (b) eine Verbindung der Formel

(6)

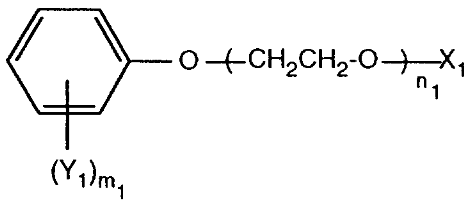

ist, worin $Y_1$ $C_4$-$C_{12}$-Alkyl, Phenyl, Tolyl, Phenyl-$C_1$-$C_3$-alkyl oder Tolyl-$C_1$-$C_3$-alkyl bedeutet, $X_1$ ein Säurerest ist, der sich von Schwefelsäure oder Orthophosphorsäure ableitet, und $m_1$ 1 bis 3 und $n_1$ 4 bis 40 sind, wobei wenn $m_1$ 2 oder 3 ist, $Y_1$ verschiedene Bedeutungen annehmen kann,.

**8.** Verfahren gemäss einen, der Ansprüche 1 bis 4, dadurch gekennzeichnet, dass die Komponente (b) ein saurer Phosphorsäureester oder dessen Salz des Oxalkylierungsproduktes von 6 bis 30 Mol Ethylenoxid an 1 Mol 4-Nonylphenol oder Dinonylphenol oder an 1 Mol einer Verbindung, die durch Anlagerung von 1 bis 3 Mol Styrol, α-Methylstyrol oder Vinyltoluol an 1 Mol Phenol, Kresol oder Xylenol hergestellt worden ist, ist.

**9.** Verfahren gemäss einem der Ansprüche 1 bis 4, dadurch gekennzeichnet, dass die Komponente (b) ein saurer Phosphorsäureester oder dessen Salz des Oxalkylierungsproduktes der Formel

(7)

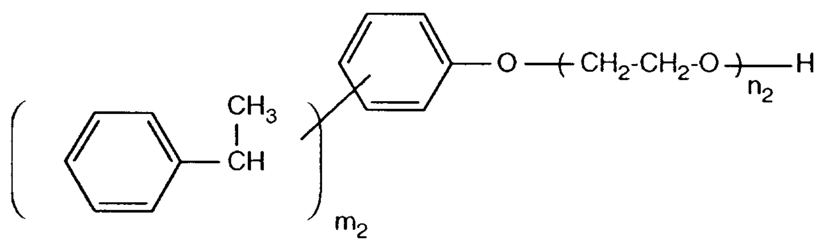

ist, worin $m_2$ 1 bis 3 und $n_2$ 8 bis 30 sind.

**10.** Verfahren gemäss einen, der Ansprüche 1 bis 4, dadurch gekennzeichnet, dass die anionische Komponente (b) ein Kondensationsprodukt von Formaldehyd mit einer aromatischen Sulfonsäure ist.

**11.** Verfahren gemäss Anspruch 10, dadurch gekennzeichnet, dass die anionische Komponente (b) ein Kondensationsprodukt von Formaldehyd mit Ditolylethersulfonat ist.

**12.** Verfahren gemäss einem der Ansprüche 1 bis 4, dadurch gekennzeichnet, dass die anionische Komponente (b) ein Gemisch aus den Komponenten (ba) bis (bh) ist.

**13.** Verfahren gemäss Anspruch 12, dadurch gekennzeichnet, dass die anionische Komponente (b) ein Gemisch aus einem Kondensationsprodukt von Formaldehyd mit Ditolylethersulfonat und einem sauren Phosphorsäureester oder dessen Salz des Oxalkylierungsproduktes der in Anspruch 9 definierten Formel (7), ist.

**14.** Verfahren gemäss einem der Ansprüche 1 bis 5, dadurch gekennzeichnet, dass die Komponente (c) eine nichtionische Verbindung aus der Gruppe der

(ca) Alkylenoxidaddukte der Formel

(11) 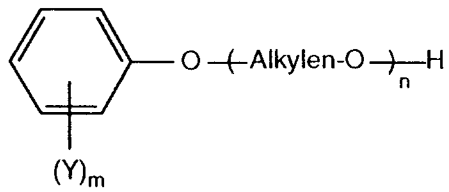

worin Y $C_1$-$C_{12}$-Alkyl, Aryl oder Aralkyl bedeutet,
"Alkylen" für den Ethylenrest oder Propylenrest steht und
m 1 bis 4 und n 4 bis 50 sind, wobei wenn m 2 bis 4 ist, Y verschiedene Bedeutungen annehmen kann,
(cb) Alkylenoxiaddukte an
(cba) gesättigte oder ungesättigte 1-6-wertige aliphatische Alkohole,
(cbb) Fettsäuren,
(cbc) Fettamine,
(cbd) Fettamide,
(cbe) Diamine,
(cbf) Sorbitanester,
(cc) Alkylenoxid-Kondensationsprodukte (Blockpolymerisate)
(cd) Polymerisate von Vinylpyrrolidon, Vinylacetat oder Vinylalkohol, und
(ce) Co- or Ter-polymere von Vinylpyrrolidon mit Vinylacetat und/oder Vinylalkohol, ist.

**15.** Verfahren gemäss einem der Ansprüche 1 bis 5, dadurch gekennzeichnet, dass die Komponente (c) ein Addukt von 8 bis 30 Mol Ethylenoxid an 1 Mol 4-Nonylphenol, an 1 Mol Dinonylphenol oder an 1 Mol von Verbindungen, die durch Anlagerung von 1 bis 3 Mol von Styrolen an 1 Mol Phenol hergestellt werden, ist.

**16.** Verfahren gemäss einem der Ansprüche 1 bis 5, dadurch gekennzeichnet, dass die Komponente (c) ein Ethylenoxidaddukt der Formel

(12) 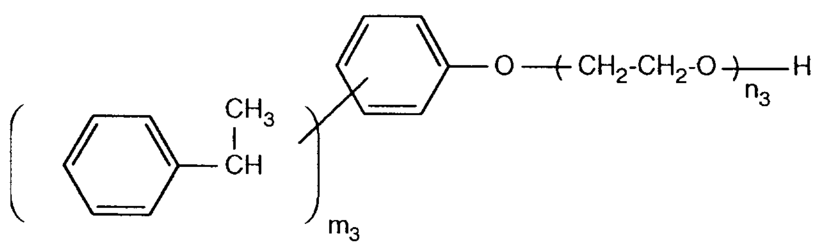

ist, worin $m_3$ 1 bis 3 und $n_3$ 8 bis 30 bedeuten.

**17.** Verfahren gemäss einem der Ansprüche 1 bis 5, dadurch gekennzeichnet, dass die anionische Komponente (b) ein Kondensationsprodukt von Formaldehyd mit einer aromatischen Sulfonsäure und die nichtionische Komponente (c) ein Alkylenoxidaddukt der in Anspruch 14 definierten Formel (11), sind.

**18.** Verfahren gemäss Anspruch 17, dadurch gekennzeichnet, dass die nichtionische Komponente (c) eine Mischung aus einem Alkylenoxidaddukt der in Anspruch 14 definierten Formel (11) und einem Alkylenoxid-Kondensationsprodukt (cc), ist.

**19.** Verfahren gemäss Anspruch 18, dadurch gekennzeichnet, dass die nichtionische Komponente (c) ein Alkylenoxid-Kondensationsprodukt (cc) ist.

**20.** Verfahren gemäss einem der Ansprüche 1 bis 5, dadurch gekennzeichnet, dass die anionische Komponente (b) ein Kondensationsprodukt von Formaldehyd mit einer aromatischen Sulfonsäure und die nichtionische Komponente (c) ein Alkylenoxid-Addukt an Sorbitanester, sind.

**21.** Verfahren gemäss Anspruch 15, dadurch gekennzeichnet, dass die anionische Komponente (b) ein saurer Phosphorsäureester oder dessen Salz des Oxalkylierungsproduktes der in Anspruch 9 definierten Formel (7) und die nichtionogene Komponente (c) ein Alkylenoxidaddukt der in Anspruch 14 definierten Formel (11), sind.

**22.** Verfahren gemäss einem der Ansprüche 1 bis 21, dadurch gekennzeichnet, dass man zusätzlich als Komponente (d) ein Stabilisierungs- oder Verdickungsmittel verwendet.

**23.** Verfahren gemäss Anspruch 22, dadurch gekennzeichnet, dass die Komponente (d) eine 0,5 bis 10 %ige wässrige Lösung oder Dispersion einer polymerisierten ethylenisch-ungesättigten Mono- oder Dicarbonsäure von 3 bis 5 Kohlenstoffatomen, insbesondere Polyacrylsäure ist.

**24.** Verfahren gemäss Anspruch 22, dadurch gekennzeichnet, dass die Komponente (d) ein Polysaccharid ist.

**25.** Verfahren gemäss einem der Ansprüche 1 bis 24, dadurch gekennzeichnet, dass man zusätzlich ein Antischaummittel verwendet.

**26.** Verfahren gemäss Anspruch 25, dadurch gekennzeichnet, dass das Antischaummittel ein Alkylendiamid der Formel

(14) $V_1$-CO-NH-Q-NH-CO-$V_2$

ist, in der $V_1$ und $V_2$, unabhängig voneinander, je einen aliphatischen Rest mit 9 bis 23 Kohlenstoffatomen und Q einen Alkylenrest mit 1 bis 8 Kohlenstoffatomen bedeuten.

**27.** Verfahren gemäss einem der Ansprüche 1 bis 26, dadurch gekennzeichnet, dass man zusätzlich ein Konservierungsmittel und/oder ein Gefrierschutzmittel verwendet.

**28.** Verfahren gemäss einem der Ansprüche 1 bis 27, dadurch gekennzeichnet, dass die Komponente (a) ein Gemisch aus einer Benzotriazolverbindung der Formel (1) und einer Benzotriazolverbindung der Formel

(15) 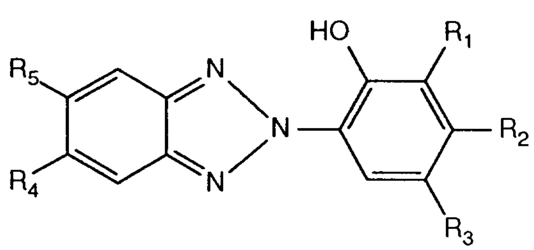

worin

- $R_1$ Wasserstoff, $C_1$-$C_{12}$-Alkyl, Chlor, $C_5$-$C_6$-Cycloalkyl oder $C_7$-$C_9$-Phenylalkyl,
- $R_2$ Wasserstoff, $C_1$-$C_4$-Alkyl, $C_1$-$C_4$-Alkoxy, Chlor oder Hydroxy,
- $R_3$ $C_1$-$C_{12}$-Alkyl, $C_1$-$C_4$-Alkoxy, Phenyl, ($C_1$-$C_8$-Alkyl)-phenyl, $C_5$-$C_6$-Cycloalkyl, $C_2$-$C_9$-Alkoxycarbonyl, Chlor, Carboxyethyl oder $C_7$-$C_9$-Phenylalkyl,
- $R_4$ Wasserstoff, Chlor, $C_1$-$C_4$-Alkyl, $C_1$-$C_4$-Alkoxy oder $C_2$-$C_9$-Alkoxycarbonyl, und
- $R_5$ Wasserstoff oder Chlor

bedeuten, ist.

**29.** Verfahren gemäss einem der Ansprüche 1 bis 27, dadurch gekennzeichnet, dass die Komponente (a) ein Gemisch aus einer Benzotriazolverbindung der Formel (1) und einer Benzophenonverbindung der

Formel

(16)

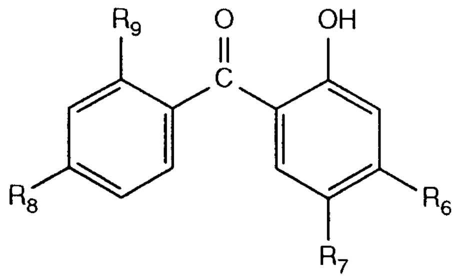

worin

$R_6$ Wasserstoff, Hydroxy, $C_1$-$C_{14}$-Alkoxy oder Phenoxy,
$R_7$ Wasserstoff, Halogen oder $C_1$-$C_4$-Alkyl
$R_8$ Wasserstoff, Hydroxy oder $C_1$-$C_4$-Alkoxy und
$R_9$ Wasserstoff oder Hydroxy

bedeuten, ist.

**30.** Verfahren gemäss einem der Ansprüche 1 bis 27, dadurch gekennzeichnet, dass die Komponente (a) ein Gemisch aus einer Benzotriazolverbindung der Formel (1), einer Benzotriazolverbindung der Formel (15) und einer Benzophenonverbindung der Formel (16), ist.

**31.** Verfahren gemäss Anspruch 1, dadurch gekennzeichnet, dass man, bezogen auf die gesamte Dispersion,
5-50 Gewichtsprozent der Komponente (a),
0-18 Gewichtsprozent der Komponente (b),
0-18 Gewichtsprozent der Komponente (c),
0 - 5 Gewichtsprozent der Komponente (d),
0 - 8 Gewichtsprozent einer weiteren, von der Komponente (b) verschiedenen anionischen Komponente,
0 - 8 Gewichtsprozent einer weiteren von Komponente (c) verschiedenen nichtionischen Komponente,
0 - 7 Gewichtsprozent eines Antischaummittel,
0 - 1 Gewichtsprozent eines Konservierungsmittels und
0-20 Gewichtsprozent eines Gefrierschutzmittels,
verwendet.

**32.** Verwendung der wässrigen Dispersion gemäss einem der Ansprüche 1 bis 31 beim Färben von synthetischen Fasermaterialien, insbesondere Polyesterfasern oder säuremodifizierten Polyesterfasern.

**33.** Verfahren zum Färben von Synthesefasern, Vorzugsweise Polyesterfasern oder säuremodifizierte Polyesterfasern, enthaltendem Textilmaterial mit Dispersionsfarbstoffen bzw. kationischen Farbstoffen, dadurch gekennzeichnet, dass man dieses Material in Gegenwart einer wässrigen Dispersion einer Benzotriazolverbindung gemäss einem der Ansprüche 1 bis 31 färbt.

## Claims

### Claims for the following Contracting States : CH, DE, FR, GB, IT, LI, SE

**1.** An aqueous dispersion of a 2-(2'-hydroxyphenyl)benzotriazole compound, containing

(a) from 5 to 50 per cent by weight of a benzotriazole compound of the formula

(1) 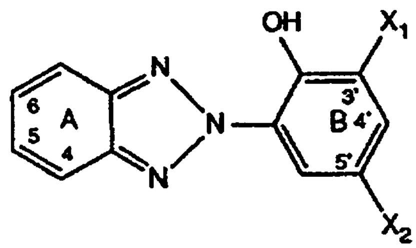

where

one of the two substituents $X_1$ and $X_2$ is the group

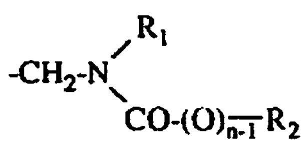

wherein

$R_1$ is hydrogen, $C_1$-$C_{10}$alkyl, $C_5$-$C_8$cycloalkyl, $C_7$-$C_{10}$aralkyl or $C_6$-$C_{10}$aryl,

$R_2$ is $C_1$-$C_{20}$alkyl, $C_2$-$C_{17}$alkenyl, $C_5$-$C_8$cycloalkyl, $C_7$-$C_{10}$aralkyl, $C_8$-$C_{10}$aralkenyl or $C_6$-$C_{10}$aryl, and

n is 1 or 2, and when n is 1

$R_1$ and $R_2$ together with the ring bridge member

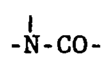

may also form a monocyclic or polycyclic nitrogen-containing heterocycle, in which case $R_1$ is -CO- or unsubstituted or $C_1$-$C_4$alkyl-substituted methylene and $R_2$ is $C_2$-$C_4$alkylene, $C_2$-$C_4$alkenylene, $C_6$-$C_{10}$arylene or di-, tetra- or hexahydro-$C_6$-$C_{10}$arylene, the free valencies of the cyclic radicals always being ortho to one another, $C_1$-$C_4$alkyl, $C_1$-$C_4$alkoxy, halogen, $C_6$-$C_{10}$aryl, $C_7$-$C_{10}$aralkyl or $C_5$-$C_8$cycloalkyl, and

the other of the two substituents $X_1$ and $X_2$ is hydrogen, $C_1$-$C_4$alkyl, $C_1$-$C_4$alkoxy, halogen, $C_6$-$C_{10}$aryl, $C_7$-$C_{10}$aralkyl, $C_5$-$C_8$cycloalkyl or the group

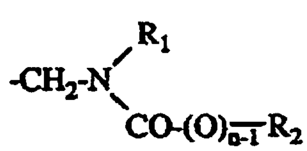

the ring A can be substituted in positions 4, 5 and 6 by $C_1$-$C_4$alkyl, $C_1$-$C_4$alkoxy, carboxyl, $C_1$-$C_4$alkyl carboxylate, carboxamide, $C_1$-$C_4$alkyl sulfonate, $C_1$-$C_4$alkylsulfonyl or halogen, and

the ring B can be substituted in position 4' by $C_1$-$C_4$alkyl, $C_1$-$C_4$alkoxy, halogen, $C_6$-$C_{10}$aryl, $C_7$-$C_{10}$aralkyl or $C_5$-$C_8$cycloalkyl;

or one of the two substituents $X_1$ and $X_2$ is $CH_3$-$(CH_2)_3$-$CH(C_2H_5)$-CO-NH-$CH_2$-and the other of the two substituents $X_1$ and $X_2$ is $C_6H_5$-$CH_2$-$C_6H_4$-, $C_6H_5$-$C_6H_4$- or

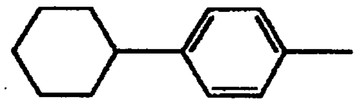

and the rings A and B are, moreover, unsubstituted; or one of the two substituents $X_1$ and $X_2$ is $ClCH_2$-CO-NH-$CH_2$- and the other of the two substituents $X_1$ and $X_2$ is $C_6H_5$-$CH_2$-$C_6H_4$- or $C_6H_5$-$C_6H_4$- and the rings A and B are, moreover, unsubstituted; or one of the two substituents $X_1$ and $X_2$ is $C_8H_{17}OOC$-NH-$CH_2$- and the other of the two substituents $X_1$ and $X_2$ is

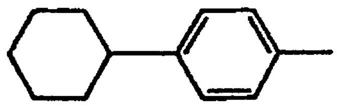

the ring A is substituted in positions 4 and 6 by methyl and the ring B is, moreover, unsubstituted,
(b) from 0 to 18 per cent by weight of an anionic compound, and
(c) from 0 to 18 per cent by weight of a nonionic compound, with the proviso that of the components (b) and (c) at least one must be present.

**2.** A dispersion according to claim 1, wherein component (a) conforms to the formula (1) where the heterocycle formed by $R_1$ and $R_2$ together with the ring bridge member

$$-\overset{|}{N}-CO-$$

is a lactam ring.

**3.** A dispersion according to claim 1, wherein component (a) conforms to the formula (1) where the heterocycle formed by $R_1$ and $R_2$ together with the ring bridge member

$$-\overset{|}{N}-CO-$$

is 2,5-dioxopyrrolidine or 3,4-di-, 3,4,5,6-tetra- or 3,4,5,6,8,9-hexa-hydrophthalimide.

**4.** A dispersion according to claim 1, wherein component (a) conforms to the formula (1) where one of $X_1$ and $X_2$ is a group of the formula

(2) 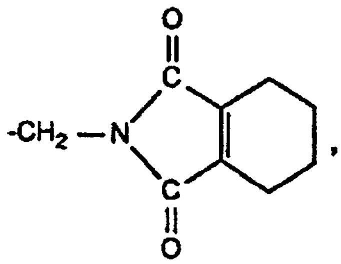

(3) 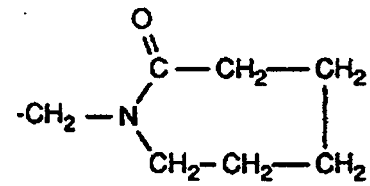 or

(4) 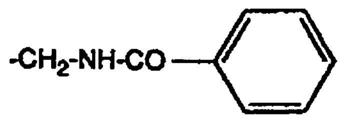

and the other is hydrogen or $C_1$-$C_4$alkyl and the ring A is unsubstituted or substituted by chlorine.

**5.** A dispersion according to any one of claims 1 to 4, wherein component (b) is a compound selected from the group consisting of

(ba) acid esters or salts thereof of alkylene oxide adducts of the formula

(5) 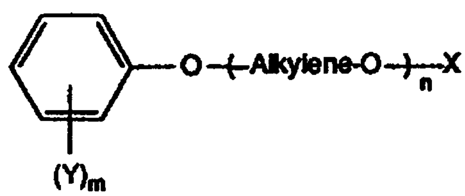

where X is the acid radical of an inorganic oxygen-containing acid, for example sulfuric acid or preferably phosphoric acid, or else the radical of an organic acid and

Y is $C_1$-$C_{12}$alkyl, aryl or aralkyl, "alkylene" is ethylene or propylene, m is from 1 to 4 and n is from 4 to 50, and where when m is from 2 to 4 Y can have more than one meaning,

(bb) polystyrenesulfonates,

(bc) fatty acid taurides,

(bd) alkylated oxydiphenyl-mono- or -di-sulfonates,

(be) sulfonates of polycarboxylic esters,

(bf) acid esters of an organic dicarboxylic acid or of an inorganic polybasic acid with addition products of from 1 to 60, preferably from 2 to 30, mol of ethylene oxide and/or propylene oxide with fatty amines, fatty amides, fatty acids or fatty alcohols each of from 8 to 22 carbon atoms or with trihydric, tetrahydric, pentahydric or hexahydric alkanols of from 3 to 6 carbon atoms,

(bg) ligninsulfonates and

(bh) formaldehyde condensation products.

**6.** A dispersion according to any one of claims 1 to 4, wherein component (b) is an anionic compound of the formula (5) where Y is $C_4$-$C_{12}$alkyl, benzyl or $\alpha$-methylbenzyl.

**7.** A dispersion according to any one of claims 1 to 4, wherein component (b) is a compound of the formula

(6)

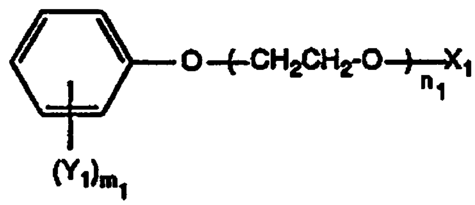

where $Y_1$ is $C_4$-$C_{12}$alkyl, phenyl, tolyl, phenyl-$C_1$-$C_3$alkyl or tolyl-$C_1$-$C_3$alkyl, $X_1$ is an acid radical derived from sulfuric acid or orthophosphoric acid, $m_1$ is from 1 to 3 and $n_1$ is from 4 to 40, and where when $m_1$ is 2 or 3 $Y_1$ can have more than one meaning.

**8.** A dispersion according to any one of claims 1 to 4, wherein component (b) is an acid phosphoric ester or salt thereof of the alkoxylation product of from 6 to 30 mol of ethylene oxide with 1 mol of 4-nonylphenol or dinonylphenol or with 1 mol of a compound prepared by addition of from 1 to 3 mol of styrene, α-methylstyrene or vinyltoluene onto 1 mol of phenol, cresol or xylenol.

**9.** A dispersion according to any one of claims 1 to 4, wherein component (b) is an acid phosphoric ester or salt thereof of the alkoxylation product of the formula

(7)

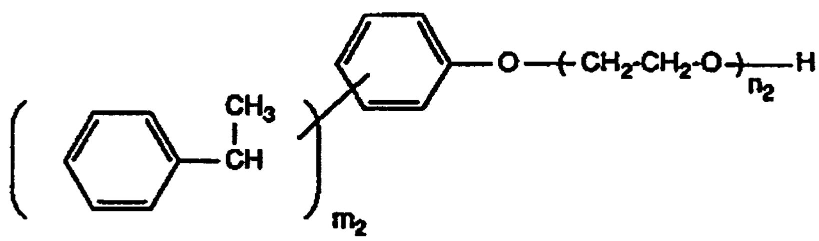

where $m_2$ is from 1 to 3 and $n_2$ is from 8 to 30.

**10.** A dispersion according to any one of claims 1 to 4, containing as anionic component (b) a condensation product of formaldehyde with an aromatic sulfonic acid.

**11.** A dispersion according to claim 10, containing as anionic component (b) a condensation product of formaldehyde with (ditolyl ether) sulfonate.

**12.** A dispersion according to any one of claims 1 to 4, wherein anionic component (b) is a mixture of components (ba) to (bh).

**13.** A dispersion according to claim 12, wherein anionic component (b) is a mixture of a condensation product of formaldehyde with a (ditolyl ether)sulfonate and an acid phosphoric ester or salt thereof of the alkoxylation product of the formula (7) defined in claim 9.

**14.** A dispersion according to any one of claims 1 to 5, containing as component (c) a nonionic compound selected from the group consisting of

(ca) alkylene oxide adducts of the formula

(11)

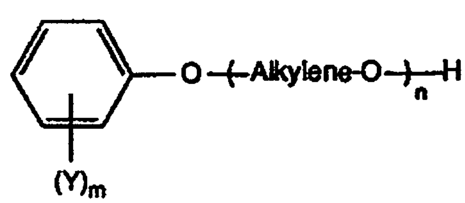

where Y is $C_1$-$C_{12}$alkyl, aryl or aralkyl, "alkylene" is ethylene or propylene, m is from 1 to 4 and n is from 4 to 50, and where when m is from 2 to 4 Y can have more than one meaning,

(cb) alkylene oxide adducts with

(cba) saturated or unsaturated 1-6-hydric aliphatic alcohols,

(cbb) fatty acids,

(cbc) fatty amines,

(cbd) fatty amides,

(cbe) diamines,

(cbf) sorbitan esters,

(cc) alkylene oxide condensation products (block polymers),

(cd) polymers of vinylpyrrolidone, vinyl acetate or vinyl alcohol, and

(ce) co- or terpolymers of vinylpyrrolidone with vinyl acetate and/or vinyl alcohol.

**15.** A dispersion according to any one of claims 1 to 5, wherein component (c) is an adduct of from 8 to 30 mol of ethylene oxide with 1 mol of 4-nonylphenol, with 1 mol of dinonylphenol or with 1 mol of compounds prepared by addition of from 1 to 3 mol of styrenes onto 1 mol of phenol.

**16.** A dispersion according to any one of claims 1 to 5, wherein component (c) is an ethylene oxide adduct of the formula

(12) 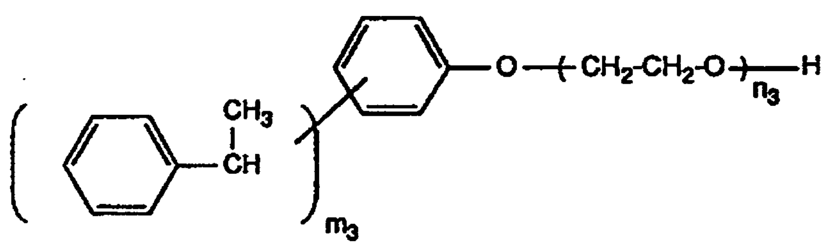

where $m_3$ is from 1 to 3 and $n_3$ is from 8 to 30.

**17.** A dispersion according to any one of claims 1 to 5, containing as anionic component (b) a condensation product of formaldehyde with an aromatic sulfonic acid and as nonionic component (c) an alkylene oxide adduct of the formula (11) defined in claim 14.

**18.** A dispersion according to claim 17, containing as nonionic component (c) a mixture of an alkylene oxide adduct of the formula (11) defined in claim 14 and an alkylene oxide condensation product (cc).

**19.** A dispersion according to claim 18, containing as nonionic component (c) an alkylene oxide condensation product (cc).

**20.** A dispersion according to any one of claims 1 to 5, containing as anionic component (b) a condensation product of formaldehyde with an aromatic sulfonic acid and as nonionic component (c) an alkylene oxide adduct of sorbitan ester.

**21.** A dispersion according to claim 15, containing as anionic component (b) an acid phosphoric ester or salt thereof of the alkoxylation product of the formula (7) defined in claim 9 and as nonionic component (c) an alkylene oxide adduct of the formula (11) defined in claim 14.

**22.** A dispersion according to any one of claims 1 to 21, additionally containing as component (d) a stabilising or thickening agent.

**23.** A dispersion according to claim 22, wherein component (d) is a from 0.5 to 10 % aqueous solution or dispersion of a polymerised ethylenically unsaturated mono- or dicarboxylic acid of from 3 to 5 carbon atoms, in particular polyacrylic acid.

**24.** A dispersion according to claim 22, wherein component (d) is a polysaccharide.

**25.** A dispersion according to any one of claims 1 to 24, additionally containing an antifoam.

**26.** A dispersion according to claim 25, wherein the antifoam is an alkylenediamide of the formula

(14) $V_1$-CO-NH-Q-NH-CO-$V_2$

where $V_1$ and $V_2$ are each independently of the other an aliphatic radical of from 9 to 23 carbon atoms and Q is an alkylene radical of from 1 to 8 carbon atoms.

**27.** A dispersion according to any one of claims 1 to 26, additionally containing a preservative and/or an antifreeze.

**28.** A dispersion according to any one of claims 1 to 27, containing as component (a) a mixture of a benzotriazole compound of the formula (1) and a benzotriazole compound of the formula

(15) 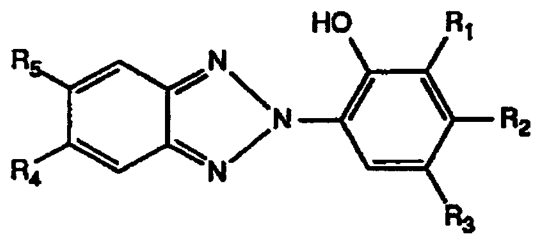

where $R_1$ is hydrogen, $C_1$-$C_{12}$alkyl, chlorine, $C_5$-$C_6$cycloalkyl or $C_7$-$C_9$phenylalkyl, $R_2$ is hydrogen, $C_1$-$C_4$alkyl, $C_1$-$C_4$alkoxy, chlorine or hydroxyl, $R_3$ is $C_1$-$C_{12}$alkyl, $C_1$-$C_4$alkoxy, phenyl, ($C_1$-$C_8$alkyl)phenyl, $C_5$-$C_6$cycloalkyl, $C_2$-$C_9$alkoxycarbonyl, chlorine, carboxyethyl or $C_7$-$C_9$phenylalkyl, $R_4$ is hydrogen, chlorine, $C_1$-$C_4$alkyl, $C_1$-$C_4$alkoxy or $C_2$-$C_9$alkoxycarbonyl, and $R_5$ is hydrogen or chlorine.

**29.** A dispersion according to any one of claims 1 to 27, containing as component (a) a mixture of a benzotriazole compound of the formula (1) and a benzophenone compound of the formula

(16) 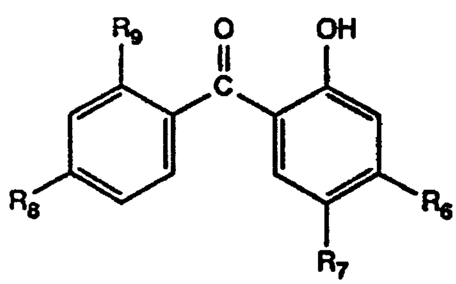

where $R_6$ is hydrogen, hydroxyl, $C_1$-$C_{14}$alkoxy or phenoxy, $R_7$ is hydrogen, halogen or $C_1$-$C_4$alkyl, $R_8$ is hydrogen, hydroxyl or $C_1$-$C_4$alkoxy, and $R_9$ is hydrogen or hydroxyl.

**30.** A dispersion according to any one of claims 1 to 27, containing as component (a) a mixture of a benzotriazole compound of the formula (1), a benzotriazole compound of the formula (15) and a benzophenone compound of the formula (16).

**31.** A dispersion according to claim 1, containing, based on the entire dispersion,
5-50 per cent by weight of component (a),
0-18 per cent by weight of component (b),
0-18 per cent by weight of component (c),
0-5 per cent by weight of component (d),
0-8 per cent by weight of a further anionic component other than component (b),
0-8 per cent by weight of a further nonionic component other than component (c),

0-7 per cent by weight of an antifoam,
0-1 per cent by weight of a preservative, and
0-20 per cent by weight of an antifreeze.

**32.** The use of the aqueous dispersion according to any one of claims 1 to 31 in the dyeing of synthetic fibre materials in particular polyester fibres or acid-modified polyester fibres.

**33.** A process for dyeing textile material containing synthetic fibres, preferably polyester fibres or acid-modified polyester fibres, with disperse dyes or cationic dyes, which comprises dyeing this material in the presence of an aqueous dispersion of a benzotriazole compound according to any one of claims 1 to 31.

**Claims for the following Contracting State : ES**

**1.** A process for preparing an aqueous dispersion of a 2-(2'-hydroxyphenyl)benzotriazole compound, which comprises mixing together

(a) from 5 to 50 per cent by weight of a benzotriazole compound of the formula

(1) 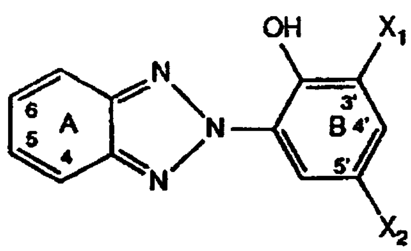

where
one of the two substituents $X_1$ and $X_2$ is the group

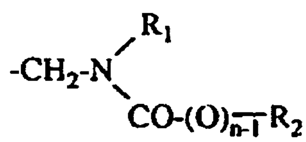

wherein
$R_1$ is hydrogen, $C_1$-$C_{10}$alkyl, $C_5$-$C_8$cycloalkyl, $C_7$-$C_{10}$aralkyl or $C_6$-$C_{10}$aryl,
$R_2$ is $C_1$-$C_{20}$alkyl, $C_2$-$C_{17}$alkenyl, $C_5$-$C_8$cycloalkyl, $C_7$-$C_{10}$aralkyl, $C_8$-$C_{10}$aralkenyl or $C_6$-$C_{10}$aryl, and
n is 1 or 2, and when n is 1
$R_1$ and $R_2$ together with the ring bridge member

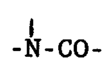

may also form a monocyclic or polycyclic nitrogen-containing heterocycle, in which case $R_1$ is -CO- or unsubstituted or $C_1$-$C_4$alkyl-substituted methylene and $R_2$ is $C_2$-$C_4$alkylene, $C_2$-$C_4$alkenylene, $C_6$-$C_{10}$arylene or di-, tetra- or hexahydro-$C_6$-$C_{10}$arylene, the free valencies of the cyclic radicals always being ortho to one another, $C_1$-$C_4$alkyl, $C_1$-$C_4$alkoxy, halogen, $C_6$-$C_{10}$aryl, $C_7$-$C_{10}$aralkyl or $C_5$-$C_8$cycloalkyl, and
the other of the two substituents $X_1$ and $X_2$ is hydrogen, $C_1$-$C_4$alkyl, $C_1$-$C_4$alkoxy, halogen, $C_6$-$C_{10}$aryl, $C_7$-$C_{10}$aralkyl, $C_5$-$C_8$cycloalkyl or the group

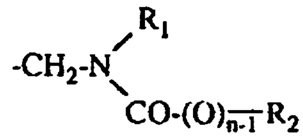

the ring A can be substituted in positions 4, 5 and 6 by $C_1$-$C_4$alkyl, $C_1$-$C_4$alkoxy, carboxyl, $C_1$-$C_4$alkyl carboxylate, carboxamide, $C_1$-$C_4$alkyl sulfonate, $C_1$-$C_4$alkylsulfonyl or halogen, and
the ring B can be substituted in position 4' by $C_1$-$C_4$alkyl, $C_1$-$C_4$alkoxy, halogen, $C_6$-$C_{10}$aryl, $C_7$-$C_{10}$aralkyl or $C_5$-$C_8$cycloalkyl;
or one of the two substituents $X_1$ and $X_2$ is $CH_3$-$(CH_2)_3$-$CH(C_2H_5)$-CO-NH-$CH_2$-and the other of the two substituents $X_1$ and $X_2$ is $C_6H_5$-$CH_2$-$C_6H_4$-, $C_6H_5$-$C_6H_4$- or

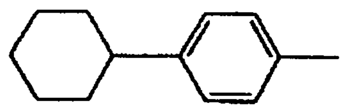

and the rings A and B are, moreover, unsubstituted; or one of the two substituents $X_1$ and $X_2$ is $ClCH_2$-CO-NH-$CH_2$- and the other of the two substituents $X_1$ and $X_2$ is $C_6H_5$-$CH_2$-$C_6H_4$- or $C_6H_5$-$C_6H_4$- and the rings A and B are, moreover, unsubstituted; or one of the two substituents $X_1$ and $X_2$

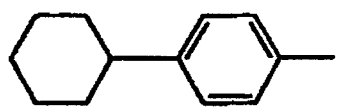

is the ring A is substituted in positions 4 and 6 by methyl and the ring B is, moreover, unsubstituted,
(b) from 0 to 18 per cent by weight of an anionic compound, and
(c) from 0 to 18 per cent by weight of a nonionic compound, with the proviso that of the compounds (b) and (c) at least one must be present.

**2.** A process according to claim 1, wherein component (a) conforms to the formula (1) where the heterocycle formed by $R_1$ and $R_2$ together with the ring bridge member

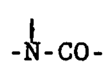

is a lactam ring.

**3.** A process according to claim 1, wherein component (a) conforms to the formula (1) where the heterocycle formed by $R_1$ and $R_2$ together with the ring bridge member

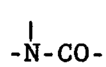

is 2,5-dioxopyrrolidine or 3,4-di-, 3,4,5,6-tetra- or 3,4,5,6,8,9-hexa-hydrophthalimide.

**4.** A process according to claim 1, wherein component (a) conforms to the formula (1) where one of $X_1$ and $X_2$ is a group of the formula

(2) 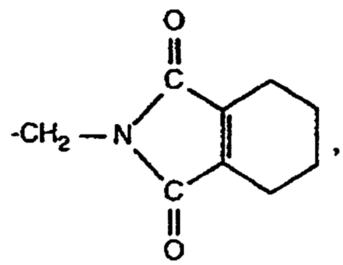

(3) 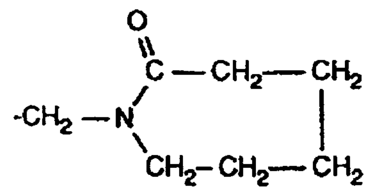 or

(4) 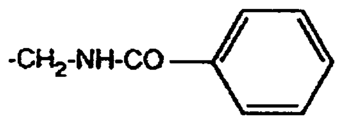

and the other is hydrogen or $C_1$-$C_4$alkyl and the ring A is unsubstituted or substituted by chlorine.

**5.** A process according to any one of claims 1 to 4, wherein component (b) is a compound from the group consisting of

(ba) acid esters or salts thereof of alkylene oxide adducts of the formula

(5) 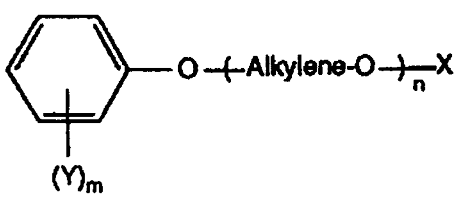

where X is the acid radical of an inorganic oxygen-containing acid, for example sulfuric acid or preferably phosphoric acid, or else the radical of an organic acid and Y is $C_1$-$C_{12}$alkyl, aryl or aralkyl, "alkylene" is ethylene or propylene, m is from 1 to 4 and n is from 4 to 50, and where when m is from 2 to 4 Y can have more than one meaning,

(bb) polystyrenesulfonates,

(bc) fatty acid taurides,

(bd) alkylated oxydiphenyl-mono- or -di-sulfonates,

(be) sulfonates of polycarboxylic esters,

(bf) acid esters of an organic dicarboxylic acid or of an inorganic polybasic acid with addition products of from 1 to 60, preferably from 2 to 30, mol of ethylene oxide and/or propylene oxide with fatty amines, fatty amides, fatty acids or fatty alcohols each of from 8 to 22 carbon atoms or with trihydric, tetrahydric, pentahydric or hexahydric alkanols of from 3 to 6 carbon atoms,

(bg) ligninsulfonates and

(bh) formaldehyde condensation products.

**6.** A process according to any one of claims 1 to 4, wherein component (b) is an anionic compound of the formula (5) where Y is $C_4$-$C_{12}$alkyl, benzyl or $\alpha$-methylbenzyl.

**7.** A process according to any one of claims 1 to 4, wherein component (b) is a compound of the formula

(6) 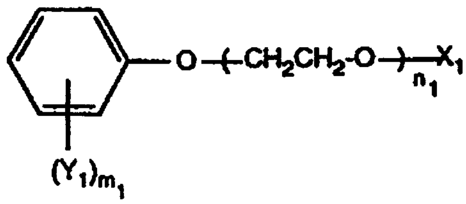

where $Y_1$ is $C_4$-$C_{12}$alkyl, phenyl, tolyl, phenyl-$C_1$-$C_3$alkyl or tolyl-$C_1$-$C_3$alkyl, $X_1$ is an acid radical derived from sulfuric acid or orthophosphoric acid, $m_1$ is from 1 to 3 and $n_1$ is from 4 to 40, and where when $m_1$ is 2 or 3 $Y_1$ can have more than one meaning.

**8.** A process according to any one of claims 1 to 4, wherein component (b) is an acid phosphoric ester or salt thereof of the alkoxylation product of from 6 to 30 mol of ethylene oxide with 1 mol of 4-nonylphenol or dinonylphenol or with 1 mol of a compound prepared by addition of from 1 to 3 mol of styrene, α-methylstyrene or vinyltoluene onto 1 mol of phenol, cresol or xylenol.

**9.** A process according to any one of claims 1 to 4, wherein component (b) is an acid phosphoric ester or salt thereof of the alkoxylation product of the formula

(7) 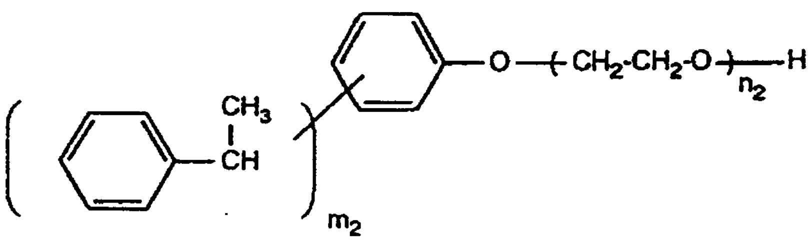

where $m_2$ is from 1 to 3 and $n_2$ is from 8 to 30.

**10.** A process according to any one of claims 1 to 4, wherein anionic component (b) is a condensation product of formaldehyde with an aromatic sulfonic acid.

**11.** A process according to claim 10, wherein anionic component (b) is a condensation product of formaldehyde with (ditolyl ether) sulfonate.

**12.** A process according to any one of claims 1 to 4, wherein anionic component (b) is a mixture of components (ba) to (bh).

**13.** A process according to claim 12, wherein anionic component (b) is a mixture of a condensation product of formaldehyde with a (ditolyl ether)sulfonate and an acid phosphoric ester or salt thereof of the alkoxylation product of the formula (7) defined in claim 9.

**14.** A process according to any one of claims 1 to 5, wherein component (c) is a nonionic compound selected from the group consisting of

(ca) alkylene oxide adducts of the formula

(11) 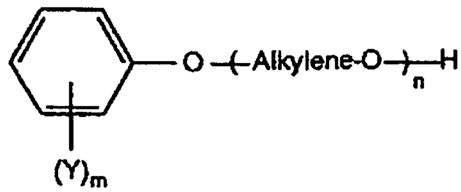

where Y is $C_1$-$C_{12}$alkyl, aryl or aralkyl, "alkylene" is ethylene or propylene, m is from 1 to 4 and n is from 4 to 50, and where when m is from 2 to 4 Y can have more than one meaning,

(cb) alkylene oxide adducts with

(cba) saturated or unsaturated 1-6-hydric aliphatic alcohols,

(cbb) fatty acids,

(cbc) fatty amines,

(cbd) fatty amides,

(cbe) diamines,

(cbf) sorbitan esters,

(cc) alkylene oxide condensation products (block polymers),

(cd) polymers of vinylpyrrolidone, vinyl acetate or vinyl alcohol, and

(ce) co- or terpolymers of vinylpyrrolidone with vinyl acetate and/or vinyl alcohol.

**15.** A process according to any one of claims 1 to 5, wherein component (c) is an adduct of from 8 to 30 mol of ethylene oxide with 1 mol of 4-nonylphenol, with 1 mol of dinonylphenol or with 1 mol of compounds prepared by addition of from 1 to 3 mol of styrenes onto 1 mol of phenol.

**16.** A process according to any one of claims 1 to 5, wherein component (c) is an ethylene oxide adduct of the formula

(12) 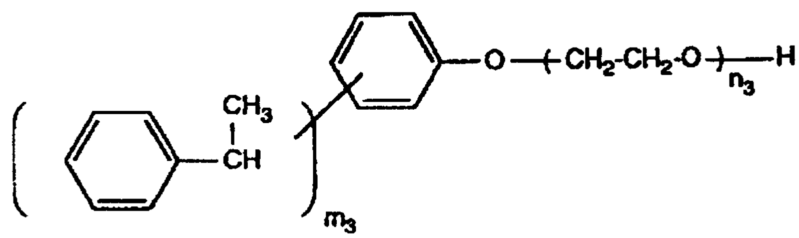

where $m_3$ is from 1 to 3 and $n_3$ is from 8 to 30.

**17.** A process according to any one of claims 1 to 5, wherein anionic component (b) is a condensation product of formaldehyde with an aromatic sulfonic acid and nonionic component (c) is an alkylene oxide adduct of the formula (11) defined in claim 14.

**18.** A process according to claim 17, wherein nonionic component (c) is a mixture of an alkylene oxide adduct of the formula (11) defined in claim 14 and an alkylene oxide condensation product (cc).

**19.** A process according to claim 18, wherein nonionic component (c) is an alkylene oxide condensation product (cc).

**20.** A process according to any one of claims 1 to 5, wherein anionic component (b) is a condensation product of formaldehyde with an aromatic sulfonic acid and nonionic component (c) is an alkylene oxide adduct of sorbitan ester.

**21.** A process according to claim 15, wherein anionic component (b) is an acid phosphoric ester or salt thereof of the alkoxylation product of the formula (7) defined in claim 9 and nonionic component (c) is an alkylene oxide adduct of the formula (11) defined in claim 14.

**22.** A process according to any one of claims 1 to 21, which additionally comprises using as component (d) a stabilising or thickening agent.

**23.** A process according to claim 22, wherein component (d) is a from 0.5 to 10 % aqueous solution or dispersion of a polymerised ethylenically unsaturated mono- or dicarboxylic acid of from 3 to 5 carbon atoms, in particular polyacrylic acid.

**24.** A process according to claim 22, wherein component (d) is a polysaccharide.

**25.** A process according to any one of claims 1 to 24, which additionally comprises an antifoam.

**26.** A process according to claim 25, wherein the antifoam is an alkylenediamide of the formula

(14) $V_1$-CO-NH-Q-NH-CO-$V_2$

where $V_1$ and $V_2$ are each independently of the other an aliphatic radical of from 9 to 23 carbon atoms and Q is an alkylene radical of from 1 to 8 carbon atoms.

**27.** A process according to any one of claims 1 to 26, which additionally comprises using a preservative and/or an antifreeze.

**28.** A process according to any one of claims 1 to 27, wherein component (a) is a mixture of a benzotriazole compound of the formula (1) and a benzotriazole compound of the formula

(15)

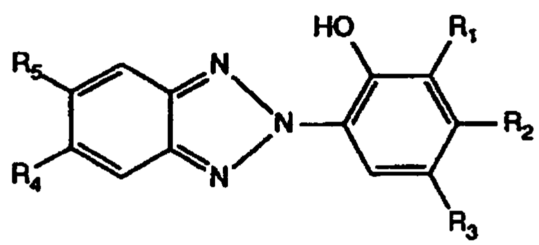

where $R_1$ is hydrogen, $C_1$-$C_{12}$alkyl, chlorine, $C_5$-$C_6$cycloalkyl or $C_7$-$C_9$phenylalkyl, $R_2$ is hydrogen, $C_1$-$C_4$alkyl, $C_1$-$C_4$alkoxy, chlorine or hydroxyl, $R_3$ is $C_1$-$C_{12}$alkyl, $C_1$-$C_4$alkoxy, phenyl, ($C_1$-$C_8$alkyl)phenyl, $C_5$-$C_6$cycloalky], $C_2$-$C_9$alkoxycarbonyl, chlorine, carboxyethyl or $C_7$-$C_9$phenylalkyl, $R_4$ is hydrogen, chlorine, $C_1$-$C_4$alkyl, $C_1$-$C_4$alkoxy or $C_2$-$C_9$alkoxycarbonyl, and $R_5$ is hydrogen or chlorine.

**29.** A process according to any one of claims 1 to 27, wherein component (a) is a mixture of a benzotriazole compound of the formula (1) and a benzophenone compound of the formula

(16)

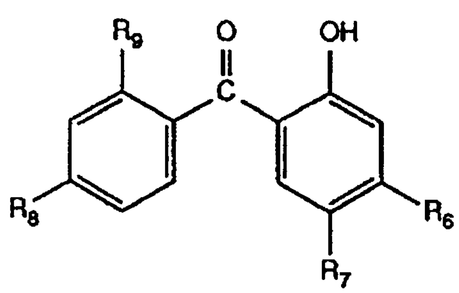

where $R_6$ is hydrogen, hydroxyl, $C_1$-$C_{14}$alkoxy or phenoxy, $R_7$ is hydrogen, halogen or $C_1$-$C_4$alkyl, $R_8$

is hydrogen, hydroxyl or $C_1$-$C_4$alkoxy, and $R_9$ is hydrogen or hydroxyl.

**30.** A process according to any one of claims 1 to 27, wherein component (a) is a mixture of a benzotriazole compound of the formula (1), a benzotriazole compound of the formula (15) and a benzophenone compound of the formula (16).

**31.** A process according to claim 1, wherein, based on the entire dispersion, the dispersion is prepared using
5-50 per cent by weight of component (a),
0-18 per cent by weight of component (b),
0-18 per cent by weight of component (c),
0-5 per cent by weight of component (d),
0-8 per cent by weight of a further anionic component other than component (b),
0-8 per cent by weight of a further nonionic component other than component (c),
0-7 per cent by weight of an antifoam,
0-1 per cent by weight of a preservative, and
0-20 per cent by weight of an antifreeze.

**32.** The use of the aqueous dispersion according to any one of claims 1 to 31 in the dyeing of synthetic fibre materials, in particular polyester fibres or acid-modified polyester fibres.

**33.** A process for dyeing textile material containing synthetic fibres, preferably polyester fibres or acid-modified polyester fibres, with disperse dyes or cationic dyes, which comprises dyeing this material in the presence of an aqueous dispersion of a benzotriazole compound according to any one of claims 1 to 31.

**Revendications**
**Revendications pour les Etats contractants suivants : CH, DE, FR, GB, IT, LI, SE**

**1.** Dispersion aqueuse d'un composé de type 2-(2'-hydroxyphényl)benzotriazole, caractérisée en ce qu'elle contient
(a) de 5 à 50 % en poids d'un composé de type benzotriazole de formule

(1) 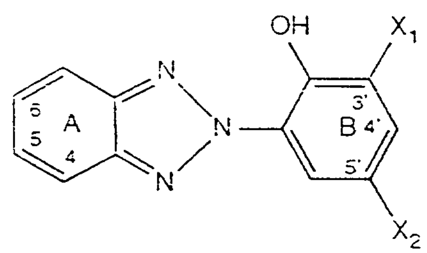

dans laquelle
un des substituants $X_1$ et $X_2$ représente le groupe

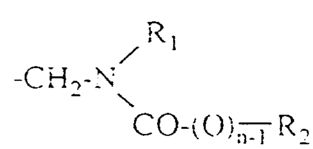

dans laquelle
$R_1$ représente un atome d'hydrogène, un groupe alkyle en $C_{1-10}$, cycloalkyle en $C_{5-8}$, aralkyle en $C_{7-10}$ ou aryle en $C_{6-10}$,
$R_2$ représente un groupe alkyle en $C_{1-20}$, alcényle en $C_{2-17}$, cycloalkyle en $C_{5-8}$, aralkyle en $C_{7-10}$, aralcényle en $C_{8-10}$ ou aryle en $C_{6-10}$ et
n vaut 1 ou 2 et,

dans le cas où n = 1, $R_1$ et $R_2$ peuvent représenter en combinaison avec l'élément pontant

$$-\overset{|}{N}-CO-$$

un hétérocycle azoté mono- ou polynucléaire et, dans ce cas, $R_1$ représente un groupe -CO- ou un groupe méthylène non substitué ou portant un substituant alkyle en $C_{1-4}$ et $R_2$ représente un groupe alkylène en $C_{2-4}$, alcénylène en $C_{2-4}$, arylène en $C_{6-10}$ ou di-, tétra ou hexahydro-(arylène en $C_{6-10}$), les valences libres des résidus cycliques étant toujours en position ortho l'une par rapport à l'autre, un groupe alkyle en $C_{1-4}$, alcoxy en $C_{1-4}$, halogéno, aryle en $C_{6-10}$, aralkyle en $C_{7-10}$ ou cycloalkyle en $C_{5-8}$, et

l'autre des deux substituants $X_1$ et $X_2$ représente un atome d'hydrogène, un groupe alkyle en $C_{1-4}$, alcoxy en $C_{1-4}$, halogéno, aryle en $C_{6-10}$, aralkyle en $C_{7-10}$, cycloalkyle en $C_{5-8}$ ou le groupe

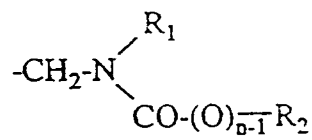

le noyau A pouvant être substitué en position 4,5 et 6 par un groupe alkyle en $C_{1-4}$, alcoxy en $C_{1-4}$, carboxy, un groupe carboxylate d'alkyle en $C_{1-4}$, un groupe carbamide, sulfonate d'alkyle en $C_{1-4}$, (alkyle en $C_{1-4}$)-sulfonyle ou un atome d'halogène et

le cycle B pouvant être substitué en position 4' par un groupe alkyle en $C_{1-4}$, alcoxy en $C_{1-4}$, un atome d'halogène, un groupe aryle en $C_{6-10}$, aralkyle en $C_{7-10}$ ou cycloalkyle en $C_{5-8}$,

ou un des deux substituants $X_1$ et $X_2$ représente un groupe $CH_3$-$(CH_2)_3$-$CH(C_2H_5)$-CO-NH-$CH_2$- et l'autre des deux substituants $X_1$ et $X_2$ représente un groupe $C_6H_5$-$CH_2$-$C_6H_4$-, $C_6H_5$-$C_6H_4$- ou un groupe

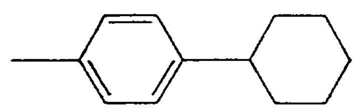

et les cycles A et B ne portant pas d'autres substituants que ceux-ci,

ou alors un des substituants $X_1$ et $X_2$ représente un groupe $ClCH_2$-CO-NH-$CH_2$ et l'autre des deux substituants $X_1$ et $X_2$ représente un groupe $C_6H_5$-$CH_2$-$C_6H_4$- ou $C_6H_5$-$C_6H_4$- et les noyaux A et B ne portant pas d'autres substituants que ceux-ci, ou un des deux substituants $X_1$ et $X_2$ représente un groupe $C_8H_{17}OOC$-NH-$CH_2$- et l'autre des deux substituants $X_1$ et $X_2$ représente un groupe

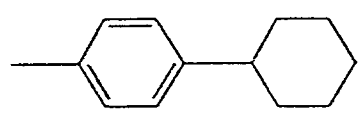

le noyau A étant substitué en position 4 et 6 par un groupe méthyle et le noyau B ne portant pas de substituant supplémentaire,

(b) de 0 à 18 % en poids d'un composé anionique et

(c) de 0 à 18 % en poids d'un composé non ionique,

à condition qu'au moins un des composants (b) et (c) soit présent.

2. Dispersion conforme à la revendication 1, caractérisée en ce que le composant (a) répond à la formule (1) dans laquelle l'hétérocycle formé par $R_1$ et $R_2$ en combinaison avec l'élément pontant

$$-\overset{|}{N}-CO-$$

est un cycle lactame.

**3.** Dispersion conforme à la revendication 1, caractérisée en ce que le composant (a) correspond à la formule (1) dans laquelle l'hétérocycle formé par $R_1$ et $R_2$ en combinaison avec l'élément pontant

$$-\overset{|}{N}-CO-$$

est un groupe 2,5-dioxopyrrolidine, 3,4-dihydrophtalimide, 3,4,5,6-tétrahydrophtalimide ou 3,4,5,6,8,9-hexahydrophtalimide.

**4.** Dispersion conforme à la revendication 1, caractérisée en ce que le composant (a) correspond à la formule (1) dans laquelle un des substituants $X_1$ et $X_2$ représente un groupe de formule

(2) 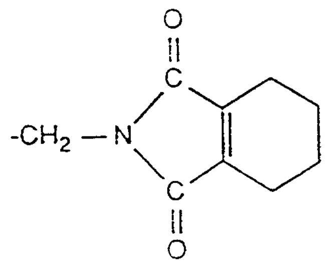

(3) 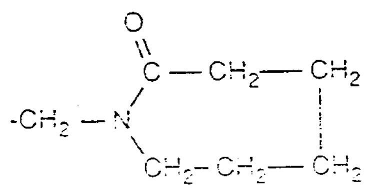

(4) 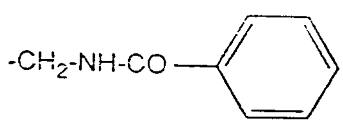

et l'autre un atome d'hydrogène ou un groupe alkyle en $C_{1-4}$ et le cycle A est non substitué ou porte un ou plusieurs atomes de chlore.

**5.** Dispersion conforme à une des revendications 1 à 4, caractérisée en ce que le composant (b) est un composé choisi dans le groupe formé par

(ba) les esters acides, ou leurs sels, de produits de polyaddition d'oxyde d'alkylène de formule

(5) 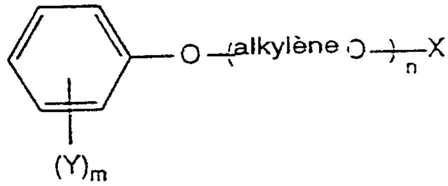

dans laquelle

X représente le résidu d'un acide minéral comportant de l'oxygène, comme par exemple l'acide sulfurique ou, de préférence, l'acide phosphorique, ou encore le résidu d'un acide organique et

Y représente un groupe alkyle en $C_{1-12}$, aryle ou aralkyle,

"alkylène" représente un résidu éthylène ou propylène et
m vaut de 1 à 4 et
n de 4 à 50,
Y pouvant prendre différentes significations quand m vaut entre 2 et 4,

(bb) les polystyrènesulfonates,
(bc) les amides d'acides gras et de taurine,
(bd) les mono- ou disulfonato-diphényléthers alkylés,
(be) les polycarboxylates sulfonatés,
(bf) les esters acides obtenus par réaction d'un acide organique dicarboxylique ou d'un polyacide minéral avec les produits d'addition de 1 à 60 moles, de préférence de 2 à 30 moles d'oxyde d'éthylène et/ou d'oxyde de propylène sur des amines grasses, des amides gras, des acides gras ou des alcools gras comportant de 8 à 22 atomes de carbone ou sur des alcanols tri- à hexavalents comportant de 3 à 6 atomes de carbone,
(bg) les ligninesulfonates et
(bh) les produits de condensation à base de formaldéhyde.

**6.** Dispersion conforme à une des revendications 1 à 4, caractérisée en ce que le composant (b) estun composé anionique de formule (5) dans lequel Y représente un groupe alkyle en $C_{4-12}$, un groupe benzyle ou un groupe α-méthyibenzyle.

**7.** Dispersion conforme à une des revendications 1 à 4, caractérisé en ce que le composant (b) est un composé de formule

(6) 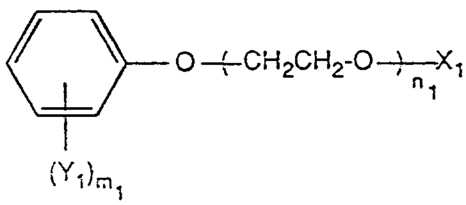

dans laquelle
$Y_1$ représente un groupe alkyle en $C_{4-12}$, phényle, tolyle, tolyl-(alkyle en $C_{1-3}$), ou phényl-(alkyle en $C_{1-3}$),
$X_1$ représente un résidu acide dérivé d'acide sulfurique ou d'acide orthophosphorique, et
$m_1$ vaut de 1 à 3 et
$n_1$ entre 4 et 40,
$Y_1$ pouvant prendre différentes signification, quand $m_1$ vaut 2 ou 3.

**8.** Dispersion conforme à une des revendications 1 à 4, caractérisée en ce que le composant (b) est un ester phosphate acide, ou le sel correspondant, d'un produit d'addition de 6 à 30 moles d'oxyde d'éthylène sur 1 mole de 4-nonylphénol ou de dinonylphénol ou sur 1 mole d'un composé obtenu par addition de 1 à 3 moles de styrène, d'α-méthylstyrène ou de vinyltoluène sur 1 mode de phénol, crésol ou xylénol.

**9.** Dispersion conforme à une des revendications 1 à 4, caractérisée en ce que le composant (b) est un ester phosphate acide, ou le sel correspondant, du produit de polyaddition d'oxyde d'alkylène de formule

(7) 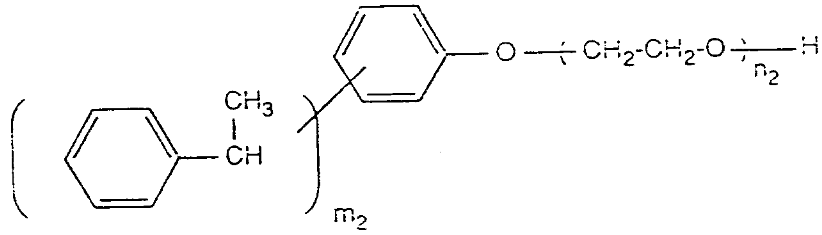

dans laquelle $m_2$ vaut de 1 à 3 et $n_2$ de 8 à 30.

**10.** Dispersion conforme à une des revendications 1 à 4, caractérisée en ce qu'elle contient, comme composant anionique (b), un produit de condensation de formaldéhyde et d'un acide sulfonique aromatique.

**11.** Dispersion conforme à la revendication 10, caractérisée en ce qu'elle contient, comme composant anionique (b), un produit de condensation de formaldéhyde et de ditolyléthersulfonate.

**12.** Dispersion conforme à une des revendications 1 à 4, caractérisée en ce que le composant anionique (b) est un mélange de composants (ba) à (bh).

**13.** Dispersion conforme à la revendication 12, caractérisée en ce que le composant anionique (b) est un mélange d'un produit de condensation de formaldéhyde et de ditolyléthersulfonate et d'un ester phosphate acide, ou du sel correspondant, du produit de polyaddition d'oxyde d'alkylène de formule (7) définie dans la revendication 9.

**14.** Dispersion conforme à une des revendications 1 à 5, caractérisée en ce qu'elle contient, comme composant (c), un composé non ionique choisi dans le groupe formé par

(ca) les produits de polyaddition d'oxyde d'alkylène de formule

(11) 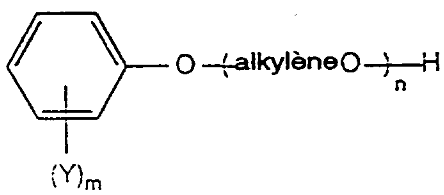

dans laquelle

Y représente un résidu alkyle en $C_{1-12}$, un groupe aryle ou aralkyle,

"alkylène" représente un résidu éthylène ou propylène et

m vaut de 1 à 4 et n de 4 à 50,

Y pouvant prendre différentes significations, dans le cas où m vaut entre 2 et 4,

(cb) les produits de polyaddition d'oxyde d'alkylène sur

- (cba) des alcools aliphatiques mono- à hexavalents saturés ou insaturés,
- (cbb) des acides gras,
- (cbc) des amines grasses,
- (cbd) des amides gras,
- (cbe) des diamines,
- (cbf) des esters de sorbitanne,

(cc) les produits de polymérisation d'oxyde d'alkylène (copolymères séquencés),

(cd) des polymères de vinylpyrrolidone, d'acétate de vinyle et d'alcool vinylique, et

(ce) des copolymères ou terpolymères de vinylpyrrolidone et d'acétate de vinyle et/ou d'alcool vinylique.

**15.** Dispersion conforme à une des revendications 1 à 5, caractérisée en ce que le composant (c) est un produit d'addition de 8 à 30 moles d'oxyde d'éthylène sur 1 mole de 4-nonylphénol, sur 1 mole de dinonylphénol ou sur 1 mole de composés obtenus par addition de 1 à 3 moles de styrène sur 1 mole de phénol.

**16.** Dispersion conforme à une des revendications 1 à 5, caractérisée en ce que le composant (c) est un produit d'éthoxylation de formule

(12) 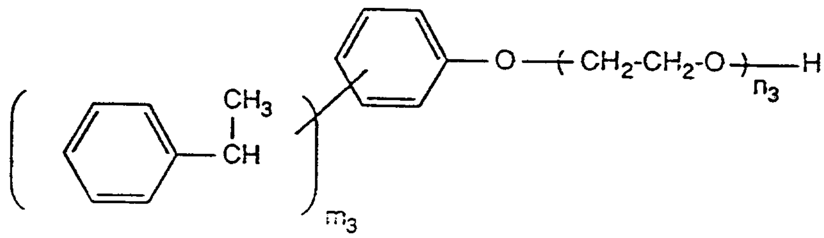

dans laquelle $m_3$ vaut entre 1 et 3 et $n_3$ entre 8 et 30.

**17.** Dispersion conforme à une des revendications 1 à 5, caractérisée en ce qu'elle contient, comme composant anionique (b), un produit de condensation de formaldéhyde et d'un acide sulfonique aromatique et, comme composant non ionique (c), un produit d'addition d'oxyde d'alkylène de formule (11) définie dans la revendication 14.

**18.** Dispersion conforme à la revendication 17, caractérisée en ce qu'elle contient, comme composant non ionique (c), un mélange d'un produit de polyaddition d'oxyde d'alkylène de formule (11) définie dans la revendication 14 et d'un produit de polymérisation d'oxyde d'alkylène (cc).

**19.** Dispersion conforme à la revendication 18, caractérisée en ce qu'elle contient, comme composant non ionique (c), un produit de polymérisation d'oxyde d'alkylène (cc).

**20.** Dispersion conforme à une des revendications 1 à 5, caractérisée en ce qu'elle contient, comme composant anionique (b), un produit de condensation de formaldéhyde et d'un acide sulfonique aromatique et, comme composant non ionique (c) un produit d'addition d'oxyde d'alkylène sur un ester de sorbitanne.

**21.** Dispersion conforme à la revendication 15, caractérisé en ce qu'elle contient, comme composant anionique (b), un ester phosphate acide, ou le sel correspondant, d'un produit de polyaddition d'oxyde d'alkylène de formule (7) définie dans la revendication 9 et, comme composant non ionigène (c), un produit de polyaddition de formule (11) définie dans la revendication 14.

**22.** Dispersion conforme à une des revendications 1 à 21, caractérisée en ce qu'elle contient en outre, comme composant (d), un agent stabilisant ou épaississant.

**23.** Dispersion conforme à la revendication 22, caractérisée en ce que le composant (d) est une solution ou dispersion aqueuses à 0,5 - 10 % d'un polymère d'un acide mono- ou dicarboxylique à insaturation éthylénique comportant de 3 à 5 atomes de carbone, en particulier du poly(acide acrylique).

**24.** Dispersion conforme à la revendication 22, caractérisée en ce que le composant (d) est un polysaccharide.

**25.** Dispersion conforme à une des revendications 1 à 24, caractérisée en ce qu'elle contient en outre un agent anti-mousse.

**26.** Dispersion conforme à la revendication 25, caractérisée en ce que l'agent anti-mousse est un alkylènediamide de formule

(14) $V_1$-CO-NH-Q-NH-CO-$V_2$

dans laquelle $V_1$ et $V_2$ représentent indépendamment l'un de l'autre un résidu aliphatique comportant de 9 à 23 atomes de carbone et Q un résidu alkylène comportant de 1 à 8 atomes de carbone.

**27.** Dispersion conforme à une des revendications 1 à 26, caractérisée en ce qu'elle contient en outre un agent conservateur et/ou un agent anti-gel.

**28.** Dispersion conforme à une des revendications 1 à 27, caractérisée en ce qu'elle contient, comme composant (a) un mélange d'un composé de type benzotriazole de formule (1) et d'un composé de type benzotriazole de formule :

(15)
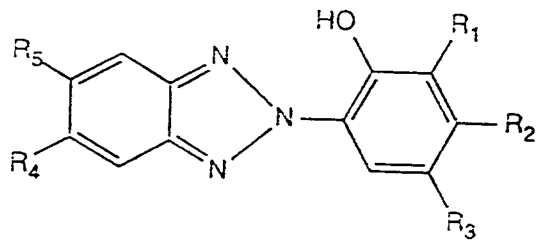

dans laquelle

$R_1$ représente un atome d'hydrogène, un groupe alkyle en $C_{1-12}$, un atome de chlore, un groupe cycloalkyle en $C_{5-6}$ ou phénylalkyle en $C_{7-9}$,

$R_2$ représente un atome d'hydrogène, un groupe alkyle en $C_{1-4}$, alcoxy en $C_{1-4}$, un atome de chlore ou un groupe hydroxy.

$R_3$ représente un groupe alkyle en $C_{1-12}$, alcoxy en $C_{1-4}$, phényle, (alkyle en $C_{1-8}$)-phényle, cycloalkyle en $C_{5-6}$, alcoxycarbonyle en $C_{2-9}$, un atome de chlore, un groupe carboxyéthyle ou phénylalkyle en $C_{7-9}$,

$R_4$ représente un atome d'hydrogène ou de chlore, un groupe alkyle en $C_{1-4}$, alcoxy en $C_{1-4}$ ou alcoxycarbonyle en $C_{2-9}$, et

$R_5$ représente un atome d'hydrogène ou de chlore.

**29.** Dispersion conforme à une des revendications 1 à 27, caractérisée en ce qu'elle contient, comme composant (a), un mélange d'un composé de type benzotriazole de formule (1) et d'un composé de type benzophénone de formule :

(16)
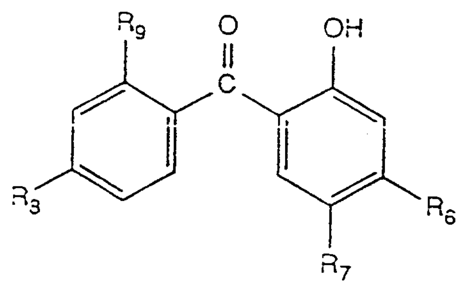

dans laquelle

$R_6$ représente un atome d'hydrogène, un groupe hydroxyle, alcoxy en $C_{1-14}$ ou phénoxy,

$R_7$ représente un atome d'hydrogène ou d'halogène ou un groupe alkyle en $C_{1-4}$,

$R_8$ représente un atome d'hydrogène, un groupe hydroxy ou un groupe alcoxy en $C_{1-4}$ et

$R_9$ représente un atome d'hydrogène ou un groupe hydroxy.

**30.** Dispersion conforme à une des revendications 1 à 27, caractérisée en ce qu'elle contient comme composant (a) un mélange d'un composé de type benzotriazole de formule (1), d'un composé de type benzotriazole de formule (15) et d'un composé de type benzophénone de formule (16).

**31.** Dispersion conforme à la revendication 1, caractérisée en ce qu'elle contient, par rapport au poids total de la dispersion

5 - 50 % en poids du composant (a),

0 - 18 % en poids du composant (b),

0 - 18 % en poids du composant (c),

0 - 5 % en poids du composant (d),

0 - 8 % en poids des autres composants anioniques différents du composant (b),

0 - 8 % en poids des autres composants non ioniques différents du composant (c),
0 - 7 % en poids d'un agent anti-mousse,
0 - 1 % en poids d'un agent conservateur et
0 - 20 % en poids d'un agent anti-gel.

**32.** Utilisation de la dispersion aqueuse conforme à une des revendications 1 à 31 pour la teinture de matériaux fibreux synthétiques, en particulier de fibres en polyester ou en polyester portant des groupes acides.

**33.** Procédé pour la teinture de matériaux textiles contenant des fibres synthétiques, de préférence de fibres en polyester ou en polyester portant des groupes acides, par des colorants de dispersion ou des colorants cationiques, caractérisé en ce que ce matériau est teint en présence d'une dispersion aqueuse contenant un composé de type benzotriazole conforme à une des revendications 1 à 31.

**Revendications pour l'Etat contractant suivant : ES**

**1.** Procédé pour la préparation d'une dispersion aqueuse d'un composé de type 2-(2'-hydroxyphényl)-benzotriazole, caractérisé en ce que l'on mélange
(a) de 5 à 50 % en poids d'un composé de type benzotriazole de formule

(1) 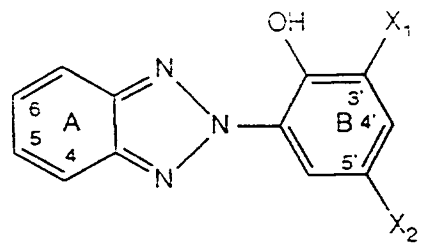

dans laquelle
un des substituants $X_1$ et $X_2$ représente le groupe

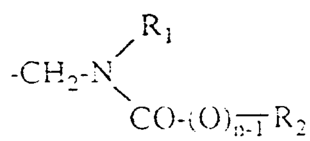

dans laquelle
$R_1$ représente un atome d'hydrogène, un groupe alkyle en $C_{1-10}$, cycloalkyle en $C_{5-8}$, aralkyle en $C_{7-10}$ ou aryle en $C_{6-10}$,
$R_2$ représente un groupe alkyle en $C_{1-20}$, alcényle en $C_{2-17}$, cycloalkyle en $C_{5-8}$, aralkyle en $C_{7-10}$, aralcényle en $C_{8-10}$ ou aryle en $C_{6-10}$ et
n vaut 1 ou 2 et,
dans le cas où n = 1, $R_1$ et $R_2$ peuvent représenter en combinaison avec l'élément pontant

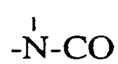

un hétérocycle azoté mono- ou polynucléaire et, dans ce cas, $R_1$ représente un groupe -CO- ou un groupe méthylène non substitué ou portant un substituant alkyle en $C_{1-4}$ et $R_2$ représente un groupe alkylène en $C_{2-4}$, alcénylène en $C_{2-4}$, arylène en $C_{6-10}$ ou di-, tétra ou hexahydro-(arylène en $C_{6-10}$), les valences libres des résidus cycliques étant toujours en position ortho l'une par rapport à l'autre, un groupe alkyle en $C_{1-4}$, alcoxy en $C_{1-4}$, halogéno, aryle en $C_{6-10}$, aralkyle en $C_{7-10}$ ou cycloalkyle en $C_{5-8}$, et
l'autre des deux substituants $X_1$ et $X_2$ représente un atome d'hydrogène, un groupe alkyle en $C_{1-4}$, alcoxy en $C_{1-4}$, halogéno, aryle en $C_{6-10}$, aralkyle en $C_{7-10}$, cycloalkyle en $C_{5-8}$ ou le groupe

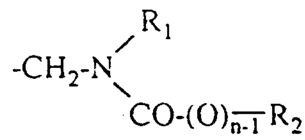

le noyau A pouvant être substitué en position 4,5 et 6 par un groupe alkyle en $C_{1-4}$, alcoxy en $C_{1-4}$, carboxy, un groupe carboxylate d'alkyle en $C_{1-4}$, un groupe carbamide, sulfonate d'alkyle en $C_{1-4}$, (alkyle en $C_{1-4}$)-sulfonyle ou un atome d'halogène et
le cycle B pouvant être substitué en position 4' par un groupe alkyle en $C_{1-4}$, alcoxy en $C_{1-4}$, un atome d'halogène, un groupe aryle en $C_{6-10}$, aralkyle en $C_{7-10}$ ou cycloalkyle en $C_{5-8}$,
ou un des deux substituants $X_1$ et $X_2$ représente un groupe $CH_3$-$(CH_2)_3$-CH($C_2$H)-CO-NH-$CH_2$- et l'autre des deux substituants $X_1$ et $X_2$ représente un groupe $C_6H_5$-$CH_2$-$C_6H_4$-, $C_6H_5$-$C_6H_4$- ou un groupe

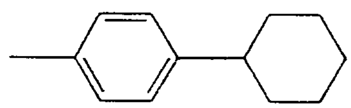

et les cycles A et B ne portant pas d'autres substituants que ceux-ci,
ou alors un des substituants $X_1$ et $X_2$ représente un groupe $ClCH_2$-CO-NH-$CH_2$ et l'autre des deux substituants $X_1$ et $X_2$ représente un groupe $C_6H_5$-$CH_2$-$C_6H_4$- ou $C_6H_5$-$C_6H_4$- et les noyaux A et B ne portant pas d'autres substituants que ceux-ci, ou un des deux substituants $X_1$ et $X_2$ représente un groupe $C_8H_{17}$OOC-NH-$CH_2$- et l'autre des deux substituants $X_1$ et $X_2$ représente un groupe

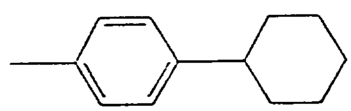

le noyau A étant substitué en position 4 et 6 par un groupe méthyle et le noyau B ne portant pas de substituant supplémentaire,
(b) de 0 à 18 % en poids d'un composé anionique et
(c) de 0 à 18 % en poids d'un composé non ionique,
à condition qu'au moins un des composants (b) et (c) soit présent.

2. Procédé conforme à la revendication 1, caractérisé en ce que le composant (a) répond à la formule (1) dans laquelle l'hétérocycle formé par $R_1$ et $R_2$ en combinaison avec l'élément pontant

$$-\overset{|}{N}-CO-$$

est un cycle lactame.

3. Procédé conforme à la revendication 1, caractérisé en ce que le composant (a) correspond à la formule (1) dans laquelle l'hétérocycle formé par $R_1$ et $R_2$ en combinaison avec l'élément pontant

$$-\overset{|}{N}-CO-$$

est un groupe 2,5-dioxopyrrolidine, 3,4-dihydrophtalimide, 3,4,5,6-tétrahydrophtalimide ou 3,4,5,6,8,9-hexahydrophtalimide.

4. Procédé conforme à la revendication 1, caractérisé en ce que le composant (a) correspond à la formule (1) dans laquelle un des substituants $X_1$ et $X_2$ représente un groupe de formule

(2) 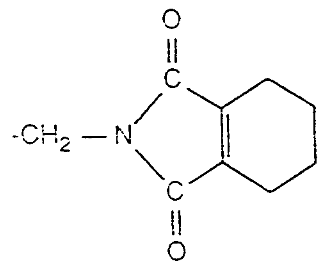

(3) 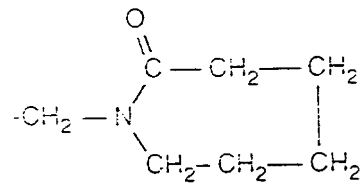

(4) 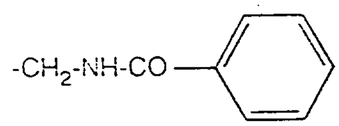

et l'autre un atome d'hydrogène ou un groupe alkyle en $C_{1-4}$ et le cycle A est non substitué ou porte un ou plusieurs atomes de chlore.

**5.** Procédé conforme à une des revendications 1 à 4, caractérisé en ce que le composant (b) est un composé choisi dans le groupe formé par

(ba) les esters acides, ou leurs sels, de produits de polyaddition d'oxyde d'alkylène de formule

(5) 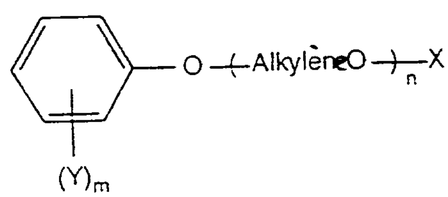

dans laquelle

X représente le résidu d'un acide minéral comportant de l'oxygène, comme par exemple l'acide sulfurique ou, de préférence, l'acide phosphorique, ou encore le résidu d'un acide organique et

Y représente un groupe alkyle en $C_{1-12}$, aryle ou aralkyle,

"alkylène" représente un résidu éthylène ou propylène et

m vaut de 1 à 4 et

n de 4 à 50,

Y pouvant prendre des significations différentes lorsque m vaut entre 2 et 4,

(bb) les polystyrènesulfonates,

(bc) les amides d'acides gras et de taurine,

(bd) les mono- ou disulfonato-diphényléthers alkylés,

(be) les polycarboxylates sulfonatés,

(bf) les esters acides obtenus par réaction d'un acide organique dicarboxylique ou d'un polyacide minéral avec les produits d'addition de 1 à 60 moles, de préférence de 2 à 30 moles d'oxyde d'éthylène et/ou d'oxyde de propylène sur des amines grasses, des amides gras, des acides gras ou des alcools gras comportant de 8 à 22 atomes de carbone ou sur des alcanols tri- à hexavalents comportant de 3 à 6 atomes de carbone,

(bg) les ligninesulfonates et

(bh) les produits de condensation à base de formaldéhyde.

**6.** Procédé conforme à une des revendications 1 à 4, caractérisé en ce que le composant (b) est un composé anionique de formule (5) dans lequel Y représente un groupe alkyle en $C_{4-12}$, un groupe benzyle ou un groupe $\alpha$-méthylbenzyle.

**7.** Procédé conforme à une des revendications 1 à 4, caractérisé en ce que le composant (b) est un composé de formule

(6) 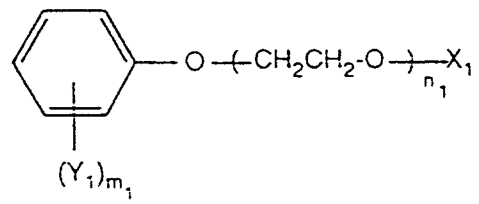

dans laquelle

$Y_1$ représente un groupe alkyle en $C_{4-12}$, phényle, tolyle, tolyl-(alkyle en $C_{1-3}$), ou phényl-(alkyle en $C_{1-3}$),

$X_1$ représente un résidu acide dérivé d'acide sulfurique ou d'acide orthophosphorique, et

$m_1$ vaut de 1 à 3 et

$n_1$ entre 4 et 40,

$Y_1$ pouvant prendre différentes significations quand $m_1$ vaut 2 ou 3.

**8.** Procédé conforme à une des revendications 1 à 4, caractérisé en ce que le composant (b) est un ester phosphate acide, ou le sel correspondant, d'un produit d'addition de 6 à 30 moles d'oxyde d'éthylène sur 1 mole de 4-nonylphénol ou de dinonylphénol ou sur 1 mole d'un composé obtenu par addition de 1 à 3 moles de styrène, d'$\alpha$-méthylstyrène ou de vinyltoluène sur 1 mole de phénol, crésol ou xylénol.

**9.** Procédé conforme à une des revendications 1 à 4, caractérisé en ce que le composant (b) est un ester phosphate acide, ou le sel correspondant, du produit de polyaddition d'oxyde d'alkylène de formule

(7) 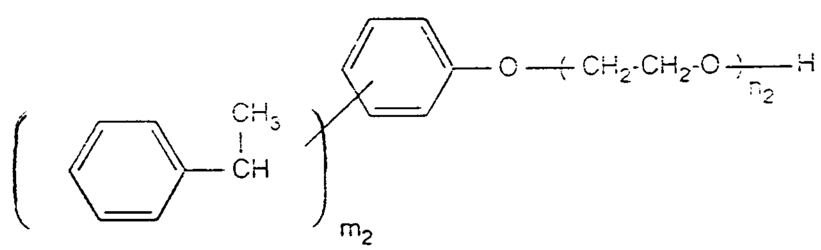

dans laquelle $m_2$ vaut de 1 à 3 et $n_2$ de 8 à 30.

**10.** Procédé conforme à une des revendications 1 à 4, caractérisé en ce le composant anionique (b) est un produit de condensation de formaldéhyde et d'un acide sulfonique aromatique.

**11.** Procédé conforme à la revendication 10, caractérisé en ce que le composant anionique (b) est un produit de condensation de formaldéhyde et de ditolyléthersulfonate.

**12.** Procédé conforme à une des revendications 1 à 4, caractérisé en ce que le composant anionique (b) est un mélange de composants (ba) à (bh).

**13.** Procédé conforme à la revendication 12, caractérisé en ce que le composant anionique (b) est un mélange d'un produit de condensation de formaldéhyde et de ditolyléthersulfonate et d'un ester phosphate acide, ou du sel correspondant, du produit de polyaddition d'oxyde d'alkylène de formule (7) définie dans la revendication 9.

**14.** Procédé conforme à une des revendications 1 à 5, caractérisé en ce que le composant (c) est un composé non ionique choisi dans le groupe formé par

(ca) les produits de polyaddition d'oxyde d'alkylène de formule

(11) 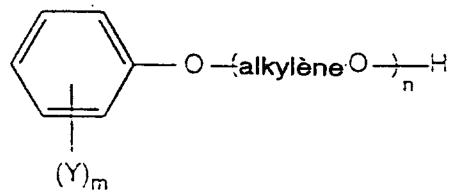

dans laquelle

Y représente un résidu alkyle en $C_{1-12}$, un groupe aryle ou aralkyle,
"alkylène" représente un résidu éthylène ou propylène et
m vaut de 1 à 4 et n de 4 à 50,
Y pouvant prendre différentes significations lorsque m vaut de 2 à 4,

(cb) les produits de polyaddition d'oxyde d'alkylène sur

- (cba) des alcools aliphatiques mono- à hexavalents saturés ou insaturés,
- (cbb) des acides gras,
- (cbc) des amines grasses,
- (cbd) des amides gras;
- (cbe) des diamines,
- (cbf) des esters de sorbitanne,

(cc) les produits de polymérisation d'oxyde d'alkylène (copolymères séquencés),

(cd) des polymères de vinylpyrrolidone, d'acétate de vinyle et d'alcool vinylique, et

(ce) des copolymères ou terpolymères de vinylpyrrolidone et d'acétate de vinyle et/ou d'alcool vinylique.

**15.** Procédé conforme à une des revendications 1 à 5, caractérisé en ce que le composant (c) est un produit d'addition de 8 à 30 moles d'oxyde d'éthylène sur 1 mole de 4-nonylphénol, sur 1 mole de dinonylphénol ou sur 1 mole de composés obtenus par addition de 1 à 3 moles de styrènes sur 1 mole de phénol.

**16.** Procédé conforme à une des revendications 1 à 5, caractérisé en ce que le composant (c) est un produit d'éthoxylation de formule

(12) 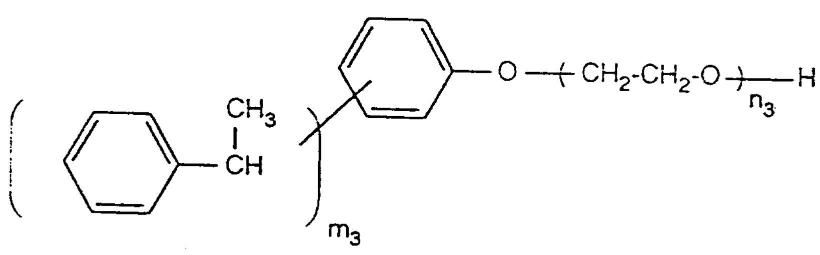

dans laquelle $m_3$ vaut entre 1 et 3 et $n_3$ entre 8 et 30.

**17.** Procédé conforme à une des revendications 1 à 5, caractérisé en ce que le composant anionique (b) est un produit de condensation de formaldéhyde et d'un acide sulfonique aromatique et le composant non ionique (c) est un produit d'addition d'oxyde d'alkylène de formule (11) définie dans la revendication 14.

**18.** Procédé conforme à la revendication 17, caractérisé en ce que le composant non ionique (c) est un mélange d'un produit de polyaddition d'oxyde d'alkylène de formule (11) définie dans la revendication 14 et d'un produit de polymérisation d'oxyde d'alkylène (cc).

**19.** Procédé conforme à la revendication 18, caractérisé en ce que le composant non ionique (c) est un produit de polymérisation d'oxyde d'alkylène (cc).

**20.** Procédé conforme à une des revendications 1 à 5, caractérisé en ce que le composant anionique (b) est un produit de condensation de formaldéhyde et d'un acide sulfonique aromatique et, comme composant non ionique (c) un produit d'addition d'oxyde d'alkylène sur un ester de sorbitanne.

**21.** Procédé conforme à la revendication 15, caractérisé en ce que le composant anionique (b) est un ester phosphate acide, ou le sel correspondant, d'un produit de polyaddition d'oxyde d'alkylène de formule (7) définie d'ans la revendication 9 et, comme composant non ionigène (c), un produit de polyaddition de formule (11) définie dans la revendication 14.

**22.** Procédé conforme à une des revendications 1 à 21, caractérisé en ce que le composant (d) est un agent stabilisant ou épaississant.

**23.** Procédé conforme à la revendication 22, caractérisé en ce que le composant (d) est une solution ou dispersion aqueuses à 0,5 - 10 % d'un polymère d'un acide mono- ou dicarboxylique à insaturation éthylénique comportant de 3 à 5 atomes de carbone, en particulier du poly(acide acrylique).

**24.** Procédé conforme à la revendication 22, caractérisé en ce que le composant (d) est un polysaccharide.

**25.** Procédé conforme à une des revendications 1 à 24, caractérisé en ce que l'on utilise en outre un agent anti-mousse.

**26.** Procédé conforme à la revendication 25, caractérisé en ce que l'agent anti-mousse est un alkylènediamide de formule

(14) $V_1$-CO-NH-Q-NH-CO-$V_2$

dans laquelle $V_1$ et $V_2$ représentent indépendamment l'un de l'autre un résidu aliphatique comportant de 9 à 23 atomes de carbone et Q un résidu alkylène comportant de 1 à 8 atomes de carbone.

**27.** Procédé conforme à une des revendications 1 à 26, caractérisé en ce que l'on utilise en outre un agent conservateur et/ou un agent anti-gel.

**28.** Procédé conforme à une des revendications 1 à 27, caractérisé en ce que le composant (a) est un mélange d'un composé de type benzotriazole de formule (1) et d'un composé de type benzotriazole de formule :

(15) 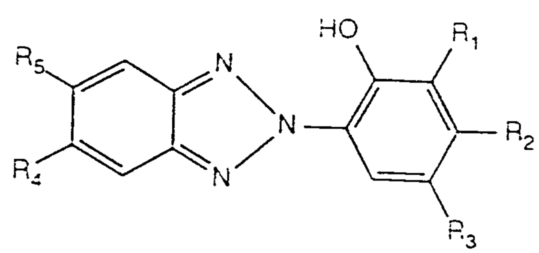

dans laquelle

$R_1$ représente un atome d'hydrogène, un groupe alkyle en $C_{1-12}$, un atome de chlore, un groupe cycloalkyle en $C_{5-6}$ ou phénylalkyle en $C_{7-9}$,

$R_2$ représente un atome d'hydrogène, un groupe alkyle en $C_{1-4}$, alcoxy en $C_{1-4}$, un atome de chlore ou un groupe hydroxy.

$R_3$ représente un groupe alkyle en $C_{1-12}$, alcoxy en $C_{1-4}$, phényle, (alkyle en $C_{1-8}$)-phényle, cycloalkyle en $C_{6-6}$, alcoxycarbonyle en $C_{2-9}$, un atome de chlore, un groupe carboxyéthyle ou phénylalkyle en $C_{7-9}$,

$R_4$ représente un atome d'hydrogène ou de chlore, un groupe alkyle en $C_{1-4}$, alcoxy en $C_{1-4}$ ou

alcoxycarbonyle en $C_{2-9}$, et
$R_5$ représente un atome d'hydrogène ou de chlore.

**29.** Procédé conforme à une des revendications 1 à 27, caractérisé en ce que le composant (a) est un mélange d'un composé de type benzotriazole de formule (1) et d'un composé de type benzophénone de formule :

(16) 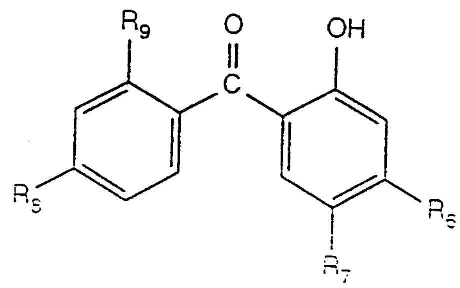

dans laquelle
$R_6$ représente un atome d'hydrogène, un groupe hydroxyle, alcoxy en $C_{1-14}$ ou phénoxy,
$R_7$ représente un atome d'hydrogène ou d'halogène ou un groupe alkyle en $C_{1-4}$,
$R_8$ représente un atome d'hydrogène, un groupe hydroxy ou un groupe alcoxy en $C_{1-4}$ et
$R_9$ représente un atome d'hydrogène ou un groupe hydroxy.

**30.** Procédé conforme à une des revendications 1 à 27, caractérisé en ce que le composant (a) est un mélange d'un composé de type benzotriazole de formule (1), d'un composé de type benzotriazole de formule (15) et d'un composé de type benzophénone de formule (16).

**31.** Procédé conforme à la revendication 1, caractérisé en ce que l'on utilise, par rapport au poids total de la dispersion,
5 - 50 % en poids du composant (a),
0 - 18 % en poids du composant (b),
0 - 18 % en poids du composant (c),
0 - 5 % en poids du composant (d),
0 - 8 % en poids des autres composants anioniques différents du composant (b),
0 - 8 % en poids des autres composants non ioniques différents du composant (c),
0 - 7 % en poids d'un agent anti-mousse,
0 - 1 % en poids d'un agent conservateur et
0 - 20 % en poids d'un agent anti-gel.

**32.** Utilisation de la dispersion aqueuse conformément à une des revendications 1 à 31 pour la teinture de matériaux fibreux synthétiques, en particulier de fibres en polyester ou en polyester portant des groupes acides.

**33.** Procédé pour la teinture de matériaux textiles contenant des fibres synthétiques, de préférence de fibres en polyester ou en polyester portant des groupes acides, par des colorants de dispersion ou des colorants cationiques, caractérisé en ce que ce matériau est teint en présence d'une dispersion aqueuse d'un composé de type benzotriazole conformément à une des revendications 1 à 31.